(19) **Europäisches Patentamt**
**European Patent Office**
**Office européen des brevets**

(11) **EP 4 496 235 A1**

(12) **EUROPEAN PATENT APPLICATION**
published in accordance with Art. 153(4) EPC

(43) Date of publication:
**22.01.2025 Bulletin 2025/04**

(21) Application number: **23802692.6**

(22) Date of filing: **28.04.2023**

(51) International Patent Classification (IPC):
***H04B 7/0456*** (2017.01)

(52) Cooperative Patent Classification (CPC):
**H04B 7/0452; H04B 7/0456**

(86) International application number:
**PCT/CN2023/091492**

(87) International publication number:
**WO 2023/216920 (16.11.2023 Gazette 2023/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.05.2022 CN 202210513745**

(71) Applicant: **Huawei Technologies Co., Ltd.
Shenzhen, Guangdong 518129 (CN)**

(72) Inventors:
• **FENG, Qi**
**Shenzhen, Guangdong 518129 (CN)**
• **LI, Zhongfeng**
**Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **COMMUNICATION METHOD AND DEVICE**

(57) A communication method and apparatus are provided. In the method, a first transmit end receives an equivalent channel ratio corresponding to a second transmit end, and obtains a precoding matrix of the first transmit end based on the equivalent channel ratio corresponding to the second transmit end. If the first transmit end sends a signal by using the obtained precoding matrix, a first target receive end may implement interference alignment. Based on the method, after each transmit end in a communication system calculates a precoding matrix of the transmit end based on an equivalent channel ratio corresponding to another transmit end, interference alignment of the entire communication system can be implemented. In the method, a transmit end transmits only an equivalent channel ratio corresponding to the transmit end, instead of a precoding matrix and channel state information. Therefore, compared with a conventional direct method, the method can significantly reduce transmission overheads in a process of implementing interference alignment of the communication system. In addition, in the method, the equivalent channel ratio is transmitted only between transmit ends that participate in interference alignment in the communication system, so that the method is not restricted by a channel reciprocity condition.

FIG. 2

**Description**

**CROSS-REFERENCE TO RELATED APPLICATIONS**

This application claims priority to Chinese Patent Application No. 202210513745.2, filed with the China National Intellectual Property Administration on May 11, 2022 and entitled "COMMUNICATION METHOD AND APPARATUS", which is incorporated herein by reference in its entirety.

**TECHNICAL FIELD**

This application relates to the field of communication technologies, and in particular, to a communication method and apparatus.

**BACKGROUND**

A multi-user multiple-input multiple-output (multi-user multiple-input multiple-output, MU-MIMO) technology is widely used in a conventional uplink and downlink, that is, a plurality of user equipments (user, UEs) communicate through centralized forwarding of a base station. Because a quantity of antennas of the base station is sufficient, and a quantity of antennas of the UE is limited, the base station has sufficient spatial resolution to support multi-stream transport, where the quantity of antennas of the base station is usually far greater than a quantity of transport streams. Therefore, the base station may avoid interference of communication between different UEs via the sufficient quantity of antennas.

However, in an actual scenario, due to limitations of transmit power, a device size, and a signal processing capability of a communication device, antennas cannot be deployed on the communication device on a large scale as on the base station. Therefore, in a communication system in which a plurality of groups of transmit-receive pairs share a same transmission resource, MU-MIMO cannot be implemented because a quantity of antennas of the communication device is limited. As a result, a transmit end (Transport, TX for short) does not have sufficient spatial resolution (transmission degree of freedom) to suppress interference caused to a receive end (receive, RX for short) in another transmit-receive pair. Currently, the communication system may compress interference space by using an interference alignment technology, to obtain a degree of freedom, thereby implementing interference-free communication.

A current interference alignment technology includes two methods: a direct method and an iterative method.

The direct method is to implement interference alignment by aggregating global channel state information in the system and calculating a precoding matrix of each TX. A specific process includes: All TXs participating in interference alignment aggregate channel state information of respective interference links into one target TX, and the target TX performs centralized calculation to obtain the precoding matrix of each TX, and distributes the precoding matrix to each TX. However, transmission of the channel state information and the precoding matrix causes large transmission overheads.

For example, the communication system has $K$ groups of transmit-receive pairs, each TX is configured with $N$ antennas, each RX is configured with $M$ antennas, and each TX may send $D$ signals (a transmission degree of freedom is $D$). In this case, if the communication system implements interference alignment by using the direct method, an amount of data that needs to be transmitted for transmitting channel state information and precoding matrices between $K$ TXs through an air interface is $(K - 1)^2 MN + (K - 1)ND$.

The iterative method is to implement interference alignment through distributed computing iteration for precoding of a transmit end and a receive end in a transmit-receive pair by using reciprocity between channels of the transmit end and the receive end in the communication system in a time division duplex (time-division duplexing, TDD) mode. A specific process includes: assuming that a transmission degree of freedom of each TX is $d$, calculating, by an RX in each group of transmit-receive pairs, an interference covariance matrix based on a received signal, and selecting eigenvectors corresponding to $d$ smallest eigenvalues of the interference covariance matrix as an interference suppression matrix; and using the interference suppression matrix as a precoding matrix of a TX in the transmit-receive pair based on reciprocity between a transmit channel and a receive channel. The foregoing process is repeated to iteratively update a precoding matrix of a TX in each group of transmit-receive pairs until the precoding matrix converges.

It should be noted that the iterative method requires that the communication device participating in interference alignment works in the TDD mode. If the channels of the transmit end and the receive end do not have reciprocity, the interference suppression matrix and the precoding matrix are different, and a theoretical basis of the iterative method is no longer true. Apparently, the method is not applicable to interference alignment in a frequency division duplex (frequency-division duplexing, FDD) mode.

It can be learned from the foregoing descriptions of the current interference alignment technology that the direct method has large transmission overheads, and the iterative method depends on reciprocity between the transmit channel and the receive channel. Therefore, there is a need in this field for studying an interference alignment method that has low transmission overheads and is not restricted by a condition of reciprocity between the transmit channel and the receive channel.

## SUMMARY

This application provides a communication method and apparatus, to implement interference alignment without a restriction of a condition of reciprocity between a transmit channel and a receive channel, and reduce transmission overheads required in an implementation process.

According to a first aspect, an embodiment of this application provides a communication method. The method may be applied to a communication system including *K* groups of transmit-receive pairs. Each group of transmit-receive pairs include at least one transmit end and at least one corresponding receive end. *K* is an integer greater than 2. The following describes the method by using a first transmit end as an example. The method includes the following steps: The first transmit end receives an equivalent channel ratio corresponding to a second transmit end. The equivalent channel ratio corresponding to the second transmit end is a ratio of different equivalent channel coefficients in an equivalent channel matrix from the second transmit end to a first target receive end. The first target receive end is different from a first receive end corresponding to the first transmit end and a second receive end corresponding to the second transmit end. The first transmit end obtains a first precoding matrix of the first transmit end based on the equivalent channel ratio corresponding to the second transmit end and a first channel matrix. The first channel matrix is a channel matrix from the first transmit end to the first target receive end.

In the method, the first transmit end may receive the equivalent channel ratio corresponding to the second transmit end, and obtains, based on the equivalent channel ratio corresponding to the second transmit end, the precoding matrix corresponding to the first transmit end. Because the equivalent channel ratio corresponding to the second transmit end is obtained based on an interference alignment condition of the first target receive end, the precoding matrix calculated by the first transmit end satisfies the interference alignment condition of the first target receive end. Based on this, if the first transmit end sends a signal by using the obtained precoding matrix, the first target receive end may implement interference alignment. Based on the method, after each transmit end in the communication system calculates a precoding matrix of the transmit end based on an equivalent channel ratio corresponding to another transmit end, a receive end corresponding to each transmit end can implement local interference alignment, and finally, interference alignment of the entire communication system can be implemented. In the method provided in this application, a transmit end transmits only an equivalent channel ratio corresponding to the transmit end, instead of a precoding matrix and channel state information. Therefore, compared with a direct method in a conventional interference algorithm, the method can significantly reduce transmission overheads in a process of implementing interference alignment of the communication system. In addition, in the method, the equivalent channel ratio is transmitted only between transmit ends that participate in interference alignment of the communication system, so that the method is not restricted by a channel reciprocity condition.

In a possible design, the first transmit end may further obtain, based on the first precoding matrix and a second channel matrix, an equivalent channel ratio corresponding to the first transmit end. The second channel matrix is a channel matrix from the first transmit end to a second target receive end. The equivalent channel ratio corresponding to the first transmit end is a ratio of different equivalent channel coefficients in an equivalent channel matrix from the first transmit end to the second target receive end. The second target receive end is different from the first receive end corresponding to the first transmit end. The first transmit end sends the equivalent channel ratio corresponding to the first transmit end.

According to this design, the first transmit end may determine, based on the first precoding matrix, the equivalent channel ratio corresponding to the first transmit end. The equivalent channel ratio determined by using this design satisfies an interference alignment condition of the second target receive end. Therefore, when the equivalent channel ratio corresponding to the first transmit end is transmitted to a third transmit end in the communication system, the third transmit end can also calculate a precoding matrix of the third transmit end based on the equivalent channel ratio corresponding to the first transmit end. In this way, the precoding matrix calculated by the third transmit end satisfies the interference alignment condition of the second target receive end, and finally, local interference alignment of the second target receive end is implemented.

In a possible design, the first transmit end may send, in but not limited to the following two manners, the equivalent channel ratio corresponding to the first transmit end.

Manner 1: The first transmit end sends a first message to the third transmit end, where the first message includes the equivalent channel ratio corresponding to the first transmit end.

Manner 2: The first transmit end broadcasts a second message including the equivalent channel ratio corresponding to the first transmit end, where the second message further includes at least one of the following: an identifier of the first transmit end and an identifier of a third transmit end.

The second target receive end is different from a third receive end corresponding to the third transmit end.

According to this design, it can be ensured that the third transmit end in the communication system can successfully receive the equivalent channel ratio corresponding to the first transmit end and further calculate the precoding matrix of the third transmit end based on the equivalent channel ratio corresponding to the first transmit end.

In a possible design, to stop transmitting an equivalent channel ratio corresponding to a transmit end when interference alignment of the communication system is implemented (that is, all receive ends implement interference alignment), to reduce air interface transmission overheads, each transmit end further needs to determine, after calculating a precoding matrix of the transmit end, whether a specified equivalent channel ratio transmission ending condition is satisfied currently. If the equivalent channel ratio transmission ending condition is satisfied, the transmit end stops calculating an equivalent channel ratio corresponding to the transmit end, and certainly, does not perform the step of sending the equivalent channel ratio corresponding to the transmit end; or if the equivalent channel ratio transmission ending condition is not satisfied, the transmit end continues to calculate and send an equivalent channel ratio corresponding to the transmit end. In other words, when determining the equivalent channel ratio corresponding to the first transmit end, the first transmit end needs to first determine whether a specified equivalent channel ratio transmission ending condition is satisfied.

In a possible design, the equivalent channel ratio transmission ending condition includes at least one of the following:

Condition 1: An error between the first precoding matrix and a second precoding matrix that is stored is less than a specified error threshold.

Condition 2: An equivalent channel ratio transmission count of the first transmit end is greater than or equal to a specified transmission count threshold.

The second precoding matrix is a precoding matrix used by the first transmit end to send data before the first precoding matrix is obtained. The equivalent channel ratio transmission count is a count that the first transmit end sends the equivalent channel ratio corresponding to the first transmit end, or a count that the first transmit end receives an equivalent channel ratio corresponding to the at least one second transmit end.

When an error between two precoding matrices consecutively calculated by the first transmit end is less than the specified error threshold, it indicates that the precoding matrix calculated by the first transmit end converges. In this case, a probability of implementing interference alignment of the communication system is high, and even if an equivalent channel ratio corresponding to a transmit end continues to be transmitted subsequently in the communication system, a precoding matrix subsequently calculated by the first transmit end continues to converge. Therefore, subsequent equivalent channel ratio transmission no longer plays an active role in implementing interference alignment of the communication system, but causes transmission overheads. Based on this, to reduce transmission overheads while ensuring interference alignment of the communication system, the equivalent channel ratio transmission ending condition may include Condition 1. In this way, after determining that a calculated precoding matrix converges, a transmit end may stop transmitting an equivalent channel ratio.

To ensure interference alignment of the entire communication system, a transmission count threshold may be set in a transmit end. In this way, it can be ensured that each transmit end in the communication system performs a precoding matrix calculation process for at least the transmission count threshold minus one times. Setting Condition 2 can avoid a case in which equivalent channel ratio transmission ends because precoding matrices calculated by some transmit ends that perform the precoding matrix calculation process for few times do not converge but a precoding matrix calculated by a transmit end already converges.

In a possible design, when the specified equivalent channel ratio transmission ending condition is not satisfied, the first transmit end obtains, based on the first precoding matrix and the second channel matrix, the equivalent channel ratio corresponding to the first transmit end.

According to this design, when interference alignment of the communication system is not implemented (that is, not all receive ends implement interference alignment), the first transmit end may continue to calculate and transmit the equivalent channel ratio corresponding to the first transmit end, to implement interference alignment of the second target receive end in the communication system.

In a possible design, when the equivalent channel ratio transmission ending condition is satisfied, the first transmit end sends a first indication, where the first indication indicates another transmit end to stop transmitting an equivalent channel ratio corresponding to the another transmit end.

According to this design, when interference alignment of the communication system is implemented, the first transmit end may indicate the another transmit end to stop transmitting the equivalent channel ratio corresponding to the another transmit end, to reduce air interface transmission overheads.

In a possible design, the first transmit end may obtain, through the following steps, the equivalent channel ratio corresponding to the first transmit end.

The first transmit end obtains the equivalent channel matrix from the first transmit end to the second target receive end based on the first precoding matrix and the second channel matrix; and the first transmit end obtains, based on the obtained equivalent channel matrix from the first transmit end to the second target receive end, the equivalent channel ratio corresponding to the first transmit end.

According to this design, the equivalent channel ratio corresponding to the first transmit end satisfies the interference alignment condition of the second target receive end.

In a possible design, in the communication system, each transmit end has $N$ antennas, and each receive end has $M$ antennas. $M = N$. $K = 2N - 1$. Each transmit end sends one signal. In an $i$th group of transmit-receive pairs, a transmit end is denoted as TX[$i$ - 1], and a receive end corresponding to TX[$i$ - 1] is denoted as RX[$i$ - 1], where $i \in \{1, 2, ...,2N - 1\}$.

The second transmit end includes TX[$a$], $a$ traverses each value in $\{[(r - 1)(N - 1) + 1] \bmod K, [(r - 1)(N - 1) + 2] \bmod K, ... , [r(N - 1)] \bmod K\}$, and $r$ is a positive integer.

The first transmit end is TX[$b$], and $b \in \{[r(N - 1) + 1] \bmod K, [r(N - 1) + 2] \bmod K, ... , [(r + 1)(N - 1)] \bmod K\}$.

Any second transmit end TX[$a$] corresponds to equivalent channel ratios

$$g_2^{[((r+1)(N-1)+1)\bmod K][a]} \Big/ g_1^{[((r+1)(N-1)+1)\bmod K][a]} \ , \quad g_3^{[((r+1)(N-1)+1)\bmod K][a]} \Big/ g_1^{[((r+1)(N-1)+1)\bmod K][a]} \ , ... , \text{ and}$$

$$g_N^{[((r+1)(N-1)+1)\bmod K][a]} \Big/ g_1^{[((r+1)(N-1)+1)\bmod K][a]} \ .$$

The first transmit end TX[$b$] corresponds to equivalent channel ratios

$$g_2^{[((r+2)(N-1)+1)\bmod K][b]} \Big/ g_1^{[((r+2)(N-1)+1)\bmod K][b]} \ , \quad g_3^{[((r+2)(N-1)+1)\bmod K][b]} \Big/ g_1^{[((r+2)(N-1)+1)\bmod K][b]} \ , ... , \text{ and}$$

$$g_N^{[((r+2)(N-1)+1)\bmod K][b]} \Big/ g_1^{[((r+2)(N-1)+1)\bmod K][b]} \ . \quad g_m^{[k][l]}$$ is an equivalent channel coefficient of an $m$th antenna for transmitting a signal of TX[$l$] to RX[$k$]. $k, l \in \{0,1,2, ... ,2N - 2\}$. $k \neq l$. $m \in \{1, 2, ..., M\}$.

The first precoding matrix satisfies the following formula:

$$v_{N \times 1}^{[b]}$$

$$= \left( h_{N \times N}^{[((r+1)(N-1)+1)\bmod K][b]} \right)^{-1} \left( k_1^{[((r+1)(N-1)+1)\bmod K][b]} g_{N \times 1}^{[((r+1)(N-1)+1)\bmod K][((r-1)(N-1)+1)\bmod K]} \right.$$

$$+ k_2^{[((r+1)(N-1)+1)\bmod K][b]} g_{N \times 1}^{[((r+1)(N-1)+1)\bmod K][((r-1)(N-1)+2)\bmod K]} + \cdots$$

$$\left. + k_{N-1}^{[((r+1)(N-1)+1)\bmod K][b]} g_{N \times 1}^{[((r+1)(N-1)+1)\bmod K][(r(N-1))\bmod K]} \right)$$

$$g_{N \times 1}^{[((r+1)(N-1)+1)\bmod K][((r-1)(N-1)+n)\bmod K]} = \begin{bmatrix} g_1^{[((r+1)(N-1)+1)\bmod K][((r-1)(N-1)+n)\bmod K]} \\ g_2^{[((r+1)(N-1)+1)\bmod K][((r-1)(N-1)+n)\bmod K]} \\ \vdots \\ g_N^{[((r+1)(N-1)+1)\bmod K][((r-1)(N-1)+n)\bmod K]} \end{bmatrix} , n \in \{1,2, ..., N - 1\},$$

and $h_{N \times N}^{[((r+1)(N-1)+1)\bmod K][b]}$ is the first channel matrix: a channel matrix from TX[$b$] to RX[$((r + 1)(N - 1) + 1) \bmod K$].

$$k_1^{[((r+1)(N-1)+1)\bmod K][b]}, k_2^{[((r+1)(N-1)+1)\bmod K][b]}, ... , k_{N-1}^{[((r+1)(N-1)+1)\bmod K][b]} \in \mathbb{C}.$$

The equivalent channel matrix from the first transmit end to the second target receive end satisfies the following formula:

$$g_{N \times 1}^{[((r+2)(N-1)+1)\bmod K][b]} = h_{N \times N}^{[((r+2)(N-1)+1)\bmod K][b]} v_{N \times 1}^{[b]}$$

$$g_{N \times 1}^{[((r+2)(N-1)+1)\bmod K][b]} = \begin{bmatrix} g_1^{[((r+2)(N-1)+1)\bmod K][b]} \\ g_2^{[((r+2)(N-1)+1)\bmod K][b]} \\ \vdots \\ g_N^{[((r+2)(N-1)+1)\bmod K][b]} \end{bmatrix} . \quad h_{N \times N}^{[((r+2)(N-1)+1)\bmod K][b]}$$ is the second channel matrix: a channel matrix from TX[$b$] to RX[$((r + 2)(N - 1) + 1) \bmod K$].

In a possible design, in the communication system, each transmit end has $N$ antennas, each receive end has $M$ antennas, and each transmit end sends $D$ signals. $N = M = 2D$. $K = 3$. $D$ is a positive integer. In an $i$th group of transmit-receive pairs, a transmit end is denoted as TX[$i$ - 1], and a receive end is denoted as RX[$i$ - 1], where $i \in \{1,2,3\}$.

The second transmit end is TX[$a$], and $a \in \{0,1,2\}$. The first transmit end is TX[$b$], and $b = (a + 1)$ $mod$ $K$.

The second transmit end TX[$a$] corresponds to equivalent channel ratios

$$g_{2,1}^{[(a-1+K) \bmod K][a]} / g_{1,1}^{[(a-1+K) \bmod K][a]} \quad , \quad g_{3,1}^{[(a-1+K) \bmod K][a]} / g_{1,1}^{[(a-1+K) \bmod K][a]} \quad , \quad ...,$$

$$g_{2D,1}^{[(a-1+K) \bmod K][a]} / g_{1,1}^{[(a-1+K) \bmod K][a]} \quad , \quad g_{2,2}^{[(a-1+K) \bmod K][a]} / g_{1,2}^{[(a-1+K) \bmod K][a]} \quad ,$$

$$g_{3,2}^{[(a-1+K) \bmod K][a]} / g_{1,2}^{[(a-1+K) \bmod K][a]} \quad , \quad ..., \quad g_{2D,2}^{[(a-1+K) \bmod K][a]} / g_{1,2}^{[(a-1+K) \bmod K][a]} \quad , \quad ...,$$

$$g_{2,D}^{[(a-1+K) \bmod K][a]} / g_{1,D}^{[(a-1+K) \bmod K][a]} \quad , \quad g_{3,D}^{[(a-1+K) \bmod K][a]} / g_{1,D}^{[(a-1+K) \bmod K][a]} \quad , \quad ..., \quad \text{and} \quad g_{2D,D}^{[(a-1+K) \bmod K][a]} /$$

$$g_{1,D}^{[(a-1+K) \bmod K][a]} .$$

The first transmit end TX[$b$] corresponds to equivalent channel ratios $g_{2,1}^{[a][b]} / g_{1,1}^{[a][b]}$ , $g_{3,1}^{[a][b]} / g_{1,1}^{[a][b]}$ , ...,

$$g_{2D,1}^{[a][b]} / g_{1,1}^{[a][b]} \quad , \quad g_{2,2}^{[a][b]} / g_{1,2}^{[a][b]} \quad , \quad g_{3,2}^{[a][b]} / g_{1,2}^{[a][b]} \quad , ..., \quad g_{2D,2}^{[a][b]} / g_{1,2}^{[a][b]} \quad , ..., \quad g_{2,D}^{[a][b]} / g_{1,D}^{[a][b]} \quad , \quad g_{3,D}^{[a][b]} / g_{1,D}^{[a][b]} \quad , ..., \text{and}$$

$$g_{2D,D}^{[a][b]} / g_{1,D}^{[a][b]} . \quad g_{m,d}^{[k][l]}$$ is an equivalent channel coefficient of an $m$th antenna for transmitting a $d$th signal of TX[$l$] to $RX[k]$. $k, l \in \{0,1,2\}$. $k \neq l$. m E $\{1,2, ...,2D\}$. $d \in \{1,2 ... , D\}$.

The first precoding matrix satisfies the following formula:

$$v_{2D \times D}^{[b]} = (h_{2D \times 2D}^{[(a-1+K) \bmod K][b]})^{-1} g_{2D \times D}^{[(a-1+K) \bmod K][a]} k_{D \times D}^{[(a-1+K) \bmod K][a]}$$

$$g_{2D \times D}^{[(a-1+K) \bmod K][a]} = \begin{bmatrix} g_{1,1}^{[(a-1+K) \bmod K][a]} & g_{1,2}^{[(a-1+K) \bmod K][a]} & \cdots & g_{1,D}^{[(a-1+K) \bmod K][a]} \\ g_{2,1}^{[(a-1+K) \bmod K][a]} & g_{2,2}^{[(a-1+K) \bmod K][a]} & \cdots & g_{2,D}^{[(a-1+K) \bmod K][a]} \\ g_{3,1}^{[(a-1+K) \bmod K][a]} & g_{3,2}^{[(a-1+K) \bmod K][a]} & \cdots & g_{3,D}^{[(a-1+K) \bmod K][a]} \\ \vdots & \vdots & \vdots & \vdots \\ g_{2D,1}^{[(a-1+K) \bmod K][a]} & g_{2D,2}^{[(a-1+K) \bmod K][a]} & \cdots & g_{2D,D}^{[(a-1+K) \bmod K][a]} \end{bmatrix} ,$$

$$h_{2D \times 2D}^{[(a-1+K) \bmod K][b]}$$ is the first channel matrix: a channel matrix from TX[$b$] to RX[$(a$ - 1 + $K$) $mod$ $K$], and $$k_{D \times D}^{[(a-1+K) \bmod K][a]} \in \mathbb{C}^{D \times D}$$ .

The equivalent channel matrix from the first transmit end to the second target receive end satisfies the following formula:

$$g_{2D \times D}^{[a][b]} = h_{2D \times 2D}^{[a][b]} v_{2D \times D}^{[b]}$$

$$g_{2D \times D}^{[a][b]} = \begin{bmatrix} g_{1,1}^{[a][b]} & g_{1,2}^{[a][b]} & \cdots & g_{1,D}^{[a][b]} \\ g_{2,1}^{[a][b]} & g_{2,2}^{[a][b]} & \cdots & g_{2,D}^{[a][b]} \\ g_{3,1}^{[a][b]} & g_{3,2}^{[a][b]} & \cdots & g_{3,D}^{[a][b]} \\ \vdots & \vdots & \vdots & \vdots \\ g_{2D,1}^{[a][b]} & g_{2D,2}^{[a][b]} & \cdots & g_{2D,D}^{[a][b]} \end{bmatrix} . \quad h_{2D \times 2D}^{[a][b]}$$ is the second channel matrix: a channel matrix from TX[$b$] to RX [$a$].

According to a second aspect, an embodiment of this application provides a communication apparatus, including units configured to perform the steps in the first aspect.

According to a third aspect, an embodiment of this application provides a communication device, including at least one processor. The at least one processor is coupled to a memory, and is configured to read program instructions and data in the memory, to implement the method according to the first aspect of this application.

According to a fourth aspect, an embodiment of this application provides a communication device, including an input/output interface and a logic circuit. The input/output interface is configured to input data to the logic circuit, and receive data output by the logic circuit. The logic circuit performs the method according to the first aspect of this application.

According to a fifth aspect, an embodiment of this application further provides a computer program product. The computer program product includes instructions. When the instructions are executed by a computer, the computer is enabled to perform the method according to the first aspect.

According to a sixth aspect, an embodiment of this application further provides a computer-readable storage medium. The computer-readable storage medium stores a computer program. When the computer program is run on a computer, the computer is enabled to perform the method according to the first aspect.

According to a seventh aspect, an embodiment of this application further provides a chip. The chip is configured to read a computer program stored in a memory, to perform the method according to the first aspect.

According to an eighth aspect, an embodiment of this application further provides a chip system. The chip system includes a processor, configured to support a computer apparatus in implementing the method according to the first aspect. In a possible design, the chip system further includes a memory, and the memory is configured to store a program and data that are necessary for the computer apparatus. The chip system may include a chip, or may include a chip and another discrete component.

## BRIEF DESCRIPTION OF DRAWINGS

FIG. 1 is a diagram of an architecture of a communication system according to an embodiment of this application;
FIG. 2 is a flowchart of a communication method according to an embodiment of this application;
FIG. 3 is a diagram of equivalent channel ratio transmission in a communication system according to an embodiment of this application;
FIG. 4 is a flowchart of equivalent channel ratio transmission in a communication system according to an embodiment of this application;
FIG. 5 is a diagram of interference alignment effects of a receive end according to an embodiment of this application;
FIG. 6 is a diagram of equivalent channel ratio transmission in a communication system according to an embodiment of this application;
FIG. 7 is a diagram of equivalent channel ratio transmission in a communication system according to an embodiment of this application;
FIG. 8 is a simulation diagram of convergence performance of a precoding matrix according to an embodiment of this application;
FIG. 9 is a diagram of a probability density function of an equivalent channel ratio transmission count in a communication system when a precoding matrix convergence condition is satisfied according to an embodiment of this application;
FIG. 10 is a diagram of a structure of a communication apparatus according to an embodiment of this application;
FIG. 11 is a diagram of a structure of a communication device according to an embodiment of this application; and
FIG. 12 is a diagram of a structure of another communication device according to an embodiment of this application.

## DESCRIPTION OF EMBODIMENTS

This application provides a communication method and apparatus, to implement interference alignment without a restriction of a condition of reciprocity between a transmit channel and a receive channel, and reduce transmission overheads required in an implementation process. The method and the apparatus provided in embodiments of this application are based on a same technical concept. Because problem-resolving principles are similar, mutual reference may be made to embodiments, and repeated parts are not described again.

The following describes some terms used in this application, to help a person skilled in the art in understanding.

(1) A communication device is generally a device with a communication function. For example, in embodiments of this application, the communication device may be but is not limited to a terminal device or a network device.

(2) A network device is a device that connects a terminal device to a wireless network in a communication system. As a node in a radio access network, the network device may also be referred to as a base station, a radio access network (radio access network, RAN) node (or device), or an access point (access point, AP).

Currently, some examples of the network device are: a new generation NodeB (generation NodeB, gNB), a transmission and reception point (transmission reception point, TRP), an evolved NodeB (evolved NodeB, eNB), a radio network controller (radio network controller, RNC), a NodeB (NodeB, NB), a transmission node, a transceiver node, a relay device, a base station controller (base station controller, BSC), a base transceiver station (base transceiver station, BTS), a home base station (for example, a home evolved NodeB or a home NodeB, HNB), a baseband unit (baseband unit, BBU), a satellite, or a small cell or a micro base station having a base station function.

In addition, in a network structure, the network device may include a central unit (central unit, CU) node and a distributed unit (distributed unit, DU) node. In this structure, a protocol stack of the network device is split. Functions of some protocol layers are controlled by a CU in a centralized manner. Functions of some or all of remaining protocol layers are distributed in a DU. The CU controls the DU in a centralized manner.

(3) The terminal device is a device that provides voice and/or data connectivity for a user. The terminal device may also be referred to as a user equipment (user equipment, UE), a mobile station (mobile station, MS), a mobile terminal (mobile terminal, MT), or the like.

For example, the terminal device may be a handheld device or an in-vehicle device that has a wireless connection function. Currently, some examples of the terminal device are: a mobile phone (mobile phone), a tablet computer, a notebook computer, a palmtop computer, a mobile internet device (mobile internet device, MID), a point of sale (point of sale, POS), a wearable device, a virtual reality (virtual reality, VR) device, an augmented reality (augmented reality, AR) device, a wireless terminal in industrial control (industrial control), various handheld devices, computing devices, and other processing devices connected to a wireless modem, a subscriber unit, a cellular phone, a wireless modem, a machine type communication terminal, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), various smart meters (a smart water meter, a smart electric meter, and a smart gas meter), and the like.

(4) A transmit-receive pair includes at least one transmit end (that is, TX) communication device and at least one receive end (RX) communication device. There is a correspondence between at least one transmit end and at least one receive end in a same group of transmit-receive pairs. In embodiments of this application, an example in which a group of transmit-receive pairs includes one TX and one RX is used for description.

A transmit end and a receive end in a group of transmit-receive pairs respectively represent a source end and a destination end of service data.

It should be noted that a TX and an RX in a same transmit-receive pair may be communication devices of a same type, or may be communication devices of different types. For example, both a TX and an RX in a same transmit-receive pair are terminal devices, both are network devices, or one is a terminal device and the other is a network device. In addition, in a communication system including a plurality of groups of transmit-receive pairs, TXs in different groups of transmit-receive pairs may be communication devices of a same type, or may be communication devices of different types. Similarly, RXs in different groups of transmit-receive pairs may be communication devices of a same type, or may be communication devices of different types. The foregoing content is not limited in this application.

It should be further noted that in this application, definitions of a transmit end (TX) and a receive end (RX) do not constitute any limitation on the communication function of the communication device, and the two concepts are merely used to distinguish between a source end and a destination end of data when the data/a type of data is unidirectionally transmitted between two communication devices. For example, in a scenario in which the communication device sends first data, the communication device may be denoted as TX; or when the communication device receives second data, the communication device may be denoted as RX.

(5) Interference alignment means overlapping interference at a receive end by using a linear precoding technology, and compressing a dimension of space occupied by the interference, to obtain a maximum degree of freedom.

(6) A signal sent by the TX includes but is not limited to a modulation symbol and a pilot signal.

(7) The term "and/or" describes an association relationship between associated objects and represents that three relationships may exist. For example, A and/or B may represent the following three cases: Only A exists, both A and B exist, and only B exists. The character "/" generally indicates an "or" relationship between the associated objects.

It should be noted that "a plurality of" in this application means two or more than two; and "at least one" means one or more.

In addition, it should be understood that in descriptions of this application, terms such as "first" and "second" are merely used for distinguishing and description, but should not be understood as indicating or implying relative importance, or should not be understood as indicating or implying a sequence.

The following describes embodiments of this application in detail with reference to the accompanying drawings.

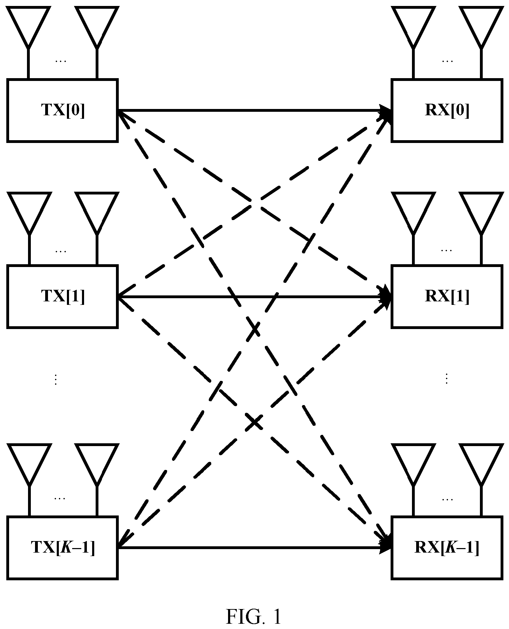

FIG. 1 shows an architecture of a communication system to which a method according to an embodiment of this application is applicable. Refer to FIG. 1. The system includes $K$ groups of transmit-receive pairs, where $K$ is an integer greater than 2. Each group of transmit-receive pairs includes at least one TX and at least one RX, and there is a correspondence between a TX and an RX in a same group of transmit-receive pairs.

Optionally, each TX and each RX in the communication system include a plurality of antennas. For ease of description, in this application, it is assumed that each TX has $N$ antennas, and each RX has $M$ antennas, where $N$ and $M$ are integers greater than 1, and $N$ and $M$ may be the same or different.

As shown in FIG. 1, in an $i$th transmit-receive pair in the $K$ groups of transmit-receive pairs, a transmit end is denoted as TX[$i$ - 1], and a receive end corresponding to TX[$i$ - 1] is denoted as RX[$i$ - 1], where $i \in \{1,2, ... , K\}$.

As shown by a solid line in FIG. 1, in an ideal case, a signal sent by a TX in each group of transmit-receive pairs should be transmitted to an RX corresponding to the TX, so that the RX can successfully obtain the signal through demodulation, as shown by the solid line in FIG. 1. However, in the communication system, the $K$ groups of transmit-receive pairs may share a same transmission time-frequency resource for signal transmission. Due to a signal transmission characteristic in space, when the $K$ groups of transmit-receive pairs use the same time-frequency resource for signal transmission, a signal sent by a TX in one group of transmit-receive pairs may be transmitted to an RX in another group of transmit-receive pairs, causing interference to the another RX, as shown by a dashed line in FIG. 1.

In the communication system shown in FIG. 1, antennas may not be deployed on a communication device on a large scale due to limitations of transmit power, a device size, and a signal processing capability of the communication device. Because a quantity of antennas of the communication device is limited, MU-MIMO cannot be implemented. As a result, a TX in the communication system does not have sufficient spatial resolution (transmission degree of freedom) to suppress interference caused to an RX in another transmit-receive pair.

It should be noted that the communication system shown in FIG. 1 in this application may be applied to various scenarios, for example, a sidelink (sidelink), a long term evolution (long term evolution, LTE) communication system, a 5th generation (5th Generation, 5G) communication system (also referred to as a 5G new radio (new radio, NR) system), a 6th generation (6th Generation, 6G) communication system, and a future communication system, for example, a scenario in which a plurality of terminal device transmit-receive pairs in a sidelink system use a same time-frequency resource for communication, for example, various typical scenarios in which various terminal devices of an internet of vehicles, an internet of things, an uncrewed aerial vehicle, an industrial internet, and the like communicate with each other. Certainly, the communication system shown in FIG. 1 may also be applicable to communication between a network device and a terminal device and communication between network devices.

In addition, the communication system shown in FIG. 1 does not constitute a limitation on a communication method and an interference alignment method provided in embodiments of this application. The communication method and the interference alignment method may be applicable to various scenarios. For example, each TX in the communication system may have a different quantity of antennas, and each RX in the communication system may also have a different quantity of antennas.

In the communication system shown in FIG. 1, to ensure signal transmission efficiency and enable an RX in each group of transmit-receive pairs to successfully obtain, through demodulation, a signal sent by a TX corresponding to the RX, the communication system may compress interference space by using an interference alignment technology, to obtain a degree of freedom, thereby implementing interference-free communication. However, it can be learned from the background that a direct method in a conventional interference alignment technology may cause large transmission overheads, and an iterative method is limited by a channel reciprocity condition.

Based on this, this application provides a communication method, to implement interference alignment without a restriction of a condition of reciprocity between a transmit channel and a receive channel, and reduce transmission overheads required in an implementation process. The method may be applied to the communication system shown in FIG. 1. As shown in FIG. 1, the communication system includes the $K$ groups of transmit-receive pairs, each TX has the $N$ antennas, and each RX has the $M$ antennas, where $K$ is an integer greater than 2, and $N$ and $M$ are integers greater than 1.

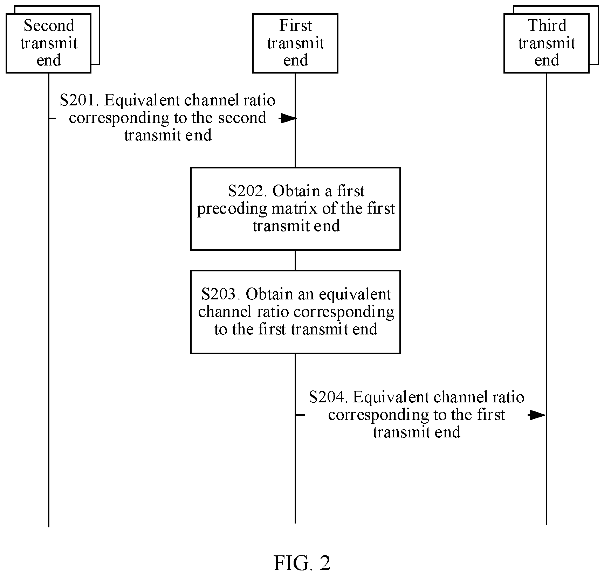

The following describes, with reference to a flowchart shown in FIG. 2, the method provided in an embodiment of this application.

S201: A first transmit end receives an equivalent channel ratio corresponding to a second transmit end.

It should be noted that in this embodiment of this application, there may be at least one second transmit end, and a specific quantity of second transmit ends is related to a quantity of transmit-receive pairs in the communication system.

An equivalent channel ratio corresponding to any second transmit end is a ratio of different equivalent channel coefficients in an equivalent channel matrix from the second transmit end to a first target receive end. The first target receive end is a receive end that needs to implement interference alignment in the communication system. The first target receive end is different from a first receive end corresponding to the first transmit end and at least one second receive end corresponding to the at least one second transmit end.

When each transmit end in the communication system can send $D$ signals (has a transmission degree of freedom of $D$), an equivalent channel matrix from any second transmit end to the first target receive end includes $M * D$ elements, where $D$ is a positive integer, and each element represents an equivalent channel coefficient (also referred to as an equivalent channel response) of one antenna for transmitting one signal of the second transmit end to the first target receive end.

In this embodiment of this application, an equivalent channel ratio corresponding to any second transmit end is determined based on an equivalent channel matrix from the second transmit end to the first target receive end, and is used to restore the equivalent channel matrix from the second transmit end to the first target receive end. Because a rank of the equivalent channel matrix is not changed when the equivalent channel matrix is scaled in a same proportion, an equivalent channel ratio corresponding to any second transmit end may be a ratio of different equivalent channel coefficients in $M * D$ equivalent channel coefficients in an equivalent channel matrix from the second transmit end to the first target receive end.

For example, an equivalent channel ratio corresponding to any second transmit end may include a ratio of a specified equivalent channel coefficient in each column in an equivalent channel matrix from the second transmit end to the first target receive end to another equivalent channel coefficient in the column. A specified equivalent channel coefficient in any column may be an equivalent channel coefficient at a specified location (for example, an equivalent channel coefficient in a $1^{st}$ row in the column) in equivalent channel coefficients in the column in the equivalent channel matrix from the second transmit end to the first target receive end.

For another example, an equivalent channel ratio corresponding to any second transmit end may include: a ratio of two specified equivalent channel coefficients in each column in an equivalent channel matrix from the second transmit end to the first target receive end, a ratio of at least one first equivalent channel coefficient (different from the two specified equivalent channel coefficients in the column) in the column to one specified equivalent channel coefficient, and a ratio of at least one second equivalent channel coefficient (different from the two specified equivalent channel coefficients in the column and different from the at least one first equivalent channel coefficient) in the column to the other specified equivalent channel coefficient. Two specified equivalent channel coefficients in any column may be equivalent channel coefficients at two specified locations in equivalent channel coefficients in the column in the equivalent channel matrix from the second transmit end to the first target receive end.

It can be learned from the foregoing descriptions and examples that to restore an equivalent channel matrix from each second transmit end to the first target receive end, an equivalent channel ratio corresponding to any second transmit end should satisfy the following condition: Numerators and denominators of all ratios should traverse all equivalent channel coefficients in the equivalent channel matrix from the second transmit end to the first target receive end.

To reduce transmission overheads, and reduce calculation overheads when the equivalent channel matrix from each second transmit end to the first target receive end is restored, the equivalent channel ratio corresponding to the any second transmit end may be determined in the manner in the foregoing example.

S202: The first transmit end obtains a first precoding matrix of the first transmit end based on the received equivalent channel ratio corresponding to the second transmit end and a first channel matrix, where the first channel matrix is a channel matrix from the first transmit end to the first target receive end.

In an implementation, the first transmit end may perform S202 through the following steps.

A1: The first transmit end may determine an equivalent channel matrix from the second transmit end to the first target receive end based on the received equivalent channel ratio corresponding to the second transmit end.

A2: The first transmit end obtains the first precoding matrix of the first transmit end through calculation based on the determined equivalent channel matrix from the second transmit end to the first target receive end and the first channel matrix.

In this embodiment of this application, an equivalent channel ratio corresponding to the at least one second transmit end is obtained by the at least one second transmit end based on an interference alignment condition of the first target receive end (which can ensure that the first target receive end implements local interference alignment). Therefore, the first precoding matrix calculated by the first transmit end based on the equivalent channel ratio corresponding to the at least one second transmit end satisfies the interference alignment condition of the first target receive end. It should be noted that the interference alignment condition of the first target receive end includes: All interference signals of the first target receive end are projected to zero space, that is, it is ensured that the interference signals of the first target receive end overlap in one direction and are perpendicular to an equalization matrix of the first target receive end. In this application, for descriptions of the interference alignment condition of the first target receive end, refer to the following descriptions of a condition making local interference alignment of RX[k] true and descriptions of the interference alignment condition in the following embodiments. Details are not described herein.

Through the foregoing steps S201 and S202, the first transmit end may calculate the first precoding matrix that satisfies the interference alignment condition of the first target receive end. After S202, if the first transmit end sends a signal to the corresponding first receive end by using the first precoding matrix, the signal sent by the first transmit end and a signal sent by the at least one second transmit end may overlap in one direction at the first target receive end, so that interference alignment of the first target receive end can be implemented. However, to enable a second target receive end in the communication system to implement local interference alignment, after determining the first precoding matrix, the first transmit end may further continue to calculate, based on an interference alignment condition of the second target receive end, an equivalent channel ratio corresponding to the first transmit end, and then send the equivalent channel ratio corresponding to the first transmit end. For a specific process, refer to the following descriptions of S203 and S204. For the interference alignment condition of the second target receive end, refer to the foregoing descriptions of the interference alignment condition of the first target receive end.

S203: The first transmit end obtains, based on the first precoding matrix and a second channel matrix, the equivalent channel ratio corresponding to the first transmit end.

The second channel matrix is a channel matrix from the first transmit end to the second target receive end. The equivalent channel ratio corresponding to the first transmit end is a ratio of different equivalent channel coefficients in an equivalent channel matrix from the first transmit end to the second target receive end. The second target receive end is a next receive end that needs to implement interference alignment in the communication system. The second target receive end is different from the first receive end corresponding to the first transmit end.

It should be noted that in this embodiment of this application, for descriptions of an equivalent channel ratio corresponding to any transmit end, refer to the descriptions of the equivalent channel ratio corresponding to the any second transmit end in S201. Details are not described herein again.

In an implementation, the first transmit end may obtain, through the following steps, the equivalent channel ratio corresponding to the first transmit end.

B1: The first transmit end obtains the equivalent channel matrix from the first transmit end to the second target receive end based on the first precoding matrix and the second channel matrix.

B2: The first transmit end obtains, based on the equivalent channel matrix that is from the first transmit end to the second target receive end and that is obtained in B1, the equivalent channel ratio corresponding to the first transmit end.

The equivalent channel ratio that corresponds to the first transmit end and that is obtained through calculation in the foregoing steps B1 and B2 satisfies the interference alignment condition of the second target receive end.

S204: The first transmit end sends the equivalent channel ratio corresponding to the first transmit end.

Similar to S201 in which the first transmit end receives the equivalent channel ratio corresponding to the second transmit end, the equivalent channel ratio corresponding to the first transmit end needs to be transmitted to a third transmit end in the communication system, so that the third transmit end can also calculate a precoding matrix of the third transmit end based on the equivalent channel ratio corresponding to the first transmit end. In this way, the precoding matrix calculated by the third transmit end satisfies the interference alignment condition of the second target receive end, and finally, local interference alignment of the second target receive end is implemented. It should be noted that the second target receive end is different from a third receive end corresponding to the third transmit end.

It should be noted that in this embodiment of this application, there may be at least one third transmit end, and a specific quantity of third transmit ends is related to the quantity of transmit-receive pairs in the communication system.

The at least one third transmit end is different from the first transmit end. However, a relationship between the at least one third transmit end and the at least one second transmit end is not limited in this embodiment of this application. For example, the at least one third transmit end and the at least one second transmit end may include a same transmit end, or the at least one third transmit end and the at least one second transmit end may not include a same transmit end. In conclusion, the relationship between the at least one third transmit end and the at least one second transmit end varies with a quantity of transmit ends included in the communication system.

To enable the at least one third transmit end in the communication system to receive the equivalent channel ratio corresponding to the first transmit end and further enable each third transmit end to calculate a precoding matrix of the third transmit end based on the equivalent channel ratio corresponding to the first transmit end, to implement local interference alignment of the second target receive end, in S204, the first transmit end may send, in but not limited to the following manners, the equivalent channel ratio corresponding to the first transmit end.

Manner 1: The first transmit end sends a first message to the third transmit end, where the first message includes the equivalent channel ratio corresponding to the first transmit end.

Manner 2: The first transmit end broadcasts a second message including the equivalent channel ratio corresponding to the first transmit end, where the second message further includes at least one of the following: an identifier of the first transmit end and an identifier of the third transmit end.

When the first transmit end in the communication system sends, in Manner 2, the equivalent channel ratio corresponding to the first transmit end, and the second message sent by the first transmit end further includes the identifier of the first transmit end (that is, an identifier of a computing device for the equivalent channel ratio), a user may set a target identifier (that is, the identifier of the first transmit end) in the at least one third transmit end in the communication system (certainly, the user sets a target identifier corresponding to each transmit end). In this way, after receiving the second message, any transmit end in the communication system determines whether the identifier of the first transmit end in the second message is the same as the target identifier that is locally stored. If the identifier of the first transmit end in the second message is the same as the target identifier that is locally stored, processing continues; or if the identifier of the first transmit end in the second message is not the same as the target identifier that is locally stored, the second message is discarded. In this manner, it can be ensured that the at least one third transmit end in the communication system can successfully receive the equivalent channel ratio corresponding to the first transmit end.

When the first transmit end in the communication system sends, in Manner 2, the equivalent channel ratio corresponding to the first transmit end, and the second message sent by the first transmit end further includes an identifier of the at least one third transmit end (that is, an identifier of a target device for transmission of the equivalent channel ratio), after receiving the second message, any transmit end in the communication system may determine whether the identifier of the at least one third transmit end in the second message includes an identifier of the any transmit end. If the identifier of the at least one third transmit end in the second message includes the identifier of the any transmit end, processing continues; or if the identifier of the at least one third transmit end in the second message does not include the identifier of the any transmit end, the second message is discarded.

After the at least one third transmit end receives the equivalent channel ratio corresponding to the first transmit end, similar to the first transmit end, the at least one third transmit end may also calculate a precoding matrix of the at least one third transmit end based on the equivalent channel ratio corresponding to the first transmit end (for a specific process, refer to the descriptions in S202), to finally implement local interference alignment of the second target receive end. In conclusion, after each transmit end in the communication system calculates a precoding matrix of the transmit end based on an equivalent channel ratio corresponding to another transmit end, a receive end corresponding to each transmit end can implement local interference alignment, and finally, interference alignment of the entire communication system can be implemented.

It should be noted that in the communication system, any transmit end may transmit, in the foregoing two manners, an equivalent channel ratio corresponding to the transmit end. For example, before S201, each of the at least one second transmit end sends, in any one of the foregoing manners, the equivalent channel ratio corresponding to the second transmit end, that is, all transmit ends in the communication system may send, in a same manner, equivalent channel ratios corresponding to the transmit ends.

It should be noted that in this embodiment of this application, both the first channel matrix and the second channel matrix are local channel state information of the first transmit end, that is, the first transmit end may determine the first channel matrix, the second channel matrix, and the like by using a conventional solution.

It can be learned from the foregoing method provided in this embodiment of this application that only an equivalent channel ratio corresponding to a transmit end, instead of a precoding matrix and channel state information, is transmitted between transmit ends in the communication system. Therefore, compared with the direct method in the conventional interference algorithm, the method can significantly reduce transmission overheads in a process of implementing interference alignment of the communication system. In addition, in the method, the equivalent channel ratio is transmitted only between transmit ends that participate in interference alignment of the communication system, so that the method is not restricted by a channel reciprocity condition.

In conclusion, this embodiment of this application provides the communication method. In the method, the first transmit end may receive the equivalent channel ratio corresponding to the second transmit end, and obtains, based on the equivalent channel ratio corresponding to the second transmit end, the precoding matrix corresponding to the first transmit end. Because the equivalent channel ratio corresponding to the second transmit end is obtained based on the interference alignment condition of the first target receive end, the precoding matrix calculated by the first transmit end satisfies the interference alignment condition of the first target receive end. Based on this, if the first transmit end sends a signal by using the obtained precoding matrix, the first target receive end may implement interference alignment. Based on the method, after each transmit end in the communication system calculates the precoding matrix of the transmit end based on the equivalent channel ratio corresponding to the another transmit end, the receive end corresponding to each transmit end can implement local interference alignment, and finally, interference alignment of the entire communication system can be implemented. In the method provided in this application, the transmit end transmits only the equivalent channel ratio corresponding to the transmit end, instead of the precoding matrix and the channel state information. Therefore, compared with the direct method in the conventional interference algorithm, the method can significantly reduce transmission overheads in the process of implementing interference alignment of the communication system. In addition, in the method, the equivalent channel ratio is transmitted only between the transmit ends that participate in interference alignment of the communication system, so that the method is not restricted by the channel reciprocity condition.

Based on the foregoing S201 to S204, an equivalent channel ratio corresponding to a transmit end may be continuously transmitted between transmit ends in the communication system. To stop transmitting the equivalent channel ratio corresponding to the transmit end when interference alignment of the communication system is implemented (that is, all receive ends implement interference alignment), to reduce air interface transmission overheads, each transmit end further needs to determine, after calculating a precoding matrix of the transmit end, whether a specified equivalent channel ratio transmission ending condition is satisfied currently. If the equivalent channel ratio transmission ending condition is satisfied, the transmit end stops calculating an equivalent channel ratio corresponding to the transmit end, and certainly, does not perform the step of sending the equivalent channel ratio corresponding to the transmit end; or if the equivalent channel ratio transmission ending condition is not satisfied, the transmit end continues to calculate and send an equivalent channel ratio corresponding to the transmit end. The following continues to use the first transmit end as an example for description.

After S202, the first transmit end determines whether a specified equivalent channel ratio transmission ending condition is satisfied, and if the equivalent channel ratio transmission ending condition is not satisfied, continues to perform S203 and S204, or if the equivalent channel ratio transmission ending condition is satisfied, does not perform S203 and S204. Optionally, when the equivalent channel ratio transmission ending condition is satisfied, the first transmit end may send a first indication, where the first indication indicates another transmit end in the communication system to stop transmitting an equivalent channel ratio corresponding to the another transmit end.

Optionally, similar to the first transmit end sending the equivalent channel ratio corresponding to the first transmit end, the first transmit end may send the first indication to the third transmit end, or the first transmit end broadcasts the first indication. This is not limited in this application.

In an implementation, the equivalent channel ratio transmission ending condition may include but is not limited to at least one of the following:

> Condition 1: An error between the first precoding matrix and a second precoding matrix that is stored is less than a specified error threshold.
> Condition 2: An equivalent channel ratio transmission count of the first transmit end is greater than or equal to a specified transmission count threshold.

The second precoding matrix in Condition 1 is a precoding matrix used by the first transmit end to send data before the first precoding matrix is obtained. The equivalent channel ratio transmission count of the first transmit end in Condition 2 is a count that the first transmit end sends the equivalent channel ratio corresponding to the first transmit end, or a count that the first transmit end receives the equivalent channel ratio corresponding to the at least one second transmit end.

Optionally, similar to the first precoding matrix, the second precoding matrix may be a precoding matrix that is previously calculated by the first transmit end based on an equivalent channel ratio corresponding to another transmit end.

It should be noted that the first transmit end needs to maintain and update the equivalent channel ratio transmission count. For example, each time the first transmit end sends the equivalent channel ratio corresponding to the first transmit end, the equivalent channel ratio transmission count is increased by 1; or each time the first transmit end receives the equivalent channel ratio corresponding to the at least one second transmit end, the equivalent channel ratio transmission count is increased by 1. In addition, when the first transmit end determines that the equivalent channel ratio transmission ending condition is satisfied, receives a first indication sent by another transmit end, or does not receive, within specified duration, an equivalent channel ratio sent by another transmit end, the first transmit end may reset the equivalent channel ratio transmission count to 0.

When an error between two precoding matrices consecutively calculated by the first transmit end is less than the specified error threshold, it indicates that the precoding matrix calculated by the first transmit end converges. In this case, a probability of implementing interference alignment of the communication system is high, and even if an equivalent channel ratio corresponding to a transmit end continues to be transmitted subsequently in the communication system, a precoding matrix subsequently calculated by the first transmit end continues to converge. Therefore, subsequent equivalent channel ratio transmission no longer plays an active role in implementing interference alignment of the communication system, but causes transmission overheads. Based on this, to reduce transmission overheads while ensuring interference alignment of the communication system, the equivalent channel ratio transmission ending condition may include Condition 1. In this way, after determining that a calculated precoding matrix converges, a transmit end may stop transmitting an equivalent channel ratio.

It should be noted that the error threshold in Condition 1 may be specified in a standard, set by the user, or determined by the first transmit end. This is not limited in this application.

In addition, to ensure interference alignment of the entire communication system, a transmission count threshold may be set in a transmit end. In this way, it can be ensured that each transmit end in the communication system performs a precoding matrix calculation process for at least the transmission count threshold minus one times. Setting Condition 2 can avoid a case in which equivalent channel ratio transmission ends because precoding matrices calculated by some transmit ends that perform the precoding matrix calculation process for few times do not converge but a precoding matrix calculated by a transmit end already converges.

It should be noted that a specific value of the transmission count threshold in Condition 2 may be specified in a standard, set by the user, or determined by the first transmit end. This is not limited in this application. For example, in actual application, the transmission count threshold may be set or calculated based on an actual scenario. For example, the transmission count threshold may be set based on at least one of the following: a quantity of groups of transmit-receive pairs in the communication system, a quantity of antennas of each transmit end, a quantity of antennas of each receive end, and a quantity of signals sent by each transmit end.

Based on the communication method provided in the embodiment shown in FIG. 2, this application further provides the following plurality of specific embodiments. Before the following embodiments are described, common features in each embodiment are first described. The following embodiments are all applicable to the communication system shown in FIG. 1. The communication system includes the $K$ groups of transmit-receive pairs, each TX has the $N$ antennas, and each RX has the $M$ antennas, where $K$, $N$, and $M$ are integers greater than 1. In the $i^{th}$ transmit-receive pair in the $K$ groups of transmit-receive pairs, the transmit end is denoted as TX[$i$ - 1], and the receive end corresponding to TX[$i$ -

1] is denoted as RX[$i$ - 1], where $i \in \{1, 2, ..., K\}$. Each transmit end can send $D$ signals (has a transmission degree of freedom of $D$), where $D$ is a positive integer. $s_{D \times 1}^{[k]}$ represents a signal sent by TX[$k$], where when TX[$k$] sends one signal, the signal $s_{1 \times 1}^{[k]}$ may also be denoted as $s^{[k]}$. $v_{N \times D}^{[k]}$ represents a precoding matrix of TX[$k$]. $h_{M \times N}^{[k][l]}$ represents a channel matrix from TX[$l$] to RX[$k$]. $y_{M \times 1}^{[k]}$ represents a signal received by RX[$k$]. $n_{M \times 1}^{[k]}$ represents noise received by RX[$k$]. $u_{M \times D}^{[k]}$ represents an equalization matrix of RX[$k$]. $r_{D \times 1}^{[k]}$ represents a symbol output by RX[$k$] after equalization.

$(\cdot)H$ represents a conjugate transposition of a matrix. $g_{M \times D}^{[k][l]} = h_{M \times N}^{[k][l]} v_{N \times D}^{[l]}$ represents an equivalent channel matrix from TX[$l$] to RX[$k$]. $g_{m,d}^{[k][l]}$ is an equivalent channel coefficient of an $m^{th}$ antenna for transmitting a $d^{th}$ signal of TX [$l$] in $g_{M \times D}^{[k][l]}$ to RX[$k$].

$k, l \in \{0, 1, 2, ..., K - 1\}$. $k \neq l$. m $\in \{1, 2, ..., M\}$. $d \in \{1, 2 ... , D\}$.

When TXs in the $K$ groups of transmit-receive pairs in the communication system use a same time-frequency resource to send signals, a signal received by each RX should be a superimposition of signals sent by a plurality of TXs in the communication system. The following uses RX[$k$] as an example for description. The signal received by RX[$k$] satisfies Formula 1:

$$y_{M \times 1}^{[k]} = h_{M \times N}^{[k][k]} v_{N \times D}^{[k]} s_{D \times 1}^{[k]} + \sum_{k \neq l} h_{M \times N}^{[k][l]} v_{N \times D}^{[l]} s_{D \times 1}^{[l]} + n_{M \times 1}^{[k]}$$

Formula 1

After equalization by RX[$k$], a relationship between an input and an output satisfies the following Formula 2:

$$r_{D \times 1}^{[k]} = (u_{M \times D}^{[k]})^H y_{M \times 1}^{[k]} = (u_{M \times D}^{[k]})^H h_{M \times N}^{[k][k]} v_{N \times D}^{[k]} s_{D \times 1}^{[k]} + \sum_{k \neq l} (u_{M \times D}^{[k]})^H h_{M \times N}^{[k][l]} v_{N \times D}^{[l]} s_{D \times 1}^{[l]} + (u_{M \times D}^{[k]})^H n_{M \times 1}^{[k]}$$

Formula 2

Two conditions making local interference alignment of RX[$k$] true are as follows:

(i) a rank of an equivalent channel matrix from TX[$k$] to RX[$k$] is equal to a quantity $D$ of signal flows; and
(ii) all interference signals are projected to the zero space.

Based on the foregoing condition making interference alignment true, from a mathematical perspective, a precoding matrix $v_{N \times D}^{[k]}$ and an equalization matrix $u_{M \times D}^{[k]}$ of proper TX[$k$] need to be found, to make the following system of linear equations true:

$$\begin{cases} \text{rank}\left((u_{M \times D}^{[k]})^H h_{M \times N}^{[k][k]} v_{N \times D}^{[k]}\right) = D \\ (u_{M \times D}^{[k]})^H h_{M \times N}^{[k][l]} v_{N \times D}^{[l]} = 0_{D \times D} \end{cases}$$

Formula 3

Theoretical research shows that when the quantity M of antennas of the TX and the quantity N of antennas of the RX in the communication system can be exactly divided by the transmission degree of freedom of $D$, the transmission degree of freedom of each TX $D = (M + N)/(K + 1)$, with channel time-frequency extension not considered.

The following describes each embodiment.

Embodiment 1: It is assumed that the communication system includes three groups of transmit-receive pairs, each TX includes two antennas, each RX has two antennas, and each TX can send one signal, that is, $K = 3$, $N = 2$, $M = 2$, and $D = 1$.

In this communication system, when TXs in the three groups of transmit-receive pairs send respective signals by using a same time-frequency resource, RX[0], RX[1], and RX[2] receive signals sent by TX[0], TX[1], and TX[2]. When noise is not considered, the following three systems of linear equations may be obtained according to expressions of the signals received by RX[1], RX[2], and RX[0]:

$$\begin{cases} y_{2\times1}^{[1]} = h_{2\times2}^{[1][1]} v_{2\times1}^{[1]} s_{1\times1}^{[1]} + h_{2\times2}^{[1][2]} v_{2\times1}^{[2]} s_{1\times1}^{[2]} + h_{2\times2}^{[1][0]} v_{2\times1}^{[0]} s_{1\times1}^{[0]} \\ y_{2\times1}^{[2]} = h_{2\times2}^{[2][1]} v_{2\times1}^{[1]} s_{1\times1}^{[1]} + h_{2\times2}^{[2][2]} v_{2\times1}^{[2]} s_{1\times1}^{[2]} + h_{2\times2}^{[2][0]} v_{2\times1}^{[0]} s_{1\times1}^{[0]} \\ y_{2\times1}^{[0]} = h_{2\times2}^{[0][1]} v_{2\times1}^{[1]} s_{1\times1}^{[1]} + h_{2\times2}^{[0][2]} v_{2\times1}^{[2]} s_{1\times1}^{[2]} + h_{2\times2}^{[0][0]} v_{2\times1}^{[0]} s_{1\times1}^{[0]} \end{cases}$$

The following describes a first system of linear equations.

Two antennas of RX[1] respectively receive superimposed signals obtained after channel transmission is performed on signals sent by two antennas of TX[1], TX[2], and TX[0]. Therefore, the first system of linear equations may be expanded to obtain:

$$\underbrace{\begin{bmatrix} y_1^{[1]} \\ y_2^{[1]} \end{bmatrix}}_{y_{2\times1}^{[1]}} = \underbrace{\begin{bmatrix} h_{1,1}^{[1][1]} & h_{1,2}^{[1][1]} \\ h_{2,1}^{[1][1]} & h_{2,2}^{[1][1]} \end{bmatrix}}_{h_{2\times2}^{[1][1]}} \underbrace{\begin{bmatrix} v_1^{[1]} \\ v_2^{[1]} \end{bmatrix}}_{v_{2\times1}^{[1]}} s_{1\times1}^{[1]} + \underbrace{\begin{bmatrix} h_{1,1}^{[1][2]} & h_{1,2}^{[1][2]} \\ h_{2,1}^{[1][2]} & h_{2,2}^{[1][2]} \end{bmatrix}}_{h_{2\times2}^{[1][2]}} \underbrace{\begin{bmatrix} v_1^{[2]} \\ v_2^{[2]} \end{bmatrix}}_{v_{2\times1}^{[2]}} s_{1\times1}^{[2]} + \underbrace{\begin{bmatrix} h_{1,1}^{[1][0]} & h_{1,2}^{[1][0]} \\ h_{2,1}^{[1][0]} & h_{2,2}^{[1][0]} \end{bmatrix}}_{h_{2\times2}^{[1][0]}} \underbrace{\begin{bmatrix} v_1^{[0]} \\ v_2^{[0]} \end{bmatrix}}_{v_{2\times1}^{[0]}} s_{1\times1}^{[0]}$$

$$= \underbrace{\begin{bmatrix} g_1^{[1][1]} \\ g_2^{[1][1]} \end{bmatrix}}_{g_{2\times1}^{[1][1]}} s_{1\times1}^{[1]} + \underbrace{\begin{bmatrix} g_1^{[1][2]} \\ g_2^{[1][2]} \end{bmatrix}}_{g_{2\times1}^{[1][2]}} s_{1\times1}^{[2]} + \underbrace{\begin{bmatrix} g_1^{[1][0]} \\ g_2^{[1][0]} \end{bmatrix}}_{g_{2\times1}^{[1][0]}} s_{1\times1}^{[0]} = \begin{bmatrix} g_1^{[1][1]} & g_1^{[1][2]} & g_1^{[1][0]} \\ g_2^{[1][1]} & g_2^{[1][2]} & g_2^{[1][0]} \end{bmatrix} \begin{bmatrix} s^{[1]} \\ s^{[2]} \\ s^{[0]} \end{bmatrix}$$

$$s_{1\times1}^{[1]} = s^{[1]}, \; s_{1\times1}^{[2]} = s^{[2]}, \text{ and } s_{1\times1}^{[0]} = s^{[0]}.$$

It can be learned from the expansion of the first system of linear equations that the first system of linear equations includes two equations and three unknown numbers. Because a quantity of unknown numbers is greater than a quantity of equations, generally, a signal $s^{[1]}$ sent by TX[1] cannot be uniquely determined based on signals $y_1^{[1]}, y_2^{[1]}$ received by the two antennas of RX[1].

RX[1] can uniquely determine the signal $s^{[1]}$ sent by TX[1] when and only when a coefficient matrix of the first system of linear equations satisfies the following two interference alignment conditions:

$$\begin{cases} rank\begin{pmatrix} g_1^{[1][1]} & g_1^{[1][2]} & g_1^{[1][0]} \\ g_2^{[1][1]} & g_2^{[1][2]} & g_2^{[1][0]} \end{pmatrix} = M = 2 \\ rank\begin{pmatrix} g_1^{[1][2]} & g_1^{[1][0]} \\ g_2^{[1][2]} & g_2^{[1][0]} \end{pmatrix} = M - D = 1 \end{cases}$$

For a random channel, if the second interference alignment condition is satisfied, the first interference alignment condition is satisfied at a probability of 1. Therefore, the first interference alignment condition may not be considered in this embodiment of this application temporarily. Further, according to the second interference alignment condition, it may be obtained that:

$$g_2^{[1][2]} / g_1^{[1][2]} = g_2^{[1][0]} / g_1^{[1][0]}$$

In addition, normalization processing may be performed on a precoding matrix of TX[1] (because $D = 1$, in this embodiment of this application, the precoding matrix may also be referred to as a precoding vector), and scaling of an equivalent channel matrix in a same proportion does not change a rank of the equivalent channel matrix. In conclusion, TX [2] only needs to transfer an equivalent channel ratio $g_2^{[1][2]} / g_1^{[1][2]}$ to TX[0], and TX[0] calculates its own precoding matrix $v_{2\times1}^{[0]}$ after receiving the ratio, so that the interference alignment condition of the first system of linear equations can be satisfied, and interference alignment on RX[1] can be implemented.

Based on the foregoing descriptions, after determining the precoding matrix $v_{2\times1}^{[0]}$, TX[0] substitutes the precoding matrix into a second system of linear equations, and transfers a finally obtained equivalent channel ratio $g_2^{[2][0]}/g_1^{[2][0]}$ to TX[1]. After receiving the ratio, TX[1] calculates its own precoding matrix $v_{2\times1}^{[1]}$, so that an interference alignment condition of the second system of linear equations can be satisfied, and interference alignment on RX[2] can be implemented.

Further, after determining the precoding matrix $v_{2\times1}^{[1]}$, TX[1] substitutes the precoding matrix into a third system of linear equations, and transfers a finally obtained equivalent channel ratio $g_2^{[0][1]}/g_1^{[0][1]}$ to TX[2]. After receiving the ratio, TX[2] calculates its own precoding matrix $v_{2\times1}^{[2]}$, so that an interference alignment condition of the third system of linear equations can be satisfied, and interference alignment on RX[0] can be implemented.

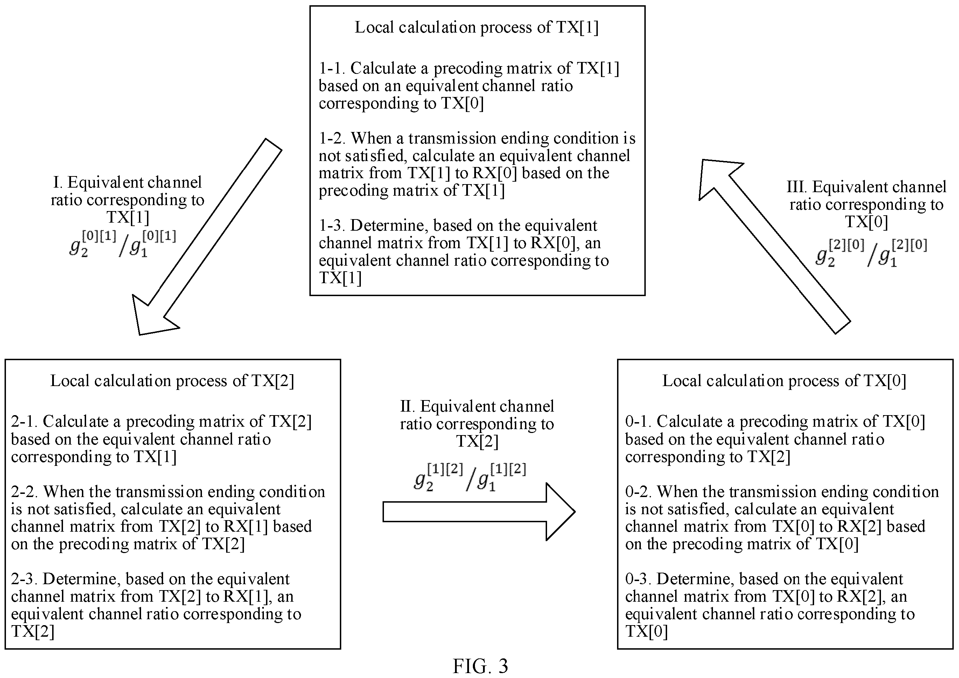

The following describes, in detail with reference to FIG. 3, an equivalent channel ratio transmission process and a local calculation process of each TX in this embodiment of this application. As shown in FIG. 3, the three TXs in the communication system may sequentially transmit corresponding equivalent channel ratios for a plurality of cycles, to implement interference alignment of the communication system.

As shown in FIG. 3, a local calculation process of TX[1] includes 1-1 to 1-3.

1-1: After receiving the equivalent channel ratio $g_2^{[2][0]}/g_1^{[2][0]}$ corresponding to TX[0], TX[1] calculates the precoding matrix $v_{2\times1}^{[1]}$ of TX[1] based on the equivalent channel ratio $g_2^{[2][0]}/g_1^{[2][0]}$ corresponding to TX[0].

In this step, TX[1] may first determine an equivalent channel matrix $g_{2\times1}^{[2][0]} = \begin{bmatrix} g_1^{[2][0]} \\ g_2^{[2][0]} \end{bmatrix}$ from TX[0] to RX[2] based on the equivalent channel ratio $g_2^{[2][0]}/g_1^{[2][0]}$ corresponding to TX[0].

Then, TX[1] calculates the precoding matrix $v_{2\times1}^{[1]}$ of TX[1] based on the equivalent channel matrix $g_{2\times1}^{[2][0]}$ from TX[0] to RX[2] and a channel matrix $h_{2\times2}^{[2][1]}$ from TX[1] to RX[2] in channel state information of TX[1].

The precoding matrix $v_{2\times1}^{[1]}$ of TX[1] satisfies a formula: $v_{2\times1}^{[1]} = (h_{2\times2}^{[2][1]})^{-1} g_{2\times1}^{[2][0]}$.

1-2: When determining that the equivalent channel ratio transmission ending condition is not satisfied, TX[1] calculates an equivalent channel matrix $g_{2\times1}^{[0][1]}$ from TX[1] to RX[0] based on the precoding matrix $v_{2\times1}^{[1]}$ of TX[1], to calculate the equivalent channel ratio corresponding to TX[1].

In this embodiment, it is assumed that the equivalent channel ratio transmission ending condition is that an error between two precoding matrices calculated consecutively is less than the specified error threshold. In other words, TX[1] may calculate the equivalent channel matrix $g_{2\times1}^{[0][1]}$ from TX[1] to RX[0] when determining that an error between $v_{2\times1}^{[1]}$ obtained in step 1-1 and a precoding matrix (denoted as $\dot{v}_{2\times1}^{[1]}$) previously obtained through calculation is less than the specified error threshold.

For example, when determining that $v_{2\times1}^{[1]}$ and $\dot{v}_{2\times1}^{[1]}$ satisfy a formula $\left\| v_{2\times1}^{[1]} * e^{j\angle\left(v_{2\times1}^{[1]}\right)^H \dot{v}_{2\times1}^{[1]}} - \dot{v}_{2\times1}^{[1]} \right\|_2 > \varepsilon$, TX[1] performs step 1-2, where $\varepsilon$ is the specified error threshold.

Then, TX[1] may calculate the equivalent channel matrix $g_{2\times1}^{[0][1]}$ from TX[1] to RX[0] based on the precoding matrix $v_{2\times1}^{[1]}$ of TX[1] and a channel matrix $h_{2\times2}^{[0][1]}$ from TX[1] to RX[0] in the channel state information of TX[1]. The equivalent channel matrix $g_{2\times 1}^{[0][1]}$ from TX[1] to RX[0] satisfies a formula: $g_{2\times 1}^{[0][1]} = h_{2\times 2}^{[0][1]} v_{2\times 1}^{[1]}$. $g_{2\times 1}^{[0][1]} = \begin{bmatrix} g_1^{[0][1]} \\ g_2^{[0][1]} \end{bmatrix}$.

1-3: TX[1] determines, based on the equivalent channel matrix $g_{2\times 1}^{[0][1]}$ from TX[1] to RX[0], the equivalent channel ratio $g_2^{[0][1]} / g_1^{[0][1]}$ corresponding to TX[1].

As shown in FIG. 3, after TX[1] determines the equivalent channel ratio $g_2^{[0][1]} / g_1^{[0][1]}$ corresponding to TX[1], TX[1] may send, in step I in the manner recorded in S204 in the embodiment shown in FIG. 2, the equivalent channel ratio $g_2^{[0][1]} / g_1^{[0][1]}$ corresponding to TX[1].

As shown in FIG. 3, a local calculation process of TX[2] includes 2-1 to 2-3.

2-1: After receiving the equivalent channel ratio $g_2^{[0][1]} / g_1^{[0][1]}$ corresponding to TX[1], TX[2] calculates the precoding matrix $v_{2\times 1}^{[2]}$ of TX[2] based on the equivalent channel ratio $g_2^{[0][1]} / g_1^{[0][1]}$ corresponding to TX[1].

In this step, TX[2] may first determine the equivalent channel matrix $g_{2\times 1}^{[0][1]} = \begin{bmatrix} g_1^{[0][1]} \\ g_2^{[0][1]} \end{bmatrix}$ from TX[1] to RX[0] based on the equivalent channel ratio $g_2^{[0][1]} / g_1^{[0][1]}$ corresponding to TX[1].

Then, TX[2] calculates the precoding matrix $v_{2\times 1}^{[2]}$ of TX[2] based on the equivalent channel matrix $g_{2\times 1}^{[0][1]}$ from TX[1] to RX[0] and a channel matrix $h_{2\times 2}^{[0][2]}$ from TX[2] to RX[0] in channel state information of TX[2].

The precoding matrix $v_{2\times 1}^{[2]}$ of TX[2] satisfies a formula: $v_{2\times 1}^{[2]} = (h_{2\times 2}^{[0][2]})^{-1} g_{2\times 1}^{[0][1]}$.

2-2: When determining that the equivalent channel ratio transmission ending condition is not satisfied, TX[2] calculates an equivalent channel matrix $g_{2\times 1}^{[1][2]}$ from TX[2] to RX[1] based on the precoding matrix $v_{2\times 1}^{[2]}$ of TX[2], to calculate the equivalent channel ratio corresponding to TX[2].

Similar to step 1-2, TX[2] may calculate the equivalent channel matrix $g_{2\times 1}^{[1][2]}$ from TX[2] to RX[1] when determining that an error between $v_{2\times 1}^{[2]}$ obtained in step 2-1 and a precoding matrix (denoted as $\dot{v}_{2\times 1}^{[2]}$) previously obtained through calculation is less than the specified error threshold.

For example, when determining that $v_{2\times 1}^{[2]}$ and $\dot{v}_{2\times 1}^{[2]}$ satisfy a formula $\left\| v_{2\times 1}^{[2]} * e^{j\angle (v_{2\times 1}^{[2]})^H \dot{v}_{2\times 1}^{[2]}} - \dot{v}_{2\times 1}^{[2]} \right\|_2 > \varepsilon$, TX[2] performs step 2-2.

Then, TX[2] may calculate the equivalent channel matrix $g_{2\times 1}^{[1][2]}$ from TX[2] to RX[1] based on the precoding matrix $v_{2\times 1}^{[2]}$ of TX[2] and a channel matrix $h_{2\times 2}^{[1][2]}$ from TX[2] to RX[1] in the channel state information of TX[2]. The equivalent channel matrix $g_{2\times 1}^{[1][2]}$ from TX[2] to RX[1] satisfies a formula: $g_{2\times 1}^{[1][2]} = h_{2\times 2}^{[1][2]} v_{2\times 1}^{[2]}$. $g_{2\times 1}^{[1][2]} = \begin{bmatrix} g_1^{[1][2]} \\ g_2^{[1][2]} \end{bmatrix}$.

2-3: TX[2] determines, based on the equivalent channel matrix $g_{2\times 1}^{[1][2]}$ from TX[2] to RX[1], the equivalent channel ratio $g_2^{[1][2]} / g_1^{[1][2]}$ corresponding to TX[2].

As shown in FIG. 3, after TX[2] determines the equivalent channel ratio $g_2^{[1][2]}/g_1^{[1][2]}$ corresponding to TX[2], TX[2] may send, in step II in the manner recorded in S204 in the embodiment shown in FIG. 2, the equivalent channel ratio $g_2^{[1][2]}/g_1^{[1][2]}$ corresponding to TX[2].

As shown in FIG. 3, a local calculation process of TX[0] includes 0-1 to 0-3.

0-1: After receiving the equivalent channel ratio $g_2^{[1][2]}/g_1^{[1][2]}$ corresponding to TX[2], TX[0] calculates the precoding matrix $v_{2\times1}^{[0]}$ of TX[0] based on the equivalent channel ratio $g_2^{[1][2]}/g_1^{[1][2]}$ corresponding to TX[2].

In this step, TX[0] may first determine the equivalent channel matrix $g_{2\times1}^{[1][2]} = \begin{bmatrix} g_1^{[1][2]} \\ g_2^{[1][2]} \end{bmatrix}$ from TX[2] to RX[1] based on the equivalent channel ratio $g_2^{[1][2]}/g_1^{[1][2]}$ corresponding to TX[2].

Then, TX[0] calculates the precoding matrix $v_{2\times1}^{[0]}$ of TX[0] based on the equivalent channel matrix $g_{2\times1}^{[1][2]}$ from TX[2] to RX[1] and a channel matrix $h_{2\times2}^{[1][0]}$ from TX[0] to RX[1] in channel state information of TX[0].

The precoding matrix $v_{2\times1}^{[0]}$ of TX[0] satisfies a formula: $v_{2\times1}^{[0]} = (h_{2\times2}^{[1][0]})^{-1} g_{2\times1}^{[1][2]}$.

0-2: When determining that the equivalent channel ratio transmission ending condition is not satisfied, TX[0] calculates an equivalent channel matrix $g_{2\times1}^{[2][0]}$ from TX[0] to RX[2] based on the precoding matrix $v_{2\times1}^{[0]}$ of TX[0], to calculate the equivalent channel ratio corresponding to TX[0].

Similar to step 1-2, TX[0] may calculate the equivalent channel matrix $g_{2\times1}^{[2][0]}$ from TX[0] to RX[2] when determining that an error between $v_{2\times1}^{[0]}$ obtained in step 0-1 and a precoding matrix (denoted as $\dot{v}_{2\times1}^{[0]}$) previously obtained through calculation is less than the specified error threshold.

For example, when determining that $v_{2\times1}^{[0]}$ and $\dot{v}_{2\times1}^{[0]}$ satisfy a formula $\left\| v_{2\times1}^{[0]} * e^{j\angle\left(v_{2\times1}^{[0]}\right)^H \dot{v}_{2\times1}^{[0]}} - \dot{v}_{2\times1}^{[0]} \right\|_2 > \varepsilon$, TX[0] performs step 0-2.

Then, TX[0] may calculate the equivalent channel matrix $g_{2\times1}^{[2][0]}$ from TX[0] to RX[2] based on the precoding matrix $v_{2\times1}^{[0]}$ of TX[0] and a channel matrix $h_{2\times2}^{[2][0]}$ from TX[0] to RX[2] in the channel state information of TX[0]. The equivalent channel matrix $g_{2\times1}^{[2][0]}$ from TX[0] to RX[2] satisfies a formula: $g_{2\times1}^{[2][0]} = h_{2\times2}^{[2][0]} v_{2\times1}^{[0]}$. $g_{2\times1}^{[2][0]} = \begin{bmatrix} g_1^{[2][0]} \\ g_2^{[2][0]} \end{bmatrix}$.

0-3: TX[0] determines, based on the equivalent channel matrix $g_{2\times1}^{[2][0]}$ from TX[0] to RX[2], the equivalent channel ratio $g_2^{[2][0]}/g_1^{[2][0]}$ corresponding to TX[0].

As shown in FIG. 3, after TX[0] determines the equivalent channel ratio $g_2^{[2][0]}/g_1^{[2][0]}$ corresponding to TX[0], TX[0] may send, in step III in the manner recorded in S204 in the embodiment shown in FIG. 2, the equivalent channel ratio $g_2^{[2][0]}/g_1^{[2][0]}$ corresponding to TX[0].

According to the steps shown in FIG. 3, the foregoing equivalent channel ratio transmission and local calculation processes are repeatedly performed between the three TXs for a plurality of times, so that interference alignment of the communication system can be implemented.

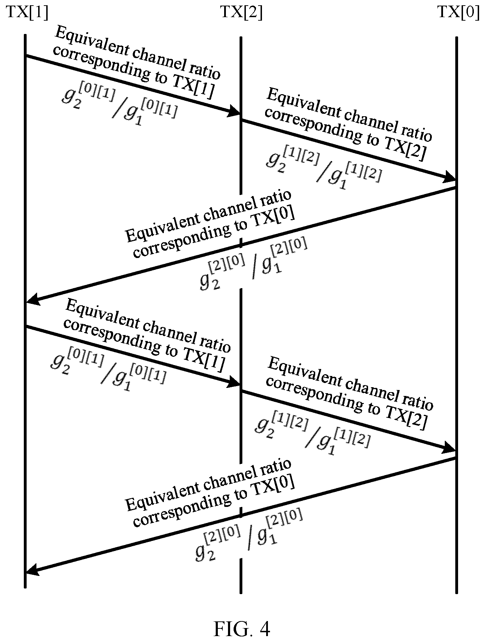

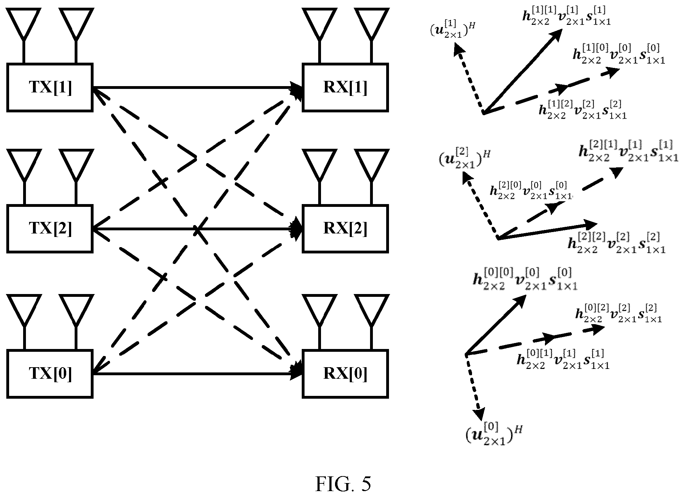

Refer to FIG. 4. The foregoing equivalent channel ratio transmission and local calculation processes are repeated between the three TXs in the communication system, and when the equivalent channel ratio transmission ending condition is satisfied (for example, an error between two precoding matrices consecutively calculated by a TX is less than the specified error threshold), equivalent channel ratio transmission is stopped. Then, TX[1], TX[2], and TX[0] may send signals by using respective precoding matrices that are finally calculated. Refer to FIG. 5. For each RX, interference signals sent by other TXs except a TX corresponding to the RX are overlapped, and are perpendicular to an equalization matrix of the RX. Therefore, each RX may obtain, through demodulation, a signal sent by the TX corresponding to the RX, to implement interference alignment of the communication system.

It can be learned from the foregoing descriptions that in this embodiment of this application, one equivalent channel ratio $g_2^{[k][l]}/g_1^{[k][l]}$, instead of a channel matrix $h_{2\times 2}^{[k][l]}$ including four values, is transmitted between TXs over an air interface. The equivalent channel ratio can reflect channel state information of the air interface and precoding matrix information of the TX. The TX in the communication system can implement interference alignment by transmitting one ratio each time. Apparently, compared with the conventional direct method, the method provided in this embodiment of this application can significantly reduce air interface transmission overheads.

Embodiment 2: It is assumed that the communication system includes three groups of transmit-receive pairs, each TX includes four antennas, each RX has four antennas, and each TX can send two signals, that is, $K = 3$, $N = 4$, $M = 4$, and $D = 2$.

In this communication system, when TXs in the three groups of transmit-receive pairs send respective signals by using a same time-frequency resource, RX[0], RX[1], and RX[2] receive signals sent by TX[0], TX[1], and TX[2]. When noise is not considered, the following three systems of linear equations may be obtained according to expressions of the signals received by RX[1], RX[2], and RX[0]:

$$\begin{cases} y_{4\times 1}^{[1]} = h_{4\times 4}^{[1][1]} v_{4\times 2}^{[1]} s_{2\times 1}^{[1]} + h_{4\times 4}^{[1][2]} v_{4\times 2}^{[2]} s_{2\times 1}^{[2]} + h_{4\times 4}^{[1][0]} v_{4\times 2}^{[0]} s_{2\times 1}^{[0]} \\ y_{4\times 1}^{[2]} = h_{4\times 4}^{[2][1]} v_{4\times 2}^{[1]} s_{2\times 1}^{[1]} + h_{4\times 4}^{[2][2]} v_{4\times 2}^{[2]} s_{2\times 1}^{[2]} + h_{4\times 4}^{[2][0]} v_{4\times 2}^{[0]} s_{2\times 1}^{[0]} \\ y_{4\times 1}^{[0]} = h_{4\times 4}^{[0][1]} v_{4\times 2}^{[1]} s_{2\times 1}^{[1]} + h_{4\times 4}^{[0][2]} v_{4\times 2}^{[2]} s_{2\times 1}^{[2]} + h_{4\times 4}^{[0][0]} v_{4\times 2}^{[0]} s_{2\times 1}^{[0]} \end{cases}$$

The following describes a first system of linear equations.

Four antennas of RX[1] respectively receive superimposed signals obtained after channel transmission is performed on signals sent by four antennas of TX[1], TX[2], and TX[0]. Therefore, the first system of linear equations may be expanded to obtain:

$$\begin{bmatrix} y_1^{[1]} \\ y_2^{[1]} \\ y_3^{[1]} \\ y_4^{[1]} \end{bmatrix} = \underbrace{\begin{bmatrix} h_{1,1}^{[1][1]} & h_{1,2}^{[1][1]} & h_{1,3}^{[1][1]} & h_{1,4}^{[1][1]} \\ h_{2,1}^{[1][1]} & h_{2,2}^{[1][1]} & h_{2,3}^{[1][1]} & h_{2,4}^{[1][1]} \\ h_{3,1}^{[1][1]} & h_{3,2}^{[1][1]} & h_{3,3}^{[1][1]} & h_{3,4}^{[1][1]} \\ h_{4,1}^{[1][1]} & h_{4,2}^{[1][1]} & h_{4,3}^{[1][1]} & h_{4,4}^{[1][1]} \end{bmatrix}}_{h_{4\times4}^{[1][1]}} \underbrace{\begin{bmatrix} v_{1,1}^{[1]} & v_{1,2}^{[1]} \\ v_{2,1}^{[1]} & v_{2,2}^{[1]} \\ v_{3,1}^{[1]} & v_{3,2}^{[1]} \\ v_{4,1}^{[1]} & v_{4,2}^{[1]} \end{bmatrix}}_{v_{4\times2}^{[1]}} \underbrace{\begin{bmatrix} s_1^{[1]} \\ s_2^{[1]} \end{bmatrix}}_{s_{2\times1}^{[1]}}$$

$$+ \underbrace{\begin{bmatrix} h_{1,1}^{[1][2]} & h_{1,2}^{[1][2]} & h_{1,3}^{[1][2]} & h_{1,4}^{[1][2]} \\ h_{2,1}^{[1][2]} & h_{2,2}^{[1][2]} & h_{2,3}^{[1][2]} & h_{2,4}^{[1][2]} \\ h_{3,1}^{[1][2]} & h_{3,2}^{[1][2]} & h_{3,3}^{[1][2]} & h_{3,4}^{[1][2]} \\ h_{4,1}^{[1][2]} & h_{4,2}^{[1][2]} & h_{4,3}^{[1][2]} & h_{4,4}^{[1][2]} \end{bmatrix}}_{h_{4\times4}^{[1][2]}} \underbrace{\begin{bmatrix} v_{1,1}^{[2]} & v_{1,2}^{[2]} \\ v_{2,1}^{[2]} & v_{2,2}^{[2]} \\ v_{3,1}^{[2]} & v_{3,2}^{[2]} \\ v_{4,1}^{[2]} & v_{4,2}^{[2]} \end{bmatrix}}_{v_{4\times2}^{[2]}} \underbrace{\begin{bmatrix} s_1^{[2]} \\ s_2^{[2]} \end{bmatrix}}_{s_{2\times1}^{[2]}}$$

$$+ \underbrace{\begin{bmatrix} h_{1,1}^{[1][0]} & h_{1,2}^{[1][0]} & h_{1,3}^{[1][0]} & h_{1,4}^{[1][0]} \\ h_{2,1}^{[1][0]} & h_{2,2}^{[1][0]} & h_{2,3}^{[1][0]} & h_{2,4}^{[1][0]} \\ h_{3,1}^{[1][0]} & h_{3,2}^{[1][0]} & h_{3,3}^{[1][0]} & h_{3,4}^{[1][0]} \\ h_{4,1}^{[1][0]} & h_{4,2}^{[1][0]} & h_{4,3}^{[1][0]} & h_{4,4}^{[1][0]} \end{bmatrix}}_{h_{4\times4}^{[1][0]}} \underbrace{\begin{bmatrix} v_{1,1}^{[0]} & v_{1,2}^{[0]} \\ v_{2,1}^{[0]} & v_{2,2}^{[0]} \\ v_{3,1}^{[0]} & v_{3,2}^{[0]} \\ v_{4,1}^{[0]} & v_{4,2}^{[0]} \end{bmatrix}}_{v_{4\times2}^{[0]}} \underbrace{\begin{bmatrix} s_1^{[0]} \\ s_2^{[0]} \end{bmatrix}}_{s_{2\times1}^{[0]}}$$

$$= \underbrace{\begin{bmatrix} g_{1,1}^{[1][1]} & g_{1,2}^{[1][1]} \\ g_{2,1}^{[1][1]} & g_{2,2}^{[1][1]} \\ g_{3,1}^{[1][1]} & g_{3,2}^{[1][1]} \\ g_{4,1}^{[1][1]} & g_{4,2}^{[1][1]} \end{bmatrix}}_{g_{4\times2}^{[1][1]}} \underbrace{\begin{bmatrix} s_1^{[1]} \\ s_2^{[1]} \end{bmatrix}}_{s_{2\times1}^{[1]}} + \underbrace{\begin{bmatrix} g_{1,1}^{[1][2]} & g_{1,2}^{[1][2]} \\ g_{2,1}^{[1][2]} & g_{2,2}^{[1][2]} \\ g_{3,1}^{[1][2]} & g_{3,2}^{[1][2]} \\ g_{4,1}^{[1][2]} & g_{4,2}^{[1][2]} \end{bmatrix}}_{g_{4\times2}^{[1][2]}} \underbrace{\begin{bmatrix} s_1^{[2]} \\ s_2^{[2]} \end{bmatrix}}_{s_{2\times1}^{[2]}} + \underbrace{\begin{bmatrix} g_{1,1}^{[1][0]} & g_{1,2}^{[1][0]} \\ g_{2,1}^{[1][0]} & g_{2,2}^{[1][0]} \\ g_{3,1}^{[1][0]} & g_{3,2}^{[1][0]} \\ g_{4,1}^{[1][0]} & g_{4,2}^{[1][0]} \end{bmatrix}}_{g_{4\times2}^{[1][0]}} \underbrace{\begin{bmatrix} s_1^{[0]} \\ s_2^{[0]} \end{bmatrix}}_{s_{2\times1}^{[0]}}$$

$$= \begin{bmatrix} g_{1,1}^{[1][1]} & g_{1,2}^{[1][1]} & g_{1,1}^{[1][2]} & g_{1,2}^{[1][2]} & g_{1,1}^{[1][0]} & g_{1,2}^{[1][0]} \\ g_{2,1}^{[1][1]} & g_{2,2}^{[1][1]} & g_{2,1}^{[1][2]} & g_{2,2}^{[1][2]} & g_{2,1}^{[1][0]} & g_{2,2}^{[1][0]} \\ g_{3,1}^{[1][1]} & g_{3,2}^{[1][1]} & g_{3,1}^{[1][2]} & g_{3,2}^{[1][2]} & g_{3,1}^{[1][0]} & g_{3,2}^{[1][0]} \\ g_{4,1}^{[1][1]} & g_{4,2}^{[1][1]} & g_{4,1}^{[1][2]} & g_{4,2}^{[1][2]} & g_{4,1}^{[1][0]} & g_{4,2}^{[1][0]} \end{bmatrix} \begin{bmatrix} s_1^{[1]} \\ s_2^{[1]} \\ s_1^{[2]} \\ s_2^{[2]} \\ s_1^{[0]} \\ s_2^{[0]} \end{bmatrix}$$

It can be learned from the expansion of the first system of linear equations that the first system of linear equations includes four equations and six unknown numbers. Because a quantity of unknown numbers is greater than a quantity of equations, generally, two signals $s_1^{[1]}, s_2^{[1]}$ sent by TX[1] cannot be uniquely determined based on signals $y_1^{[1]}, y_2^{[1]}, y_3^{[1]}, y_4^{[1]}$ received by the four antennas of RX[1].

RX[1] can uniquely determine the two signals $s_1^{[1]}, s_2^{[1]}$ sent by TX[1] when and only when a coefficient matrix of the first system of linear equations satisfies the following two interference alignment conditions:

$$\begin{cases} rank \begin{pmatrix} g_{1,1}^{[1][1]} & g_{1,2}^{[1][1]} & g_{1,1}^{[1][2]} & g_{1,2}^{[1][2]} & g_{1,1}^{[1][0]} & g_{1,2}^{[1][0]} \\ g_{2,1}^{[1][1]} & g_{2,2}^{[1][1]} & g_{2,1}^{[1][2]} & g_{2,2}^{[1][2]} & g_{2,1}^{[1][0]} & g_{2,2}^{[1][0]} \\ g_{3,1}^{[1][1]} & g_{3,2}^{[1][1]} & g_{3,1}^{[1][2]} & g_{3,2}^{[1][2]} & g_{3,1}^{[1][0]} & g_{3,2}^{[1][0]} \\ g_{4,1}^{[1][1]} & g_{4,2}^{[1][1]} & g_{4,1}^{[1][2]} & g_{4,2}^{[1][2]} & g_{4,1}^{[1][0]} & g_{4,2}^{[1][0]} \end{pmatrix} = M = 4 \\ \\ rank \begin{pmatrix} g_{1,1}^{[1][2]} & g_{1,2}^{[1][2]} & g_{1,1}^{[1][0]} & g_{1,2}^{[1][0]} \\ g_{2,1}^{[1][2]} & g_{2,2}^{[1][2]} & g_{2,1}^{[1][0]} & g_{2,2}^{[1][0]} \\ g_{3,1}^{[1][2]} & g_{3,2}^{[1][2]} & g_{3,1}^{[1][0]} & g_{3,2}^{[1][0]} \\ g_{4,1}^{[1][2]} & g_{4,2}^{[1][2]} & g_{4,1}^{[1][0]} & g_{4,2}^{[1][0]} \end{pmatrix} = M - D = 2 \end{cases}$$

For a random channel, if the second interference alignment condition is satisfied, the first interference alignment condition is satisfied at a probability of 1. Therefore, the first interference alignment condition may not be considered in this embodiment of this application temporarily. Further, according to the second interference alignment condition, it may be obtained that:

$$\begin{bmatrix} g_{2,1}^{[1][0]}/g_{1,1}^{[1][0]} & g_{2,2}^{[1][0]}/g_{1,2}^{[1][0]} \\ g_{3,1}^{[1][0]}/g_{1,1}^{[1][0]} & g_{3,2}^{[1][0]}/g_{1,2}^{[1][0]} \\ g_{4,1}^{[1][0]}/g_{1,1}^{[1][0]} & g_{4,2}^{[1][0]}/g_{1,2}^{[1][0]} \end{bmatrix} = \begin{bmatrix} g_{2,1}^{[1][2]}/g_{1,1}^{[1][2]} & g_{2,2}^{[1][2]}/g_{1,2}^{[1][2]} \\ g_{3,1}^{[1][2]}/g_{1,1}^{[1][2]} & g_{3,2}^{[1][2]}/g_{1,2}^{[1][2]} \\ g_{4,1}^{[1][2]}/g_{1,1}^{[1][2]} & g_{4,2}^{[1][2]}/g_{1,2}^{[1][2]} \end{bmatrix} \underbrace{\begin{bmatrix} k_{1,1}^{[1][2]} & k_{1,2}^{[1][2]} \\ k_{2,1}^{[1][2]} & k_{2,2}^{[1][2]} \end{bmatrix}}_{k_{2\times2}^{[1][2]}}$$

In the formula,

$$k_{2\times2}^{[1][2]} = \begin{bmatrix} k_{1,1}^{[1][2]} & k_{1,2}^{[1][2]} \\ k_{2,1}^{[1][2]} & k_{2,2}^{[1][2]} \end{bmatrix} \in \mathbb{C}^{2\times2}.$$

In addition, normalization processing may be performed on a precoding matrix of TX[1] (because $D = 1$, in this embodiment of this application, the precoding matrix may also be referred to as a precoding vector), and scaling of an equivalent channel matrix in a same proportion does not change a rank of the equivalent channel matrix. In conclusion, TX [2] only needs to transfer equivalent channel ratios $g_{2,1}^{[1][2]}/g_{1,1}^{[1][2]}, g_{3,1}^{[1][2]}/g_{1,1}^{[1][2]}, g_{4,1}^{[1][2]}/g_{1,1}^{[1][2]}, g_{2,2}^{[1][2]}/g_{1,2}^{[1][2]}, g_{3,2}^{[1][2]}/g_{1,2}^{[1][2]}, g_{4,2}^{[1][2]}/g_{1,2}^{[1][2]}$ to TX[0], and after receiving the ratios, TX[0] performs linear transformation and calculates its own precoding matrix $v_{4\times2}^{[0]}$, so that the interference alignment condition of the first system of linear equations can be satisfied, and interference alignment on RX[1] can be implemented.

Based on the foregoing descriptions, after determining the precoding matrix $v_{4\times2}^{[0]}$, TX[0] substitutes the precoding matrix into a second system of linear equations, and transfers finally obtained equivalent channel ratios $g_{2,1}^{[2][0]}/g_{1,1}^{[2][0]}, g_{3,1}^{[2][0]}/g_{1,1}^{[2][0]}, g_{4,1}^{[2][0]}/g_{1,1}^{[2][0]}, g_{2,2}^{[2][0]}/g_{1,2}^{[2][0]}, g_{3,2}^{[2][0]}/g_{1,2}^{[2][0]}, g_{4,2}^{[2][0]}/g_{1,2}^{[2][0]}$ to TX[1]. After receiving the ratios, TX[1] performs linear transformation and calculates its own precoding matrix $v_{4\times2}^{[1]}$, so that an interference alignment condition of the second system of linear equations can be satisfied, and interference alignment on RX[2] can be implemented.

Further, after determining the precoding matrix $v_{4\times2}^{[1]}$, TX[1] substitutes the precoding matrix into a third system of linear equations, and transfers finally obtained equivalent channel ratios $g_{2,1}^{[0][1]}/g_{1,1}^{[0][1]}, g_{3,1}^{[0][1]}/g_{1,1}^{[0][1]}, g_{4,1}^{[0][1]}/g_{1,1}^{[0][1]}, g_{2,2}^{[0][1]}/g_{1,2}^{[0][1]}, g_{3,2}^{[0][1]}/g_{1,2}^{[0][1]}, g_{4,2}^{[0][1]}/g_{1,2}^{[0][1]}$ to TX[2]. After receiving the ratios, TX[2] performs linear transformation and calculates its own precoding matrix $v_{4\times2}^{[2]}$, so that an interference alignment condition of the third system of linear equations can be satisfied, and interference alignment on RX[0] can be implemented.

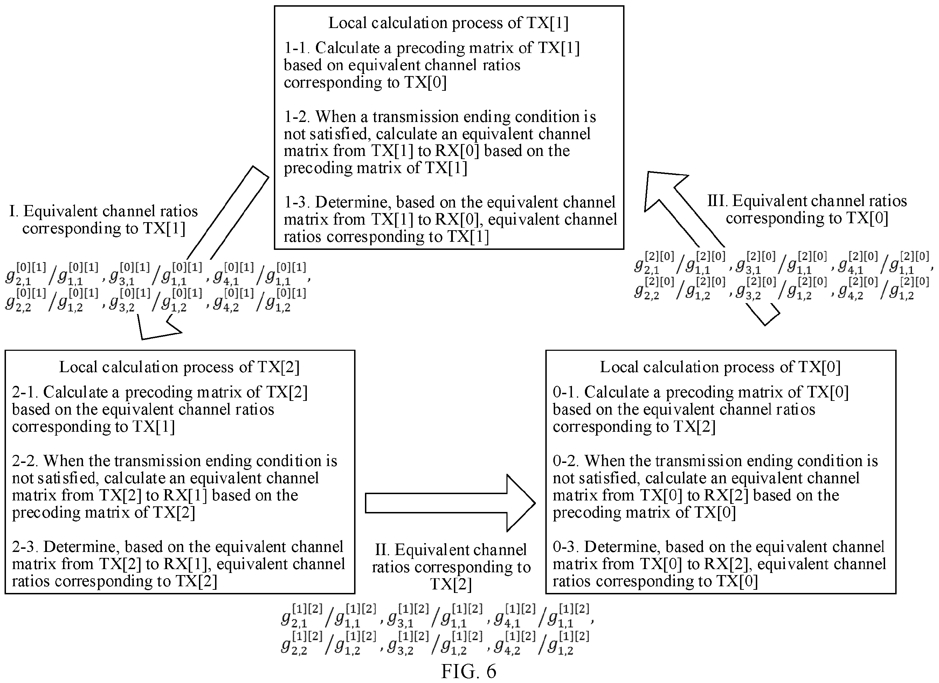

The following describes, in detail with reference to FIG. 6, an equivalent channel ratio transmission process and a local calculation process of each TX in this embodiment. Similar to Embodiment 1, the three TXs in the communication system may sequentially transmit corresponding equivalent channel ratios for a plurality of cycles, to implement interference alignment of the communication system.

As shown in FIG. 6, a local calculation process of TX[1] includes 1-1 to 1-3.

1-1: After receiving the equivalent channel ratios corresponding to TX[0], TX[1] calculates the precoding matrix $v_{2\times1}^{[1]}$ of TX[1] based on the equivalent channel ratios corresponding to TX[0]. The equivalent channel ratios corresponding to TX[0] are $g_{2,1}^{[2][0]}/g_{1,1}^{[2][0]}, g_{3,1}^{[2][0]}/g_{1,1}^{[2][0]}, g_{4,1}^{[2][0]}/g_{1,1}^{[2][0]}, g_{2,2}^{[2][0]}/g_{1,2}^{[2][0]}, g_{3,2}^{[2][0]}/g_{1,2}^{[2][0]}, g_{4,2}^{[2][0]}/g_{1,2}^{[2][0]}$ .

In this step, TX[1] may first determine an equivalent channel matrix

$$g_{4\times2}^{[2][0]} = \begin{bmatrix} g_{1,1}^{[2][0]} & g_{1,2}^{[2][0]} \\ g_{2,1}^{[2][0]} & g_{2,2}^{[2][0]} \\ g_{3,1}^{[2][0]} & g_{3,2}^{[2][0]} \\ g_{4,1}^{[2][0]} & g_{4,2}^{[2][0]} \end{bmatrix}$$

from TX[0] to RX[2] based on the equivalent channel ratios corresponding to TX[0].

Then, TX[1] calculates the precoding matrix $v_{4\times2}^{[1]}$ of TX[1] based on the equivalent channel matrix $g_{4\times2}^{[2][0]}$ from TX[0] to RX[2] and a channel matrix $h_{4\times4}^{[2][1]}$ from TX[1] to RX[2] in channel state information of TX[1].

The precoding matrix $v_{4\times2}^{[1]}$ of TX[1] satisfies a formula: $v_{4\times2}^{[1]} = (h_{4\times4}^{[2][1]})^{-1} g_{4\times2}^{[2][0]} k_{2\times2}^{[2][0]}$ .

In the formula, $k_{2\times2}^{[2][0]} = \begin{bmatrix} k_{1,1}^{[2][0]} & k_{1,2}^{[2][0]} \\ k_{2,1}^{[2][0]} & k_{2,2}^{[2][0]} \end{bmatrix} \in \mathbb{C}^{2\times2}$ .

1-2: When determining that the equivalent channel ratio transmission ending condition is not satisfied, TX[1] calculates an equivalent channel matrix $g_{4\times2}^{[0][1]}$ from TX[1] to RX[0] based on the precoding matrix $v_{4\times2}^{[1]}$ of TX[1], to calculate the equivalent channel ratios corresponding to TX[1].

In this embodiment, it is assumed that the equivalent channel ratio transmission ending condition is that an error between two precoding matrices calculated consecutively is less than the specified error threshold. In other words, TX[1] may calculate the equivalent channel matrix $g_{4\times2}^{[0][1]}$ from TX[1] to RX[0] when determining that an error between $v_{4\times2}^{[1]}$ obtained in step 1-1 and a precoding matrix (denoted as $\dot{v}_{4\times2}^{[1]}$) previously obtained through calculation is less than the specified error threshold.

For example, when determining that $v_{4\times2}^{[1]}$ and $\dot{v}_{4\times2}^{[1]}$ satisfy a formula $\left\| v_{4\times2}^{[1]} \text{diag}\left\{ e^{j\angle\left(v_{4\times2}^{[1]}\right)^H \dot{v}_{4\times2}^{[1]}} \right\} - \dot{v}_{4\times2}^{[1]} \right\|_2 > \varepsilon$ , TX[1] performs step 1-2, where $\varepsilon$ is the specified error threshold.

Then, TX[1] may calculate the equivalent channel matrix $g_{4\times2}^{[0][1]}$ from TX[1] to RX[0] based on the precoding matrix $v_{4\times2}^{[1]}$ of TX[1] and a channel matrix $h_{4\times4}^{[0][1]}$ from TX[1] to RX[0] in the channel state information of TX[1]. The equivalent channel matrix $g_{4\times2}^{[0][1]}$ from TX[1] to RX[0] satisfies a formula: $g_{4\times2}^{[0][1]} = h_{4\times4}^{[0][1]} v_{4\times2}^{[1]}$ .

$$g_{4\times2}^{[0][1]} = \begin{bmatrix} g_{1,1}^{[0][1]} & g_{1,2}^{[0][1]} \\ g_{2,1}^{[0][1]} & g_{2,2}^{[0][1]} \\ g_{3,1}^{[0][1]} & g_{3,2}^{[0][1]} \\ g_{4,1}^{[0][1]} & g_{4,2}^{[0][1]} \end{bmatrix}.$$

1-3: TX[1] determines, based on the equivalent channel matrix $g_{4\times2}^{[0][1]}$ from TX[1] to RX[0], the equivalent channel ratios $g_{2,1}^{[0][1]}/g_{1,1}^{[0][1]}, g_{3,1}^{[0][1]}/g_{1,1}^{[0][1]}, g_{4,1}^{[0][1]}/g_{1,1}^{[0][1]}, g_{2,2}^{[0][1]}/g_{1,2}^{[0][1]}, g_{3,2}^{[0][1]}/g_{1,2}^{[0][1]}, g_{4,2}^{[0][1]}/g_{1,2}^{[0][1]}$ corresponding to TX[1].

As shown in FIG. 6, after TX[1] determines the equivalent channel ratios corresponding to TX[1], TX[1] may send, in step I in the manner recorded in S204 in the embodiment shown in FIG. 2, the equivalent channel ratios corresponding to TX[1].

As shown in FIG. 6, a local calculation process of TX[2] includes 2-1 to 2-3.

2-1: After receiving the equivalent channel ratios corresponding to TX[1], TX[2] calculates the precoding matrix $v_{2\times1}^{[2]}$ of TX[2] based on the equivalent channel ratios corresponding to TX[1]. The equivalent channel ratios corresponding to TX[1] are $g_{2,1}^{[0][1]}/g_{1,1}^{[0][1]}, g_{3,1}^{[0][1]}/g_{1,1}^{[0][1]}, g_{4,1}^{[0][1]}/g_{1,1}^{[0][1]}, g_{2,2}^{[0][1]}/g_{1,2}^{[0][1]}, g_{3,2}^{[0][1]}/g_{1,2}^{[0][1]}, g_{4,2}^{[0][1]}/g_{1,2}^{[0][1]}$.

$$g_{4\times2}^{[0][1]} = \begin{bmatrix} g_{1,1}^{[0][1]} & g_{1,2}^{[0][1]} \\ g_{2,1}^{[0][1]} & g_{2,2}^{[0][1]} \\ g_{3,1}^{[0][1]} & g_{3,2}^{[0][1]} \\ g_{4,1}^{[0][1]} & g_{4,2}^{[0][1]} \end{bmatrix}$$

In this step, TX[2] may first determine an equivalent channel matrix $g_{4\times2}^{[0][1]}$ from TX[1] to RX[0] based on the equivalent channel ratios corresponding to TX[1].

Then, TX[2] calculates the precoding matrix $v_{4\times2}^{[2]}$ of TX[2] based on the equivalent channel matrix $g_{4\times2}^{[0][1]}$ from TX[1] to RX[0] and a channel matrix $h_{4\times4}^{[0][2]}$ from TX[2] to RX[0] in channel state information of TX[2].

The precoding matrix $v_{4\times2}^{[2]}$ of TX[2] satisfies a formula: $v_{4\times2}^{[2]} = (h_{4\times4}^{[0][2]})^{-1}g_{4\times2}^{[0][1]}k_{2\times2}^{[0][1]}$.

In the formula, $k_{2\times2}^{[0][1]} = \begin{bmatrix} k_{1,1}^{[0][1]} & k_{1,2}^{[0][1]} \\ k_{2,1}^{[0][1]} & k_{2,2}^{[0][1]} \end{bmatrix} \in \mathbb{C}^{2\times2}$.

2-2: When determining that the equivalent channel ratio transmission ending condition is not satisfied, TX[2] calculates an equivalent channel matrix $g_{4\times2}^{[1][2]}$ from TX[2] to RX[1] based on the precoding matrix $v_{4\times2}^{[2]}$ of TX[2], to calculate the equivalent channel ratios corresponding to TX[2].

Similar to step 1-2, TX[2] may calculate the equivalent channel matrix $g_{4\times2}^{[1][2]}$ from TX[2] to RX[1] when determining that an error between $v_{4\times2}^{[2]}$ obtained in step 2-1 and a precoding matrix (denoted as $\dot{v}_{4\times2}^{[2]}$) previously obtained through calculation is less than the specified error threshold.

For example, when determining that $v_{4\times2}^{[2]}$ and $\dot{v}_{4\times2}^{[2]}$ satisfy a formula $\left\|v_{4\times2}^{[2]}\text{diag}\left\{e^{j\angle\left(v_{4\times2}^{[2]}\right)^{H}\dot{v}_{4\times2}^{[2]}}\right\} - \dot{v}_{4\times2}^{[2]}\right\|_{2} > \varepsilon$, TX[2] performs step 2-2.

Then, TX[2] may calculate the equivalent channel matrix $g_{4\times2}^{[1][2]}$ from TX[2] to RX[1] based on the precoding

matrix $v_{4\times2}^{[2]}$ of TX[2] and a channel matrix $h_{4\times4}^{[1][2]}$ from TX[2] to RX[1] in the channel state information of TX[2]. The equivalent channel matrix $g_{4\times2}^{[1][2]}$ from TX[2] to RX[1] satisfies a formula: $g_{4\times2}^{[1][2]} = h_{4\times4}^{[1][2]} v_{4\times2}^{[2]}$ .

$$g_{4\times2}^{[1][2]} = \begin{bmatrix} g_{1,1}^{[1][2]} & g_{1,2}^{[1][2]} \\ g_{2,1}^{[1][2]} & g_{2,2}^{[1][2]} \\ g_{3,1}^{[1][2]} & g_{3,2}^{[1][2]} \\ g_{4,1}^{[1][2]} & g_{4,2}^{[1][2]} \end{bmatrix} .$$

2-3: TX[2] determines, based on the equivalent channel matrix $g_{4\times2}^{[1][2]}$ from TX[2] to RX[1], the equivalent channel ratios $g_{2,1}^{[1][2]}/g_{1,1}^{[1][2]} , g_{3,1}^{[1][2]}/g_{1,1}^{[1][2]} , g_{4,1}^{[1][2]}/g_{1,1}^{[1][2]} , g_{2,2}^{[1][2]}/g_{1,2}^{[1][2]} , g_{3,2}^{[1][2]}/g_{1,2}^{[1][2]} , g_{4,2}^{[1][2]}/g_{1,2}^{[1][2]}$ corresponding to TX[2].

As shown in FIG. 6, after TX[2] determines the equivalent channel ratios corresponding to TX[2], TX[2] may send, in step II in the manner recorded in S204 in the embodiment shown in FIG. 2, the equivalent channel ratios corresponding to TX[2].

As shown in FIG. 6, a local calculation process of TX[0] includes 0-1 to 0-3.

0-1: After receiving the equivalent channel ratios corresponding to TX[2], TX[0] calculates the precoding matrix $v_{2\times1}^{[0]}$ of TX[0] based on the equivalent channel ratios corresponding to TX[2]. The equivalent channel ratios corresponding to TX[2] are $g_{2,1}^{[1][2]}/g_{1,1}^{[1][2]} , g_{3,1}^{[1][2]}/g_{1,1}^{[1][2]} , g_{4,1}^{[1][2]}/g_{1,1}^{[1][2]} , g_{2,2}^{[1][2]}/g_{1,2}^{[1][2]} , g_{3,2}^{[1][2]}/g_{1,2}^{[1][2]} , g_{4,2}^{[1][2]}/g_{1,2}^{[1][2]}$ .

$$g_{4\times2}^{[1][2]} = \begin{bmatrix} g_{1,1}^{[1][2]} & g_{1,2}^{[1][2]} \\ g_{2,1}^{[1][2]} & g_{2,2}^{[1][2]} \\ g_{3,1}^{[1][2]} & g_{3,2}^{[1][2]} \\ g_{4,1}^{[1][2]} & g_{4,2}^{[1][2]} \end{bmatrix}$$

In this step, TX[0] may first determine an equivalent channel matrix from TX[2] to RX[1] based on the equivalent channel ratios corresponding to TX[2].

Then, TX[0] calculates the precoding matrix $v_{4\times2}^{[0]}$ of TX[0] based on the equivalent channel matrix $g_{4\times2}^{[1][2]}$ from TX[2] to RX[1] and a channel matrix $h_{4\times4}^{[1][0]}$ from TX[0] to RX[1] in channel state information of TX[0].

The precoding matrix $v_{4\times2}^{[0]}$ of TX[0] satisfies a formula: $v_{4\times2}^{[0]} = (h_{4\times4}^{[1][0]})^{-1} g_{4\times2}^{[1][2]} k_{2\times2}^{[1][2]}$ .

In the formula, $k_{2\times2}^{[1][2]} = \begin{bmatrix} k_{1,1}^{[1][2]} & k_{1,2}^{[1][2]} \\ k_{2,1}^{[1][2]} & k_{2,2}^{[1][2]} \end{bmatrix} \in \mathbb{C}^{2\times2}$ .

0-2: When determining that the equivalent channel ratio transmission ending condition is not satisfied, TX[0] calculates an equivalent channel matrix $g_{4\times2}^{[2][0]}$ from TX[0] to RX[2] based on the precoding matrix $v_{4\times2}^{[0]}$ of TX[0], to calculate the equivalent channel ratios corresponding to TX[0].

Similar to step 1-2, TX[0] may calculate the equivalent channel matrix $g_{4\times2}^{[2][0]}$ from TX[0] to RX[2] when determining that an error between $v_{4\times2}^{[0]}$ obtained in step 0-1 and a precoding matrix (denoted as $\dot{v}_{4\times2}^{[0]}$ ) previously obtained through calculation is less than the specified error threshold.

For example, when determining that $v_{4\times2}^{[0]}$ and $\dot{v}_{4\times2}^{[0]}$ satisfy a formula

$$\left\| v_{4\times2}^{[0]} \mathrm{diag}\left\{ e^{j\angle\left(v_{4\times2}^{[0]}\right)^H v_{4\times2}^{[0]}} \right\} - \dot{v}_{4\times2}^{[0]} \right\|_2 > \varepsilon$$

, TX[0] performs step 0-2.

Then, TX[0] may calculate the equivalent channel matrix $g_{4\times2}^{[2][0]}$ from TX[0] to RX[2] based on the precoding matrix $v_{4\times2}^{[0]}$ of TX[0] and a channel matrix $h_{4\times4}^{[2][0]}$ from TX[0] to RX[2] in the channel state information of TX[0]. The equivalent channel matrix $g_{4\times2}^{[2][0]}$ from TX[0] to RX[2] satisfies a formula: $g_{4\times2}^{[2][0]} = h_{4\times4}^{[2][0]} v_{4\times2}^{[0]}$.

$$g_{4\times2}^{[2][0]} = \begin{bmatrix} g_{1,1}^{[2][0]} & g_{1,2}^{[2][0]} \\ g_{2,1}^{[2][0]} & g_{2,2}^{[2][0]} \\ g_{3,1}^{[2][0]} & g_{3,2}^{[2][0]} \\ g_{4,1}^{[2][0]} & g_{4,2}^{[2][0]} \end{bmatrix}.$$

0-3: TX[0] determines, based on the equivalent channel matrix $g_{4\times2}^{[2][0]}$ from TX[0] to RX[2], the equivalent channel ratios $g_{2,1}^{[2][0]}\big/g_{1,1}^{[2][0]}, g_{3,1}^{[2][0]}\big/g_{1,1}^{[2][0]}, g_{4,1}^{[2][0]}\big/g_{1,1}^{[2][0]}, g_{2,2}^{[2][0]}\big/g_{1,2}^{[2][0]}, g_{3,2}^{[2][0]}\big/g_{1,2}^{[2][0]}, g_{4,2}^{[2][0]}\big/g_{1,2}^{[2][0]}$. corresponding to TX[0].

As shown in FIG. 6, after TX[0] determines the equivalent channel ratios corresponding to TX[0], TX[0] may send, in step III in the manner recorded in S204 in the embodiment shown in FIG. 2, the equivalent channel ratios corresponding to TX[0].

According to the steps shown in FIG. 6, the foregoing equivalent channel ratio transmission and local calculation processes are repeated between the three TXs for a plurality of times, and when the equivalent channel ratio transmission ending condition is satisfied (for example, an error between two precoding matrices consecutively calculated by a TX is less than the specified error threshold), equivalent channel ratio transmission is stopped. Then, TX[1], TX[2], and TX[0] may send signals by using respective precoding matrices that are finally calculated. Similar to FIG. 5, for each RX, interference signals sent by other TXs except a TX corresponding to the RX are overlapped, and are perpendicular to an equalization matrix of the RX. Therefore, each RX may obtain, through demodulation, a signal sent by the TX corresponding to the RX, to implement interference alignment of the communication system.

It can be learned from the foregoing descriptions that in this embodiment of this application, six equivalent channel ratios $g_{21}^{[k][l]}\big/g_{11}^{[k][l]}, g_{31}^{[k][l]}\big/g_{11}^{[k][l]}, g_{41}^{[k][l]}\big/g_{11}^{[k][l]}, g_{22}^{[k][l]}\big/g_{12}^{[k][l]}, g_{32}^{[k][l]}\big/g_{12}^{[k][l]}, g_{42}^{[k][l]}\big/g_{12}^{[k][l]}$, instead of a channel matrix $h_{4\times4}^{[k][l]}$ including 16 values, are transmitted between TXs over an air interface. The TX in the communication system can implement interference alignment by transmitting six ratios each time. Apparently, compared with the conventional direct method, the method provided in this embodiment of this application can significantly reduce air interface transmission overheads.

Embodiment 3: Based on a common feature of the methods provided in Embodiment 1 and Embodiment 2, this application further provides Embodiment 3. In Embodiment 3, generally, it is assumed that the communication system includes three groups of transmit-receive pairs, each TX can send $D$ signals, each TX includes $2D$ antennas, and each RX includes $2D$ antennas, that is, $N = M = 2D$, and $K = 3$.

The following describes any equivalent channel ratio transmission process in Embodiment 3.

TX[a] sends equivalent channel ratios corresponding to TX[a]: $g_{2,1}^{[(a-1+K)\,mod\,K][a]}\big/g_{1,1}^{[(a-1+K)\,mod\,K][a]}$, $g_{3,1}^{[(a-1+K)\,mod\,K][a]}\big/g_{1,1}^{[(a-1+K)\,mod\,K][a]}$ ..., $g_{2D,1}^{[(a-1+K)\,mod\,K][a]}\big/g_{1,1}^{[(a-1+K)\,mod\,K][a]}$, $g_{2,2}^{[(a-1+K)\,mod\,K][a]}\big/g_{1,2}^{[(a-1+K)\,mod\,K][a]}$, $g_{3,2}^{[(a-1+K)\,mod\,K][a]}\big/g_{1,2}^{[(a-1+K)\,mod\,K][a]}$, ..., $g_{2D,2}^{[(a-1+K)\,mod\,K][a]}\big/g_{1,2}^{[(a-1+K)\,mod\,K][a]}$, ..., $g_{2,D}^{[(a-1+K)\,mod\,K][a]}\big/g_{1,D}^{[(a-1+K)\,mod\,K][a]}$, $g_{3,D}^{[(a-1+K)\,mod\,K][a]}\big/g_{1,D}^{[(a-1+K)\,mod\,K][a]}$, ..., and $g_{2D,D}^{[(a-1+K)\,mod\,K][a]}\big/g_{1,D}^{[(a-1+K)\,mod\,K][a]}$.

$a \in \{0,1,2\}$. A quantity of equivalent channel ratios sent by TX[a] is $(M - 1)D = (2D - 1)D$.

After receiving the equivalent channel ratios corresponding to TX[a], TX[b] calculates a precoding matrix $v_{2D \times D}^{[b]}$ of TX[b] based on the equivalent channel ratios corresponding to TX[a]. $b = (a + 1) \bmod K$. The precoding matrix $v_{2D \times D}^{[b]}$ of TX[b] satisfies the following formula:

$$v_{2D \times D}^{[b]} = (h_{2D \times 2D}^{[(a-1+K) \bmod K][b]})^{-1} g_{2D \times D}^{[(a-1+K) \bmod K][a]} k_{D \times D}^{[(a-1+K) \bmod K][a]}$$

$g_{2D \times D}^{[(a-1+K) \bmod K][a]}$ is obtained by TX[b] based on the equivalent channel ratios corresponding to TX[a].

$$g_{2D \times D}^{[(a-1+K) \bmod K][a]} = \begin{bmatrix} g_{1,1}^{[(a-1+K) \bmod K][a]} & g_{1,2}^{[(a-1+K) \bmod K][a]} & \cdots & g_{1,D}^{[(a-1+K) \bmod K][a]} \\ g_{2,1}^{[(a-1+K) \bmod K][a]} & g_{2,2}^{[(a-1+K) \bmod K][a]} & \cdots & g_{2,D}^{[(a-1+K) \bmod K][a]} \\ g_{3,1}^{[(a-1+K) \bmod K][a]} & g_{3,2}^{[(a-1+K) \bmod K][a]} & \cdots & g_{3,D}^{[(a-1+K) \bmod K][a]} \\ \vdots & \vdots & \vdots & \vdots \\ g_{2D,1}^{[(a-1+K) \bmod K][a]} & g_{2D,2}^{[(a-1+K) \bmod K][a]} & \cdots & g_{2D,D}^{[(a-1+K) \bmod K][a]} \end{bmatrix}.$$

$h_{2D \times 2D}^{[(a-1+K) \bmod K][b]}$ is a channel matrix from TX[b] to RX[(a - 1 + K) mod K] in channel state information of TX[b]. $k_{D \times D}^{[(a-1+K) \bmod K][a]} \in \mathbb{C}^{D \times D}$.

When determining that the equivalent channel ratio transmission ending condition is not satisfied, TX[b] calculates an equivalent channel matrix $g_{2D \times D}^{[a][b]}$ from TX[b] to RX[a] based on the precoding matrix $v_{2D \times D}^{[b]}$ obtained through calculation and a channel matrix $h_{2D \times 2D}^{[a][b]}$ from TX[b] to RX[a] in the channel state information of TX[b]. The equivalent channel matrix $g_{2D \times D}^{[a][b]}$ from TX[b] to RX[a] satisfies the following formula:

$$g_{2D \times D}^{[a][b]} = h_{2D \times 2D}^{[a][b]} v_{2D \times D}^{[b]}$$

$$g_{2D \times D}^{[a][b]} = \begin{bmatrix} g_{1,1}^{[a][b]} & g_{1,2}^{[a][b]} & \cdots & g_{1,D}^{[a][b]} \\ g_{2,1}^{[a][b]} & g_{2,2}^{[a][b]} & \cdots & g_{2,D}^{[a][b]} \\ g_{3,1}^{[a][b]} & g_{3,2}^{[a][b]} & \cdots & g_{3,D}^{[a][b]} \\ \vdots & \vdots & \vdots & \vdots \\ g_{2D,1}^{[a][b]} & g_{2D,2}^{[a][b]} & \cdots & g_{2D,D}^{[a][b]} \end{bmatrix}.$$

Finally, TX[b] may determine, based on the equivalent channel matrix $g_{2D \times D}^{[a][b]}$ from TX[b] to RX[a], an equivalent channel ratio corresponding to TX[b], and send the equivalent channel ratio corresponding to TX[b].

Equivalent channel ratios corresponding to TX [b] are:

$$g_{2,1}^{[a][b]} / g_{1,1}^{[a][b]}, \quad g_{3,1}^{[a][b]} / g_{1,1}^{[a][b]}, \quad ...,$$

$$g_{2D,1}^{[a][b]} / g_{1,1}^{[a][b]}, \quad g_{2,2}^{[a][b]} / g_{1,2}^{[a][b]}, \quad g_{3,2}^{[a][b]} / g_{1,2}^{[a][b]}, ..., \quad g_{2D,2}^{[a][b]} / g_{1,2}^{[a][b]}, ..., \quad g_{2,D}^{[a][b]} / g_{1,D}^{[a][b]}, \quad g_{3,D}^{[a][b]} / g_{1,D}^{[a][b]}, \quad ..., \text{ and}$$

$$g_{2D,D}^{[a][b]} / g_{1,D}^{[a][b]}.$$

According to the foregoing steps, the equivalent channel ratio transmission process is repeated between the three TXs in the communication system for a plurality of times, and when the equivalent channel ratio transmission ending condition is satisfied (for example, an error between two precoding matrices consecutively calculated by a TX is less than the specified error threshold), equivalent channel ratio transmission is stopped. In this case, TX[1], TX[2], and TX[0] may send signals by using respective precoding matrices that are finally calculated. For each RX, interference signals sent by other TXs except a TX corresponding to the RX are overlapped, and are perpendicular to an equalization matrix of the RX. Therefore, each RX may obtain, through demodulation, a signal sent by the TX corresponding to the RX, to implement interference alignment of the communication system.

It can be learned from the foregoing descriptions that in this embodiment of this application, (2D - 1)*D* equivalent channel ratios, instead of a channel matrix $h_{2D \times 2D}^{[k][l]}$ including $2D \times 2D$ values, are transmitted between TXs over an air interface. The TX in the communication system can implement interference alignment by transmitting *(2D - 1)*D ratios each time. Apparently, compared with the conventional direct method, the method provided in this embodiment of this application can significantly reduce air interface transmission overheads.

Embodiment 4

Embodiment 1: It is assumed that the communication system includes five groups of transmit-receive pairs, each TX includes three antennas, each RX has three antennas, and each TX can send one signal, that is, $K = 5$, $N = 3$, $M = 3$, and $D = 1$.

In this communication system, when TXs in the five groups of transmit-receive pairs send respective signals by using a same time-frequency resource, RX[0], RX[1], RX[2], RX[3], and RX[4] receive signals sent by TX[0], TX[1], TX[2], TX[3], and TX[4]. When noise is not considered, the following five systems of linear equations may be obtained according to expressions of the signals received by RX[1], RX[2], RX[3], RX[4], and RX[0]:

$$\begin{cases} y_{3\times1}^{[1]} = h_{3\times3}^{[1][1]} v_{3\times1}^{[1]} s_{1\times1}^{[1]} + h_{3\times3}^{[1][2]} v_{3\times1}^{[2]} s_{1\times1}^{[2]} + h_{3\times3}^{[1][3]} v_{3\times1}^{[3]} s_{1\times1}^{[3]} + h_{3\times3}^{[1][4]} v_{3\times1}^{[4]} s_{1\times1}^{[4]} + h_{3\times3}^{[1][0]} v_{3\times1}^{[0]} s_{1\times1}^{[0]} \\ y_{3\times1}^{[2]} = h_{3\times3}^{[2][1]} v_{3\times1}^{[1]} s_{1\times1}^{[1]} + h_{3\times3}^{[2][2]} v_{3\times1}^{[2]} s_{1\times1}^{[2]} + h_{3\times3}^{[2][3]} v_{3\times1}^{[3]} s_{1\times1}^{[3]} + h_{3\times3}^{[2][4]} v_{3\times1}^{[4]} s_{1\times1}^{[4]} + h_{3\times3}^{[2][0]} v_{3\times1}^{[0]} s_{1\times1}^{[0]} \\ y_{3\times1}^{[3]} = h_{3\times3}^{[3][1]} v_{3\times1}^{[1]} s_{1\times1}^{[1]} + h_{3\times3}^{[3][2]} v_{3\times1}^{[2]} s_{1\times1}^{[2]} + h_{3\times3}^{[3][3]} v_{3\times1}^{[3]} s_{1\times1}^{[3]} + h_{3\times3}^{[3][4]} v_{3\times1}^{[4]} s_{1\times1}^{[4]} + h_{3\times3}^{[3][0]} v_{3\times1}^{[0]} s_{1\times1}^{[0]} \\ y_{3\times1}^{[4]} = h_{3\times3}^{[4][1]} v_{3\times1}^{[1]} s_{1\times1}^{[1]} + h_{3\times3}^{[4][2]} v_{3\times1}^{[2]} s_{1\times1}^{[2]} + h_{3\times3}^{[4][3]} v_{3\times1}^{[3]} s_{1\times1}^{[3]} + h_{3\times3}^{[4][4]} v_{3\times1}^{[4]} s_{1\times1}^{[4]} + h_{3\times3}^{[4][0]} v_{3\times1}^{[0]} s_{1\times1}^{[0]} \\ y_{3\times1}^{[0]} = h_{3\times3}^{[0][1]} v_{3\times1}^{[1]} s_{1\times1}^{[1]} + h_{3\times3}^{[0][2]} v_{3\times1}^{[2]} s_{1\times1}^{[2]} + h_{3\times3}^{[0][3]} v_{3\times1}^{[3]} s_{1\times1}^{[3]} + h_{3\times3}^{[0][4]} v_{3\times1}^{[4]} s_{1\times1}^{[4]} + h_{3\times3}^{[0][0]} v_{3\times1}^{[0]} s_{1\times1}^{[0]} \end{cases}$$

The following describes a first system of linear equations.

Three antennas of RX[1] respectively receive superimposed signals obtained after channel transmission is performed on signals sent by three antennas of TX[1], TX[2], TX[3], TX[4], and TX[0]. Therefore, the first system of linear equations may be expanded to obtain:

$$
\underbrace{\begin{bmatrix} y_1^{[1]} \\ y_2^{[1]} \\ y_3^{[1]} \end{bmatrix}}_{y_{3\times1}^{[1]}} = \underbrace{\begin{bmatrix} h_{1,1}^{[1][1]} & h_{1,2}^{[1][1]} & h_{1,3}^{[1][1]} \\ h_{2,1}^{[1][1]} & h_{2,2}^{[1][1]} & h_{2,3}^{[1][1]} \\ h_{3,1}^{[1][1]} & h_{3,2}^{[1][1]} & h_{3,3}^{[1][1]} \end{bmatrix}}_{h_{3\times3}^{[1][1]}} \underbrace{\begin{bmatrix} v_1^{[1]} \\ v_2^{[1]} \\ v_3^{[1]} \end{bmatrix}}_{v_{3\times1}^{[1]}} \mathbf{s}_{1\times1}^{[1]} + \underbrace{\begin{bmatrix} h_{1,1}^{[1][2]} & h_{1,2}^{[1][2]} & h_{1,3}^{[1][2]} \\ h_{2,1}^{[1][2]} & h_{2,2}^{[1][2]} & h_{2,3}^{[1][2]} \\ h_{3,1}^{[1][2]} & h_{3,2}^{[1][2]} & h_{3,3}^{[1][2]} \end{bmatrix}}_{h_{3\times3}^{[1][2]}} \underbrace{\begin{bmatrix} v_1^{[2]} \\ v_2^{[2]} \\ v_3^{[2]} \end{bmatrix}}_{v_{3\times1}^{[2]}} \mathbf{s}_{1\times1}^{[2]}
$$

$$
+ \underbrace{\begin{bmatrix} h_{1,1}^{[1][3]} & h_{1,2}^{[1][3]} & h_{1,3}^{[1][3]} \\ h_{2,1}^{[1][3]} & h_{2,2}^{[1][3]} & h_{2,3}^{[1][3]} \\ h_{3,1}^{[1][3]} & h_{3,2}^{[1][3]} & h_{3,3}^{[1][3]} \end{bmatrix}}_{h_{3\times3}^{[1][3]}} \underbrace{\begin{bmatrix} v_1^{[3]} \\ v_2^{[3]} \\ v_3^{[3]} \end{bmatrix}}_{v_{3\times1}^{[3]}} \mathbf{s}_{1\times1}^{[3]} + \underbrace{\begin{bmatrix} h_{1,1}^{[1][4]} & h_{1,2}^{[1][4]} & h_{1,3}^{[1][4]} \\ h_{2,1}^{[1][4]} & h_{2,2}^{[1][4]} & h_{2,3}^{[1][4]} \\ h_{3,1}^{[1][4]} & h_{3,2}^{[1][4]} & h_{3,3}^{[1][4]} \end{bmatrix}}_{h_{3\times3}^{[1][4]}} \underbrace{\begin{bmatrix} v_1^{[4]} \\ v_2^{[4]} \\ v_3^{[4]} \end{bmatrix}}_{v_{3\times1}^{[4]}} \mathbf{s}_{1\times1}^{[4]}
$$

$$
+ \underbrace{\begin{bmatrix} h_{1,1}^{[1][0]} & h_{1,2}^{[1][0]} & h_{1,3}^{[1][0]} \\ h_{2,1}^{[1][0]} & h_{2,2}^{[1][0]} & h_{2,3}^{[1][0]} \\ h_{3,1}^{[1][0]} & h_{3,2}^{[1][0]} & h_{3,3}^{[1][0]} \end{bmatrix}}_{h_{3\times3}^{[1][0]}} \underbrace{\begin{bmatrix} v_1^{[0]} \\ v_2^{[0]} \\ v_3^{[0]} \end{bmatrix}}_{v_{3\times1}^{[0]}} \mathbf{s}_{1\times1}^{[0]}
$$

$$
= \underbrace{\begin{bmatrix} g_1^{[1][1]} \\ g_2^{[1][1]} \\ g_3^{[1][1]} \end{bmatrix}}_{g_{3\times1}^{[1][1]}} \mathbf{s}_{1\times1}^{[1]} + \underbrace{\begin{bmatrix} g_1^{[1][2]} \\ g_2^{[1][2]} \\ g_3^{[1][2]} \end{bmatrix}}_{g_{3\times1}^{[1][2]}} \mathbf{s}_{1\times1}^{[2]} + \underbrace{\begin{bmatrix} g_1^{[1][3]} \\ g_2^{[1][3]} \\ g_3^{[1][3]} \end{bmatrix}}_{g_{3\times1}^{[1][3]}} \mathbf{s}_{1\times1}^{[3]} + \underbrace{\begin{bmatrix} g_1^{[1][4]} \\ g_2^{[1][4]} \\ g_3^{[1][4]} \end{bmatrix}}_{g_{3\times1}^{[1][4]}} \mathbf{s}_{1\times1}^{[4]} + \underbrace{\begin{bmatrix} g_1^{[1][0]} \\ g_2^{[1][0]} \\ g_3^{[1][0]} \end{bmatrix}}_{g_{3\times1}^{[1][0]}} \mathbf{s}_{1\times1}^{[0]}
$$

$$
= \begin{bmatrix} g_1^{[1][1]} & g_1^{[1][2]} & g_1^{[1][3]} & g_1^{[1][4]} & g_1^{[1][0]} \\ g_2^{[1][1]} & g_2^{[1][2]} & g_2^{[1][3]} & g_2^{[1][4]} & g_2^{[1][0]} \\ g_3^{[1][1]} & g_3^{[1][2]} & g_3^{[1][3]} & g_3^{[1][4]} & g_3^{[1][0]} \end{bmatrix} \begin{bmatrix} s^{[1]} \\ s^{[2]} \\ s^{[3]} \\ s^{[4]} \\ s^{[0]} \end{bmatrix}
$$

$$
\mathbf{s}_{1\times1}^{[1]} = s^{[1]}. \quad \mathbf{s}_{1\times1}^{[2]} = s^{[2]}. \quad \mathbf{s}_{1\times1}^{[3]} = s^{[3]}. \quad \mathbf{s}_{1\times1}^{[4]} = s^{[4]}. \quad \mathbf{s}_{1\times1}^{[0]} = s^{[0]}.
$$

It can be learned from the expansion of the first system of linear equations that the first system of linear equations includes three equations and five unknown numbers. Because a quantity of unknown numbers is greater than a quantity of equations, generally, a signal s[1] sent by TX[1] cannot be uniquely determined based on signals $y_1^{[1]}, y_2^{[1]}, y_3^{[1]}$ received by the three antennas of RX[1].

RX[1] can uniquely determine the signal s[1] sent by TX[1] when and only when a coefficient matrix of the first system of linear equations satisfies the following two interference alignment conditions:

$$
\begin{cases} rank\begin{pmatrix} g_1^{[1][1]} & g_1^{[1][2]} & g_1^{[1][3]} & g_1^{[1][4]} & g_1^{[1][0]} \\ g_2^{[1][1]} & g_2^{[1][2]} & g_2^{[1][3]} & g_2^{[1][4]} & g_2^{[1][0]} \\ g_3^{[1][1]} & g_3^{[1][2]} & g_3^{[1][3]} & g_3^{[1][4]} & g_3^{[1][0]} \end{pmatrix} = M = 3 \\[3em] rank\begin{pmatrix} g_1^{[1][2]} & g_1^{[1][3]} & g_1^{[1][4]} & g_1^{[1][5]} \\ g_2^{[1][2]} & g_2^{[1][3]} & g_2^{[1][4]} & g_2^{[1][5]} \\ g_3^{[1][2]} & g_3^{[1][3]} & g_3^{[1][4]} & g_3^{[1][5]} \end{pmatrix} = M - D = 2 \end{cases}
$$

For a random channel, if the second interference alignment condition is satisfied, the first interference alignment condition is satisfied at a probability of 1. Therefore, the first interference alignment condition may not be considered in this embodiment of this application temporarily. Further, according to the second interference alignment condition, it may be obtained that:

$$\begin{cases} \begin{bmatrix} g_2^{[1][4]}/g_1^{[1][4]} \\ g_3^{[1][4]}/g_1^{[1][4]} \end{bmatrix} = k_1^{[1][4]} \begin{bmatrix} g_2^{[1][2]}/g_1^{[1][2]} \\ g_3^{[1][2]}/g_1^{[1][2]} \end{bmatrix} + k_2^{[1][4]} \begin{bmatrix} g_2^{[1][3]}/g_1^{[1][3]} \\ g_3^{[1][3]}/g_1^{[1][3]} \end{bmatrix} \\ \begin{bmatrix} g_2^{[1][0]}/g_1^{[1][0]} \\ g_3^{[1][0]}/g_1^{[1][0]} \end{bmatrix} = k_1^{[1][0]} \begin{bmatrix} g_2^{[1][2]}/g_1^{[1][2]} \\ g_3^{[1][2]}/g_1^{[1][2]} \end{bmatrix} + k_2^{[1][0]} \begin{bmatrix} g_2^{[1][3]}/g_1^{[1][3]} \\ g_3^{[1][3]}/g_1^{[1][3]} \end{bmatrix} \end{cases}$$

In the formula, $k_1^{[1][4]}, k_2^{[1][4]}, k_1^{[1][0]}, k_2^{[1][0]} \in \mathbb{C}$.

In addition, normalization processing may be performed on a precoding matrix of TX[1] (because $D$ = 1, in this embodiment of this application, the precoding matrix may also be referred to as a precoding vector), and scaling of an equivalent channel matrix in a same proportion does not change a rank of the equivalent channel matrix. In conclusion, TX [2] only needs to transfer equivalent channel ratios $g_2^{[1][2]}/g_1^{[1][2]}, g_3^{[1][2]}/g_1^{[1][2]}$ to TX[4] and TX[0], and TX[3] transfers equivalent channel ratios $g_2^{[1][3]}/g_1^{[1][3]}, g_3^{[1][3]}/g_1^{[1][3]}$ to TX[4] and TX[0]. In this case, after receiving the equivalent channel ratios corresponding to TX[2] and TX[3] respectively, TX[4] and TX[0] perform linear assembly on the two groups of equivalent channel ratios, and calculate their own precoding matrices $\boldsymbol{v}_{3\times1}^{[4]}, \boldsymbol{v}_{3\times1}^{[0]}$ based on the two groups of equivalent channel ratios, so that the interference alignment condition of the first system of linear equations can be satisfied, and interference alignment on RX[1] can be implemented.

Based on the foregoing descriptions, after the precoding vector $\boldsymbol{v}_{3\times1}^{[4]}$ of TX[4] is determined, the precoding vector is substituted into a third system of linear equations, and finally obtained equivalent channel ratios $g_2^{[3][4]}/g_1^{[3][4]}, g_3^{[3][4]}/g_1^{[3][4]}$ are transferred to TX[1] and TX[2]. After the precoding vector $\boldsymbol{v}_{3\times1}^{[0]}$ of TX[0] is determined, the precoding vector is substituted into the third system of linear equations, and finally obtained equivalent channel ratios $g_2^{[3][0]}/g_1^{[3][0]}, g_3^{[3][0]}/g_1^{[3][0]}$ are transferred to TX[1] and TX[2]. In this case, after receiving the equivalent channel ratios corresponding to TX[4] and TX[0] respectively, TX[1] and TX[2] perform linear assembly on the two groups of equivalent channel ratios, and calculate their own precoding matrices $\boldsymbol{v}_{3\times1}^{[1]}, \boldsymbol{v}_{3\times1}^{[2]}$ based on the two groups of equivalent channel ratios, so that an interference alignment condition of the third system of linear equations can be satisfied, and interference alignment on RX[3] can be implemented.

After the precoding vector $\boldsymbol{v}_{3\times1}^{[1]}$ of TX[1] is determined, the precoding vector is substituted into a fifth system of linear equations, and finally obtained equivalent channel ratios $g_2^{[0][1]}/g_1^{[0][1]}, g_3^{[0][1]}/g_1^{[0][1]}$ are transferred to TX[3] and TX[4]. After the precoding vector $\boldsymbol{v}_{3\times1}^{[2]}$ of TX[2] is determined, the precoding vector is substituted into the fifth system of linear equations, and finally obtained equivalent channel ratios $g_2^{[0][2]}/g_1^{[0][2]}, g_3^{[0][2]}/g_1^{[0][2]}$ are transferred to TX[3] and TX[4]. In this case, after receiving the equivalent channel ratios corresponding to TX[1] and TX[2] respectively, TX[3] and TX[4] perform linear assembly on the two groups of equivalent channel ratios, and calculate their own precoding matrices $\boldsymbol{v}_{3\times1}^{[3]}, \boldsymbol{v}_{3\times1}^{[4]}$ based on the two groups of equivalent channel ratios, so that an interference alignment condition of the fifth system of linear equations can be satisfied, and interference alignment on RX[0] can be implemented.

After the precoding vector $\boldsymbol{v}_{3\times1}^{[3]}$ of TX[3] is determined, the precoding vector is substituted into a second system of linear equations, and finally obtained equivalent channel ratios $g_2^{[2][3]}/g_1^{[2][3]}, g_3^{[2][3]}/g_1^{[2][3]}$ are transferred to TX[0] and TX[1]. After the precoding vector $\boldsymbol{v}_{3\times1}^{[4]}$ of TX[4] is determined, the precoding vector is substituted into the second system of linear equations, and finally obtained equivalent channel ratios $g_2^{[2][4]}/g_1^{[2][4]}, g_3^{[2][4]}/g_1^{[2][4]}$ are transferred to TX[0] and TX[1]. In this case, after receiving the equivalent channel ratios corresponding to TX[3] and TX[4] respectively, TX[0] and TX[1] perform linear assembly on the two groups of equivalent channel ratios, and calculate their own precoding matrices $v_{3\times1}^{[0]}, v_{3\times1}^{[1]}$ based on the two groups of equivalent channel ratios, so that an interference alignment condition of the second system of linear equations can be satisfied, and interference alignment on RX[2] can be implemented.

After the precoding vector $v_{3\times1}^{[0]}$ of TX[0] is determined, the precoding vector is substituted into a fourth system of linear equations, and finally obtained equivalent channel ratios $g_2^{[4][0]}/g_1^{[4][0]}, g_3^{[4][0]}/g_1^{[4][0]}$ are transferred to TX[2] and TX[3]. After the precoding vector $v_{3\times1}^{[1]}$ of TX[1] is determined, the precoding vector is substituted into the fourth system of linear equations, and finally obtained equivalent channel ratios $g_2^{[4][1]}/g_1^{[4][1]}, g_3^{[4][1]}/g_1^{[4][1]}$ are transferred to TX[2] and TX[3]. In this case, after receiving the equivalent channel ratios corresponding to TX[1] and TX[1] respectively, TX[2] and TX[3] perform linear assembly on the two groups of equivalent channel ratios, and calculate their own precoding matrices $v_{3\times1}^{[2]}, v_{3\times1}^{[3]}$ based on the two groups of equivalent channel ratios, so that an interference alignment condition of the fourth system of linear equations can be satisfied, and interference alignment on RX[4] can be implemented.

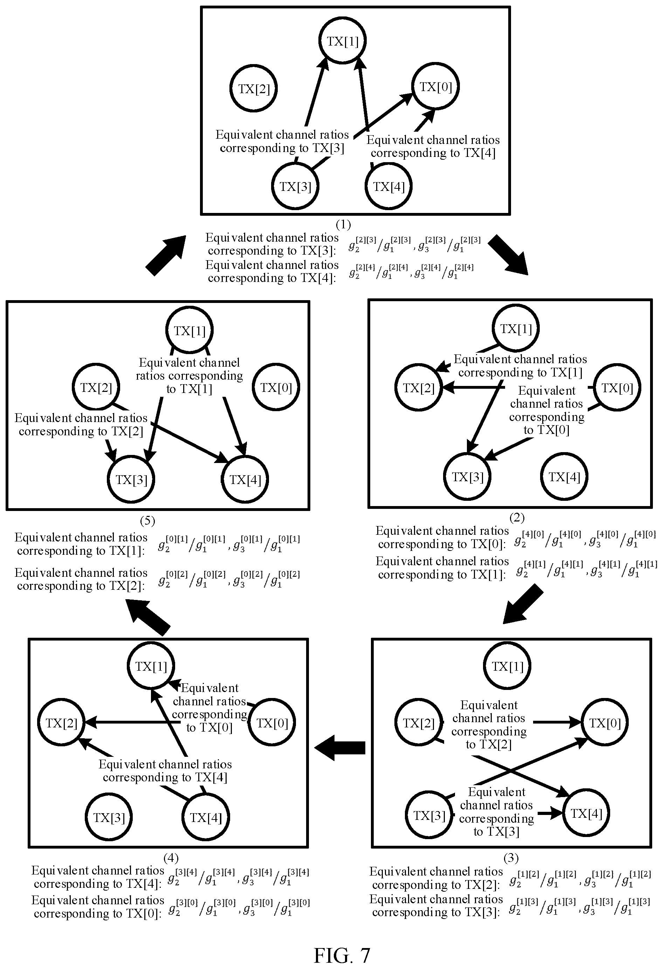

The following describes, in detail with reference to FIG. 7, an equivalent channel ratio transmission process and a local calculation process of each TX in this embodiment of this application. As shown in FIG. 7, the five TXs in the communication system may sequentially transmit corresponding equivalent channel ratios for a plurality of cycles, to implement interference alignment of the communication system.

As shown in (1) in FIG. 7, in this communication system, TX[3] sends the equivalent channel ratios $g_2^{[2][3]}/g_1^{[2][3]}, g_3^{[2][3]}/g_1^{[2][3]}$ corresponding to TX[3], and TX[4] sends the equivalent channel ratios $g_2^{[2][4]}/g_1^{[2][4]}, g_3^{[2][4]}/g_1^{[2][4]}$ corresponding to TX[4].

After TX[1] receives the equivalent channel ratios corresponding to TX[3] and the equivalent channel ratios corresponding to TX[4], a local calculation process of TX[1] includes the following a1 to a3.

a1: TX[1] calculates the precoding matrix $v_{3\times1}^{[1]}$ of TX[1] based on the equivalent channel ratios corresponding to TX[3] and the equivalent channel ratios corresponding to TX[4].

$$g_{3\times1}^{[2][3]} = \begin{bmatrix} g_1^{[2][3]} \\ g_2^{[2][3]} \\ g_3^{[2][3]} \end{bmatrix}$$

In this step, TX[1] may first determine an equivalent channel matrix $\quad$ from TX[3] to RX[2] based on the equivalent channel ratios $g_2^{[2][3]}/g_1^{[2][3]}, g_3^{[2][3]}/g_1^{[2][3]}$ corresponding to TX[3], and determine an

$$g_{3\times1}^{[2][4]} = \begin{bmatrix} g_1^{[2][4]} \\ g_2^{[2][4]} \\ g_3^{[2][4]} \end{bmatrix}$$

equivalent channel matrix $\quad$ from TX[4] to RX[2] based on the equivalent channel ratios $g_2^{[2][4]}/g_1^{[2][4]}, g_3^{[2][4]}/g_1^{[2][4]}$ corresponding to TX[4].

Then, TX[1] calculates the precoding matrix $v_{3\times1}^{[1]}$ of TX[1] based on the equivalent channel matrix $g_{3\times1}^{[2][3]}$ from TX[3] to RX[2], the equivalent channel matrix $g_{3\times1}^{[2][4]}$ from TX[4] to RX[2], and a channel matrix $h_{3\times3}^{[2][1]}$ from TX[1] to RX[2] in channel state information of TX[1].

The precoding matrix $v_{3\times1}^{[1]}$ of TX[1] satisfies a formula:

$$v_{3\times1}^{[1]} = (h_{3\times3}^{[2][1]})^{-1}(k_1^{[2][1]} g_{3\times1}^{[2][3]} + k_2^{[2][1]} g_{3\times1}^{[2][4]}) \quad k_1^{[2][1]}, K_2^{[2][1]} \in \mathbb{C}$$

a2: When determining that the equivalent channel ratio transmission ending condition is not satisfied, TX[1] calculates an equivalent channel matrix $g_{3\times1}^{[4][1]}$ from TX[1] to RX[4] based on the precoding matrix $v_{2\times1}^{[1]}$ of TX[1], to calculate the equivalent channel ratios corresponding to TX[1].

In this embodiment, it is assumed that the equivalent channel ratio transmission ending condition is that an error between two precoding matrices calculated consecutively is less than the specified error threshold. In other words, TX[1] may calculate the equivalent channel matrix $g_{3\times1}^{[4][1]}$ from TX[1] to RX[4] when determining that an error between $v_{3\times1}^{[1]}$ obtained in step a1 and a precoding matrix (denoted as $\dot{v}_{3\times1}^{[1]}$) previously obtained through calculation is less than the specified error threshold.

For example, when determining that $v_{3\times1}^{[1]}$ and $\dot{v}_{3\times1}^{[1]}$ satisfy a formula

$$\left\| v_{3\times1}^{[1]} * e^{j\angle\left(v_{3\times1}^{[1]}\right)^H v_{3\times1}^{[1]}} - \dot{v}_{3\times1}^{[1]} \right\|_2 > \varepsilon$$

, TX[1] performs step a2, where $\varepsilon$ is the specified error threshold.

Then, TX[1] may calculate the equivalent channel matrix $g_{3\times1}^{[4][1]}$ from TX[1] to RX[4] based on the precoding matrix $v_{3\times1}^{[1]}$ of TX[1] and a channel matrix $h_{3\times3}^{[4][1]}$ from TX[1] to RX[4] in the channel state information of TX[1]. The equivalent channel matrix $g_{3\times1}^{[4][1]}$ from TX[1] to RX[4] satisfies a formula: $g_{3\times1}^{[4][1]} = h_{3\times3}^{[4][1]} v_{3\times1}^{[1]}.$ $g_{3\times1}^{[4][1]} = \begin{bmatrix} g_1^{[4][1]} \\ g_2^{[4][1]} \\ g_3^{[4][1]} \end{bmatrix}$.

a3: TX[1] determines, based on the equivalent channel matrix $g_{3\times1}^{[4][1]}$ from TX[1] to RX[4], the equivalent channel ratios $g_2^{[4][1]}/g_1^{[4][1]}, g_3^{[4][1]}/g_1^{[4][1]}$ corresponding to TX[1].

As shown in (2) in FIG. 7, after TX[1] determines the equivalent channel ratios corresponding to TX[1], TX[1] may send, in the manner recorded in S204 in the embodiment shown in FIG. 2, the equivalent channel ratios corresponding to TX[1].

After TX[0] receives the equivalent channel ratios corresponding to TX[3] and the equivalent channel ratios corresponding to TX[4], a local calculation process of TX[0] includes the following b1 to b3.

b1: TX[0] calculates the precoding matrix $v_{3\times1}^{[0]}$ of TX[0] based on the equivalent channel ratios corresponding to TX[3] and the equivalent channel ratios corresponding to TX[4].

$$g_{3\times1}^{[2][3]} = \begin{bmatrix} g_1^{[2][3]} \\ g_2^{[2][3]} \\ g_3^{[2][3]} \end{bmatrix}$$

In this step, TX[0] may first determine an equivalent channel matrix from TX[3] to RX[2] based on the equivalent channel ratios $g_2^{[2][3]}/g_1^{[2][3]}, g_3^{[2][3]}/g_1^{[2][3]}$ corresponding to TX[3], and determine an

$$g_{3\times1}^{[2][4]} = \begin{bmatrix} g_1^{[2][4]} \\ g_2^{[2][4]} \\ g_3^{[2][4]} \end{bmatrix}$$

equivalent channel matrix from TX[4] to RX[2] based on the equivalent channel ratios

$$g_2^{[2][4]}/g_1^{[2][4]}, g_3^{[2][4]}/g_1^{[2][4]}$$ corresponding to TX[4].

Then, TX[0] calculates the precoding matrix $v_{3\times1}^{[0]}$ of TX[0] based on the equivalent channel matrix $g_{3\times1}^{[2][3]}$ from TX[3] to RX[2], the equivalent channel matrix $g_{3\times1}^{[2][4]}$ from TX[4] to RX[2], and a channel matrix $h_{3\times3}^{[2][0]}$ from TX[0] to RX[2] in channel state information of TX[0].

The precoding matrix $v_{3\times1}^{[0]}$ of TX[0] satisfies a formula:

$$v_{3\times1}^{[0]} = (h_{3\times3}^{[2][0]})^{-1}(k_1^{[2][0]} g_{3\times1}^{[2][3]} + k_2^{[2][0]} g_{3\times1}^{[2][4]}) \quad k_1^{[2][0]}, k_2^{[2][0]} \in \mathbb{C}.$$

b2: When determining that the equivalent channel ratio transmission ending condition is not satisfied, TX[0] calculates an equivalent channel matrix $g_{3\times1}^{[4][0]}$ from TX[0] to RX[4] based on the precoding matrix $v_{3\times1}^{[0]}$ of TX[0], to calculate the equivalent channel ratios corresponding to TX[0].

In this embodiment, it is assumed that the equivalent channel ratio transmission ending condition is that an error between two precoding matrices calculated consecutively is less than the specified error threshold. In other words, TX[0] may calculate the equivalent channel matrix $g_{3\times1}^{[4][0]}$ from TX[1] to RX[4] when determining that an error between $v_{3\times1}^{[0]}$ obtained in step b1 and a precoding matrix (denoted as $\dot{v}_{3\times1}^{[0]}$) previously obtained through calculation is less than the specified error threshold.

For example, when determining that $v_{3\times1}^{[0]}$ and $\dot{v}_{3\times1}^{[0]}$ satisfy a formula

$$\left\| v_{3\times1}^{[0]} * e^{j\angle\left(v_{3\times1}^{[0]}\right)^H v_{3\times1}^{[0]}} - \dot{v}_{3\times1}^{[0]} \right\|_2 > \varepsilon,$$

, TX[0] performs step b2, where $\varepsilon$ is the specified error threshold.

Then, TX[0] may calculate the equivalent channel matrix $g_{3\times1}^{[4][0]}$ from TX[0] to RX[4] based on the precoding matrix $v_{3\times1}^{[0]}$ of TX[0] and a channel matrix $h_{3\times3}^{[4][0]}$ from TX[0] to RX[4] in the channel state information of TX[0]. The equivalent channel matrix $g_{3\times1}^{[4][0]}$ from TX[0] to RX[4] satisfies a formula: $g_{3\times1}^{[4][0]} = h_{3\times3}^{[4][0]} v_{3\times1}^{[0]}.$ $g_{3\times1}^{[4][0]} = \begin{bmatrix} g_1^{[4][0]} \\ g_2^{[4][0]} \\ g_3^{[4][0]} \end{bmatrix}.$

b3: TX[0] determines, based on the equivalent channel matrix $g_{3\times1}^{[4][0]}$ from TX[0] to RX[4], the equivalent channel ratios $g_2^{[4][0]}/g_1^{[4][0]}, g_3^{[4][0]}/g_1^{[4][0]}$ corresponding to TX[0].

As shown in (2) FIG. 7, after TX[0] determines the equivalent channel ratios corresponding to TX[0], TX[0] may send, in the manner recorded in S204 in the embodiment shown in FIG. 2, the equivalent channel ratios corresponding to TX[0].

As shown in (2) in FIG. 7, in this communication system, TX[1] sends the equivalent channel ratios $g_2^{[4][1]}/g_1^{[4][1]}, g_3^{[4][1]}/g_1^{[4][1]}$ corresponding to TX[1], and TX[0] sends the equivalent channel ratios $g_2^{[4][0]}/g_1^{[4][0]}, g_3^{[4][0]}/g_1^{[4][0]}$ corresponding to TX[0].

After TX[2] receives the equivalent channel ratios corresponding to TX[1] and the equivalent channel ratios corresponding to TX[0], a local calculation process of TX[2] includes the following a1 to a3.

c1: TX[2] calculates the precoding matrix $v_{3\times1}^{[2]}$ of TX[2] based on the equivalent channel ratios corresponding to TX[1] and the equivalent channel ratios corresponding to TX[0].

In this step, TX[2] may first determine an equivalent channel matrix $g_{3\times1}^{[4][1]} = \begin{bmatrix} g_1^{[4][1]} \\ g_2^{[4][1]} \\ g_3^{[4][1]} \end{bmatrix}$ from TX[1] to RX[4] based on the equivalent channel ratios $g_2^{[4][1]}/g_1^{[4][1]}, g_3^{[4][1]}/g_1^{[4][1]}$ corresponding to TX[1], and determine an equivalent channel matrix $g_{3\times1}^{[4][0]} = \begin{bmatrix} g_1^{[4][0]} \\ g_2^{[4][0]} \\ g_3^{[4][0]} \end{bmatrix}$ from TX[0] to RX[4] based on the equivalent channel ratios $g_2^{[4][0]}/g_1^{[4][0]}, g_3^{[4][0]}/g_1^{[4][0]}$ corresponding to TX[0].

Then, TX[2] calculates the precoding matrix $v_{3\times1}^{[2]}$ of TX[2] based on the equivalent channel matrix $g_{3\times1}^{[4][1]}$ from TX[1] to RX[4], the equivalent channel matrix $g_{3\times1}^{[4][0]}$ from TX[0] to RX[4], and a channel matrix $h_{3\times3}^{[4][2]}$ from TX[2] to RX[4] in channel state information of TX[2].

The precoding matrix $v_{3\times1}^{[2]}$ of TX[2] satisfies a formula: $v_{3\times1}^{[2]} = (h_{3\times3}^{[4][2]})^{-1}(k_1^{[4][2]} g_{3\times1}^{[4][1]} + k_2^{[4][2]} g_{3\times1}^{[4][0]})$. $k_1^{[4][2]}, k_2^{[4][2]} \in \mathbb{C}$.

c2: When determining that the equivalent channel ratio transmission ending condition is not satisfied, TX[2] calculates an equivalent channel matrix $g_{3\times1}^{[1][2]}$ from TX[2] to RX[1] based on the precoding matrix $v_{2\times1}^{[2]}$ of TX[2], to calculate the equivalent channel ratios corresponding to TX[2].

In this embodiment, it is assumed that the equivalent channel ratio transmission ending condition is that an error between two precoding matrices calculated consecutively is less than the specified error threshold. In other words, TX[2] may calculate the equivalent channel matrix $g_{3\times1}^{[1][2]}$ from TX[2] to RX[1] when determining that an error between $v_{3\times1}^{[2]}$ obtained in step c1 and a precoding matrix (denoted as $\dot{v}_{3\times1}^{[2]}$) previously obtained through calculation is less than the specified error threshold.

For example, when determining that $v_{3\times1}^{[2]}$ and $\dot{v}_{3\times1}^{[2]}$ satisfy a formula $\left\| v_{3\times1}^{[2]} * e^{j\angle\left(v_{3\times1}^{[2]}\right)^H \dot{v}_{3\times1}^{[2]}} - \dot{v}_{3\times1}^{[2]} \right\|_2 > \varepsilon$, TX[2] performs step c2, where $\varepsilon$ is the specified error threshold.

Then, TX[2] may calculate the equivalent channel matrix $g_{3\times1}^{[1][2]}$ from TX[2] to RX[1] based on the precoding matrix $v_{3\times1}^{[2]}$ of TX[2] and a channel matrix $h_{3\times3}^{[1][2]}$ from TX[2] to RX[1] in the channel state information of TX[2]. The equivalent channel matrix $g_{3\times1}^{[1][2]}$ from TX[2] to RX[1] satisfies a formula: $g_{3\times1}^{[1][2]} = h_{3\times3}^{[1][2]} v_{3\times1}^{[2]}$. $g_{3\times1}^{[1][2]} = \begin{bmatrix} g_1^{[1][2]} \\ g_2^{[1][2]} \\ g_3^{[1][2]} \end{bmatrix}$.

c3: TX[2] determines, based on the equivalent channel matrix $g_{3\times1}^{[1][2]}$ from TX[2] to RX[1], the equivalent channel ratios $g_2^{[1][2]}/g_1^{[1][2]}, g_3^{[1][2]}/g_1^{[1][2]}$ corresponding to TX[2].

As shown in (3) in FIG. 7, after TX[2] determines the equivalent channel ratios corresponding to TX[2], TX[2] may send, in the manner recorded in S204 in the embodiment shown in FIG. 2, the equivalent channel ratios corresponding to TX[2].

After TX[3] receives the equivalent channel ratios corresponding to TX[1] and the equivalent channel ratios corresponding to TX[0], a local calculation process of TX[3] includes the following d1 to d3.

d1: TX[3] calculates the precoding matrix $v_{3\times1}^{[2]}$ of TX[3] based on the equivalent channel ratios corresponding to TX[1] and the equivalent channel ratios corresponding to TX[0].

$$g_{3\times1}^{[4][1]} = \begin{bmatrix} g_1^{[4][1]} \\ g_2^{[4][1]} \\ g_3^{[4][1]} \end{bmatrix}$$

In this step, TX[3] may first determine an equivalent channel matrix $g_{3\times1}^{[4][1]}$ from TX[1] to RX[4] based on the equivalent channel ratios $g_2^{[4][1]}/g_1^{[4][1]}, g_3^{[4][1]}/g_1^{[4][1]}$ corresponding to TX[1], and determine an

$$g_{3\times1}^{[4][0]} = \begin{bmatrix} g_1^{[4][0]} \\ g_2^{[4][0]} \\ g_3^{[4][0]} \end{bmatrix}$$

equivalent channel matrix $g_{3\times1}^{[4][0]}$ from TX[0] to RX[4] based on the equivalent channel ratios $g_2^{[4][0]}/g_1^{[4][0]}, g_3^{[4][0]}/g_1^{[4][0]}$ corresponding to TX[0].

Then, TX[3] calculates the precoding matrix $v_{3\times1}^{[3]}$ of TX[3] based on the equivalent channel matrix $g_{3\times1}^{[4][1]}$ from TX[1] to RX[4], the equivalent channel matrix $g_{3\times1}^{[4][0]}$ from TX[0] to RX[4], and a channel matrix $h_{3\times3}^{[4][3]}$ from TX[3] to RX[4] in channel state information of TX[3].

The precoding matrix $v_{3\times1}^{[3]}$ of TX[3] satisfies a formula: $v_{3\times1}^{[3]} = (h_{3\times3}^{[4][3]})^{-1}(k_1^{[4][3]} g_{3\times1}^{[4][1]} + k_2^{[4][3]} g_{3\times1}^{[4][0]})$, $k_1^{[4][3]}, k_2^{[4][3]} \in \mathbb{C}$.

d2: When determining that the equivalent channel ratio transmission ending condition is not satisfied, TX[3] calculates an equivalent channel matrix $g_{3\times1}^{[1][3]}$ from TX[3] to RX[1] based on the precoding matrix $v_{2\times1}^{[3]}$ of TX[3], to calculate the equivalent channel ratios corresponding to TX[3].

In this embodiment, it is assumed that the equivalent channel ratio transmission ending condition is that an error between two precoding matrices calculated consecutively is less than the specified error threshold. In other words, TX[3] may calculate the equivalent channel matrix $g_{3\times1}^{[1][3]}$ from TX[3] to RX[1] when determining that an error between $v_{3\times1}^{[3]}$ obtained in step d1 and a precoding matrix (denoted as $\dot{v}_{3\times1}^{[3]}$) previously obtained through calculation is less than the specified error threshold.

For example, when determining that $v_{3\times1}^{[3]}$ and $\dot{v}_{3\times1}^{[3]}$ satisfy a formula $\left\| v_{3\times1}^{[3]} * e^{j\angle\left(v_{3\times1}^{[3]}\right)^H \dot{v}_{3\times1}^{[3]}} - \dot{v}_{3\times1}^{[3]} \right\|_2 > \varepsilon$, TX[3] performs step d2, where $\varepsilon$ is the specified error threshold.

Then, TX[3] may calculate the equivalent channel matrix $g_{3\times1}^{[1][3]}$ from TX[3] to RX[1] based on the precoding matrix $v_{3\times 1}^{[3]}$ of TX[3] and a channel matrix $h_{3\times 3}^{[1][3]}$ from TX[3] to RX[1] in the channel state information of TX[3]. The equivalent channel matrix $g_{3\times 1}^{[1][3]}$ from TX[3] to RX[1] satisfies a formula: $g_{3\times 1}^{[1][3]} = h_{3\times 3}^{[1][3]} v_{3\times 1}^{[3]}.$

$$g_{3\times 1}^{[1][3]} = \begin{bmatrix} g_1^{[1][3]} \\ g_2^{[1][3]} \\ g_3^{[1][3]} \end{bmatrix}.$$

d3: TX[3] determines, based on the equivalent channel matrix $g_{3\times 1}^{[1][3]}$ from TX[3] to RX[1], the equivalent channel ratios $g_2^{[1][3]}/g_1^{[1][3]}, g_3^{[1][3]}/g_1^{[1][3]}$ corresponding to TX[3].

As shown in (3) in FIG. 7, after TX[3] determines the equivalent channel ratios corresponding to TX[3], TX[3] may send, in the manner recorded in S204 in the embodiment shown in FIG. 2, the equivalent channel ratios corresponding to TX[3].

As shown in (3) in FIG. 7, in this communication system, TX[2] sends the equivalent channel ratios $g_2^{[1][2]}/g_1^{[1][2]}, g_3^{[1][2]}/g_1^{[1][2]}$ corresponding to TX[2], and TX[3] sends the equivalent channel ratios $g_2^{[1][3]}/g_1^{[1][3]}, g_3^{[1][3]}/g_1^{[1][3]}$ corresponding to TX[3].

After TX[4] receives the equivalent channel ratios corresponding to TX[2] and the equivalent channel ratios corresponding to TX[3], a local calculation process of TX[4] includes the following e1 to e3.

e1: TX[4] calculates the precoding matrix $v_{3\times 1}^{[4]}$ of TX[4] based on the equivalent channel ratios corresponding to TX[2] and the equivalent channel ratios corresponding to TX[3].

In this step, TX[4] may first determine an equivalent channel matrix $g_{3\times 1}^{[1][2]} = \begin{bmatrix} g_1^{[1][2]} \\ g_2^{[1][2]} \\ g_3^{[1][2]} \end{bmatrix}$ from TX[2] to RX[1] based on the equivalent channel ratios $g_2^{[1][2]}/g_1^{[1][2]}, g_3^{[1][2]}/g_1^{[1][2]}$ corresponding to TX[2], and determine an equivalent channel matrix $\cdot\ g_{3\times 1}^{[1][3]} = \begin{bmatrix} g_1^{[1][3]} \\ g_2^{[1][3]} \\ g_3^{[1][3]} \end{bmatrix}$ from TX[3] to RX[1] based on the equivalent channel ratios $g_2^{[1][3]}/g_1^{[1][3]}, g_3^{[1][3]}/g_1^{[1][3]}$ corresponding to TX[3].

Then, TX[4] calculates the precoding matrix $v_{3\times 1}^{[4]}$ of TX[4] based on the equivalent channel matrix $g_{3\times 1}^{[1][2]}$ from TX[2] to RX[1], the equivalent channel matrix $g_{3\times 1}^{[1][3]}$ from TX[3] to RX[1], and a channel matrix $h_{3\times 3}^{[1][4]}$ from TX[4] to RX[1] in channel state information of TX[4].

The precoding matrix $v_{3\times 1}^{[4]}$ of TX[4] satisfies a formula: $v_{3\times 1}^{[4]} = (h_{3\times 3}^{[1][4]})^{-1}(k_1^{[1][4]} g_{3\times 1}^{[1][2]} + k_2^{[1][4]} g_{3\times 1}^{[1][3]}).$ $k_1^{[1][4]}, k_2^{[1][4]} \in \mathbb{C}.$

e2: When determining that the equivalent channel ratio transmission ending condition is not satisfied, TX[4] calculates an equivalent channel matrix $g_{3\times 1}^{[3][4]}$ from TX[4] to RX[3] based on the precoding matrix $v_{2\times 1}^{[4]}$ of TX[4], to calculate the equivalent channel ratios corresponding to TX[4].

In this embodiment, it is assumed that the equivalent channel ratio transmission ending condition is that an error between two precoding matrices calculated consecutively is less than the specified error threshold. In other words, TX[4] may calculate the equivalent channel matrix $g_{3\times1}^{[3][4]}$ from TX[4] to RX[3] when determining that an error between $v_{3\times1}^{[4]}$ obtained in step e1 and a precoding matrix (denoted as $\dot{v}_{3\times1}^{[4]}$) previously obtained through calculation is less than the specified error threshold.

For example, when determining that $v_{3\times1}^{[4]}$ and $\dot{v}_{3\times1}^{[4]}$ satisfy a formula

$$\left\| v_{3\times1}^{[4]} * e^{j\angle\left(v_{3\times1}^{[4]}\right)^H \dot{v}_{3\times1}^{[4]}} - \dot{v}_{3\times1}^{[4]} \right\|_2 > \varepsilon,$$

, TX[4] performs step e2, where $\varepsilon$ is the specified error threshold.

Then, TX[4] may calculate the equivalent channel matrix $g_{3\times1}^{[3][4]}$ from TX[4] to RX[3] based on the precoding matrix $v_{3\times1}^{[4]}$ of TX[4] and a channel matrix $h_{3\times3}^{[3][4]}$ from TX[4] to RX[3] in the channel state information of TX[4]. The equivalent channel matrix $g_{3\times1}^{[3][4]}$ from TX[4] to RX[3] satisfies a formula:

$$g_{3\times1}^{[3][4]} = h_{3\times3}^{[3][4]} v_{3\times1}^{[4]}. \qquad g_{3\times1}^{[3][4]} = \begin{bmatrix} g_1^{[3][4]} \\ g_2^{[3][4]} \\ g_3^{[3][4]} \end{bmatrix}.$$

e3: TX[4] determines, based on the equivalent channel matrix $g_{3\times1}^{[3][4]}$ from TX[4] to RX[3], the equivalent channel ratios $g_2^{[3][4]}/g_1^{[3][4]}, g_3^{[3][4]}/g_1^{[3][4]}$ corresponding to TX[4].

As shown in (4) in FIG. 7, after TX[4] determines the equivalent channel ratios corresponding to TX[4], TX[4] may send, in the manner recorded in S204 in the embodiment shown in FIG. 2, the equivalent channel ratios corresponding to TX[4].

After TX[0] receives the equivalent channel ratios corresponding to TX[2] and the equivalent channel ratios corresponding to TX[3], a local calculation process of TX[2] includes the following f1 to f3.

f1: TX[0] calculates the precoding matrix $v_{3\times1}^{[0]}$ of TX[0] based on the equivalent channel ratios corresponding to TX[2] and the equivalent channel ratios corresponding to TX[3].

$$g_{3\times1}^{[1][2]} = \begin{bmatrix} g_1^{[1][2]} \\ g_2^{[1][2]} \\ g_3^{[1][2]} \end{bmatrix}$$

In this step, TX[0] may first determine an equivalent channel matrix $g_{3\times1}^{[1][2]}$ from TX[2] to RX[1] based on the equivalent channel ratios $g_2^{[1][2]}/g_1^{[1][2]}, g_3^{[1][2]}/g_1^{[1][2]}$ corresponding to TX[2], and determine an equivalent channel matrix

$$g_{3\times1}^{[1][3]} = \begin{bmatrix} g_1^{[1][3]} \\ g_2^{[1][3]} \\ g_3^{[1][3]} \end{bmatrix}$$

from TX[3] to RX[1] based on the equivalent channel ratios $g_2^{[1][3]}/g_1^{[1][3]}, g_3^{[1][3]}/g_1^{[1][3]}$ corresponding to TX[3].

Then, TX[0] calculates the precoding matrix $v_{3\times1}^{[0]}$ of TX[0] based on the equivalent channel matrix $g_{3\times1}^{[1][2]}$ from TX[2] to RX[1], the equivalent channel matrix $g_{3\times1}^{[1][3]}$ from TX[3] to RX[1], and a channel matrix $h_{3\times3}^{[1][0]}$ from TX[0] to RX[1] in channel state information of TX[0].

The precoding matrix $v_{3\times1}^{[0]}$ of TX[0] satisfies a formula:

$$v_{3\times1}^{[0]} = (h_{3\times3}^{[1][0]})^{-1}(k_1^{[1][0]}g_{3\times1}^{[1][2]} + k_2^{[1][0]}g_{3\times1}^{[1][3]}) \quad k_1^{[1][4]}, k_2^{[1][4]} \in \mathbb{C}$$

f2: When determining that the equivalent channel ratio transmission ending condition is not satisfied, TX[0] calculates an equivalent channel matrix $g_{3\times1}^{[3][0]}$ from TX[0] to RX[3] based on the precoding matrix $v_{2\times1}^{[0]}$ of TX[0], to calculate the equivalent channel ratios corresponding to TX[0].

In this embodiment, it is assumed that the equivalent channel ratio transmission ending condition is that an error between two precoding matrices calculated consecutively is less than the specified error threshold. In other words, TX[0] may calculate the equivalent channel matrix $g_{3\times1}^{[3][0]}$ from TX[0] to RX[3] when determining that an error between $v_{3\times1}^{[0]}$ obtained in step f1 and a precoding matrix (denoted as $\dot{v}_{3\times1}^{[0]}$) previously obtained through calculation is less than the specified error threshold.

For example, when determining that $v_{3\times1}^{[0]}$ and $\dot{v}_{3\times1}^{[0]}$ satisfy a formula

$$\left\| v_{3\times1}^{[0]} * e^{j\angle\left(v_{3\times1}^{[0]}\right)^H \dot{v}_{3\times1}^{[0]}} - \dot{v}_{3\times1}^{[0]} \right\|_2 > \varepsilon,$$

, TX[0] performs step f2, where $\varepsilon$ is the specified error threshold.

Then, TX[0] may calculate the equivalent channel matrix $g_{3\times1}^{[3][0]}$ from TX[0] to RX[3] based on the precoding matrix $v_{3\times1}^{[0]}$ of TX[0] and a channel matrix $h_{3\times3}^{[3][0]}$ from TX[0] to RX[3] in the channel state information of TX[0]. The equivalent channel matrix $g_{3\times1}^{[3][0]}$ from TX[0] to RX[3] satisfies a formula: $g_{3\times1}^{[3][0]} = h_{3\times3}^{[3][0]}v_{3\times1}^{[0]}$. $g_{3\times1}^{[3][0]} = \begin{bmatrix} g_1^{[3][0]} \\ g_2^{[3][0]} \\ g_3^{[3][0]} \end{bmatrix}$.

f3: TX[0] determines, based on the equivalent channel matrix $g_{3\times1}^{[3][0]}$ from TX[0] to RX[3], the equivalent channel ratios $g_2^{[3][0]}/g_1^{[3][0]}, g_3^{[3][0]}/g_1^{[3][0]}$ corresponding to TX[0].

As shown in (4) FIG. 7, after TX[0] determines the equivalent channel ratios corresponding to TX[0], TX[0] may send, in the manner recorded in S204 in the embodiment shown in FIG. 2, the equivalent channel ratios corresponding to TX[0].

As shown in (4) in FIG. 7, in this communication system, TX[4] sends the equivalent channel ratios $g_2^{[3][4]}/g_1^{[3][4]}, g_3^{[3][4]}/g_1^{[3][4]}$ corresponding to TX[4], and TX[0] sends the equivalent channel ratios $g_2^{[3][0]}/g_1^{[3][0]}, g_3^{[3][0]}/g_1^{[3][0]}$ corresponding to TX[0].

After TX[1] receives the equivalent channel ratios corresponding to TX[4] and the equivalent channel ratios corresponding to TX[0], a local calculation process of TX[1] includes the following g1 to g3.

g1: TX[1] calculates the precoding matrix $v_{3\times1}^{[1]}$ of TX[1] based on the equivalent channel ratios corresponding to TX[4] and the equivalent channel ratios corresponding to TX[0].

$$g_{3\times1}^{[3][4]} = \begin{bmatrix} g_1^{[3][4]} \\ g_2^{[3][4]} \\ g_3^{[3][4]} \end{bmatrix}$$

In this step, TX[1] may first determine an equivalent channel matrix $g_{3\times1}^{[3][4]}$ from TX[4] to RX[3] based on the equivalent channel ratios $g_2^{[3][4]}/g_1^{[3][4]}, g_3^{[3][4]}/g_1^{[3][4]}$ corresponding to TX[4], and determine an

$$\boldsymbol{g}_{3\times 1}^{[3][0]} = \begin{bmatrix} g_1^{[3][0]} \\ g_2^{[3][0]} \\ g_3^{[3][0]} \end{bmatrix} ,$$

equivalent channel matrix from TX[0] to RX[3] based on the equivalent channel ratios $g_2^{[3][0]}/g_1^{[3][0]}, g_3^{[3][0]}/g_1^{[3][0]}$ corresponding to TX[0].

Then, TX[1] calculates the precoding matrix $\boldsymbol{v}_{3\times 1}^{[1]}$ of TX[1] based on the equivalent channel matrix $\boldsymbol{g}_{3\times 1}^{[3][4]}$ from TX[4] to RX[3], the equivalent channel matrix $\boldsymbol{g}_{3\times 1}^{[3][0]}$ from TX[0] to RX[3], and a channel matrix $\boldsymbol{h}_{3\times 3}^{[3][1]}$ from TX[1] to RX[3] in channel state information of TX[1].

The precoding matrix $\boldsymbol{v}_{3\times 1}^{[1]}$ of TX[1] satisfies a formula:

$$\boldsymbol{v}_{3\times 1}^{[1]} = (\boldsymbol{h}_{3\times 3}^{[3][1]})^{-1}(k_1^{[3][1]}\boldsymbol{g}_{3\times 1}^{[3][4]} + k_2^{[3][1]}\boldsymbol{g}_{3\times 1}^{[3][0]}) , \quad k_1^{[3][1]}, k_2^{[3][1]} \in \mathbb{C} .$$

g2: When determining that the equivalent channel ratio transmission ending condition is not satisfied, TX[1] calculates an equivalent channel matrix $\boldsymbol{g}_{3\times 1}^{[0][1]}$ from TX[1] to RX[0] based on the precoding matrix $\boldsymbol{v}_{2\times 1}^{[1]}$ of TX[1], to calculate the equivalent channel ratios corresponding to TX[1].

In this embodiment, it is assumed that the equivalent channel ratio transmission ending condition is that an error between two precoding matrices calculated consecutively is less than the specified error threshold. In other words, TX[1] may calculate the equivalent channel matrix $\boldsymbol{g}_{3\times 1}^{[0][1]}$ from TX[1] to RX[0] when determining that an error between $\boldsymbol{v}_{3\times 1}^{[1]}$ obtained in step g1 and a precoding matrix (denoted as $\dot{\boldsymbol{v}}_{3\times 1}^{[1]}$) previously obtained through calculation is less than the specified error threshold.

For example, when determining that $\boldsymbol{v}_{3\times 1}^{[1]}$ and $\dot{\boldsymbol{v}}_{3\times 1}^{[1]}$ satisfy a formula

$$\left\| \boldsymbol{v}_{3\times 1}^{[1]} * e^{j\angle\left(\boldsymbol{v}_{3\times 1}^{[1]}\right)^{H}\boldsymbol{v}_{3\times 1}^{[1]}} - \dot{\boldsymbol{v}}_{3\times 1}^{[1]} \right\|_2 > \varepsilon$$

, TX[1] performs step g2, where $\varepsilon$ is the specified error threshold.

Then, TX[1] may calculate the equivalent channel matrix $\boldsymbol{g}_{3\times 1}^{[0][1]}$ from TX[1] to RX[0] based on the precoding matrix $\boldsymbol{v}_{3\times 1}^{[1]}$ of TX[1] and a channel matrix $\boldsymbol{h}_{3\times 3}^{[0][1]}$ from TX[1] to RX[0] in the channel state information of TX[1]. The equivalent channel matrix $\boldsymbol{g}_{3\times 1}^{[0][1]}$ from TX[1] to RX[0] satisfies a formula:

$$\boldsymbol{g}_{3\times 1}^{[0][1]} = \boldsymbol{h}_{3\times 3}^{[0][1]}\boldsymbol{v}_{3\times 1}^{[1]}. \qquad \boldsymbol{g}_{3\times 1}^{[0][1]} = \begin{bmatrix} g_1^{[0][1]} \\ g_2^{[0][1]} \\ g_3^{[0][1]} \end{bmatrix} .$$

g3: TX[1] determines, based on the equivalent channel matrix $\boldsymbol{g}_{3\times 1}^{[0][1]}$ from TX[1] to RX[0], the equivalent channel ratios $g_2^{[0][1]}/g_1^{[0][1]}, g_3^{[0][1]}/g_1^{[0][1]}$ corresponding to TX[1].

As shown in (5) FIG. 7, after TX[1] determines the equivalent channel ratios corresponding to TX[1], TX[1] may send, in the manner recorded in S204 in the embodiment shown in FIG. 2, the equivalent channel ratios corresponding to TX[1].

After TX[2] receives the equivalent channel ratios corresponding to TX[4] and the equivalent channel ratios corresponding to TX[0], a local calculation process of TX[2] includes the following h1 to h3.

h1: TX[2] calculates the precoding matrix $\boldsymbol{v}_{3\times 1}^{[2]}$ of TX[2] based on the equivalent channel ratios corresponding to TX[4] and the equivalent channel ratios corresponding to TX[0].

In this step, TX[2] may first determine an equivalent channel matrix $g_{3\times1}^{[3][4]} = \begin{bmatrix} g_1^{[3][4]} \\ g_2^{[3][4]} \\ g_3^{[3][4]} \end{bmatrix}$ from TX[4] to RX[3] based on the equivalent channel ratios $g_2^{[3][4]}/g_1^{[3][4]}, g_3^{[3][4]}/g_1^{[3][4]}$ corresponding to TX[4], and determine an equivalent channel matrix $g_{3\times1}^{[3][0]} = \begin{bmatrix} g_1^{[3][0]} \\ g_2^{[3][0]} \\ g_3^{[3][0]} \end{bmatrix}$ from TX[0] to RX[3] based on the equivalent channel ratios $g_2^{[3][0]}/g_1^{[3][0]}, g_3^{[3][0]}/g_1^{[3][0]}$ corresponding to TX[0].

Then, TX[2] calculates the precoding matrix $v_{3\times1}^{[2]}$ of TX[2] based on the equivalent channel matrix $g_{3\times1}^{[3][4]}$ from TX[4] to RX[3], the equivalent channel matrix $g_{3\times1}^{[3][0]}$ from TX[0] to RX[3], and a channel matrix $h_{3\times3}^{[3][2]}$ from TX[2] to RX[3] in channel state information of TX[2].

The precoding matrix $v_{3\times1}^{[2]}$ of TX[2] satisfies a formula: $v_{3\times1}^{[2]} = (h_{3\times3}^{[3][2]})^{-1}(k_1^{[3][2]} g_{3\times1}^{[3][4]} + k_2^{[3][2]} g_{3\times1}^{[3][0]})$. $k_1^{[3][2]}, k_2^{[3][2]} \in \mathbb{C}$.

h2: When determining that the equivalent channel ratio transmission ending condition is not satisfied, TX[2] calculates an equivalent channel matrix $g_{3\times1}^{[0][2]}$ from TX[2] to RX[0] based on the precoding matrix $v_{2\times1}^{[2]}$ of TX[2], to calculate the equivalent channel ratios corresponding to TX[2].

In this embodiment, it is assumed that the equivalent channel ratio transmission ending condition is that an error between two precoding matrices calculated consecutively is less than the specified error threshold. In other words, TX[2] may calculate the equivalent channel matrix $g_{3\times1}^{[0][2]}$ from TX[2] to RX[0] when determining that an error between $v_{3\times1}^{[2]}$ obtained in step h1 and a precoding matrix (denoted as $\dot{v}_{3\times1}^{[2]}$) previously obtained through calculation is less than the specified error threshold.

For example, when determining that $v_{3\times1}^{[2]}$ and $\dot{v}_{3\times1}^{[2]}$ satisfy a formula $\left\| v_{3\times1}^{[2]} * e^{j\angle(v_{3\times1}^{[2]})^H v_{3\times1}^{[2]}} - \dot{v}_{3\times1}^{[2]} \right\|_2 > \varepsilon$, TX[2] performs step h2, where $\varepsilon$ is the specified error threshold.

Then, TX[2] may calculate the equivalent channel matrix $g_{3\times1}^{[0][2]}$ from TX[2] to RX[0] based on the precoding matrix $v_{3\times1}^{[2]}$ of TX[2] and a channel matrix $h_{3\times3}^{[0][2]}$ from TX[2] to RX[0] in the channel state information of TX[2]. The equivalent channel matrix $g_{3\times1}^{[0][2]}$ from TX[2] to RX[0] satisfies a formula: $g_{3\times1}^{[0][2]} = h_{3\times3}^{[0][2]} v_{3\times1}^{[2]}$. $g_{3\times1}^{[0][2]} = \begin{bmatrix} g_1^{[0][2]} \\ g_2^{[0][2]} \\ g_3^{[0][2]} \end{bmatrix}$.

h3: TX[2] determines, based on the equivalent channel matrix $g_{3\times1}^{[0][2]}$ from TX[2] to RX[0], the equivalent channel ratios $g_2^{[0][2]}/g_1^{[0][2]}, g_3^{[0][2]}/g_1^{[0][2]}$ corresponding to TX[2].

As shown in (5) in FIG. 7, after TX[2] determines the equivalent channel ratios corresponding to TX[2], TX[2] may send, in the manner recorded in S204 in the embodiment shown in FIG. 2, the equivalent channel ratios corresponding to TX[2].

As shown in (5) in FIG. 7, in this communication system, TX[1] sends the equivalent channel ratios $g_2^{[0][1]}/g_1^{[0][1]}, g_3^{[0][1]}/g_1^{[0][1]}$ corresponding to TX[1], and TX[2] sends the equivalent channel ratios $g_2^{[0][2]}/g_1^{[0][2]}, g_3^{[0][2]}/g_1^{[0][2]}$ corresponding to TX[2].

After TX[3] receives the equivalent channel ratios corresponding to TX[1] and the equivalent channel ratios corresponding to TX[2], a local calculation process of TX[3] includes the following i1 to i3.

i1: TX[3] calculates the precoding matrix $v_{3\times1}^{[3]}$ of TX[3] based on the equivalent channel ratios corresponding to TX[1] and the equivalent channel ratios corresponding to TX[2].

In this step, TX[3] may first determine an equivalent channel matrix $g_{3\times1}^{[0][1]} = \begin{bmatrix} g_1^{[0][1]} \\ g_2^{[0][1]} \\ g_3^{[0][1]} \end{bmatrix}$ from TX[1] to RX[0] based on the equivalent channel ratios $g_2^{[0][1]}/g_1^{[0][1]}, g_3^{[0][1]}/g_1^{[0][1]}$ corresponding to TX[1], and determine an equivalent channel matrix $g_{3\times1}^{[0][2]} = \begin{bmatrix} g_1^{[0][2]} \\ g_2^{[0][2]} \\ g_3^{[0][2]} \end{bmatrix}$ from TX[2] to RX[0] based on the equivalent channel ratios $g_2^{[0][2]}/g_1^{[0][2]}, g_3^{[0][2]}/g_1^{[0][2]}$ corresponding to TX[2].

Then, TX[3] calculates the precoding matrix $v_{3\times1}^{[3]}$ of TX[3] based on the equivalent channel matrix $g_{3\times1}^{[0][1]}$ from TX[1] to RX[0], the equivalent channel matrix $g_{3\times1}^{[0][2]}$ from TX[2] to RX[0], and a channel matrix $h_{3\times3}^{[0][3]}$ from TX[3] to RX[0] in channel state information of TX[3].

The precoding matrix $v_{3\times1}^{[3]}$ of TX[3] satisfies a formula:

$$v_{3\times1}^{[3]} = (h_{3\times3}^{[0][3]})^{-1}(k_1^{[0][3]} g_{3\times1}^{[0][1]} + k_2^{[0][3]} g_{3\times1}^{[0][2]}) \quad k_1^{[0][3]}, k_2^{[0][3]} \in \mathbb{C}.$$

i2: When determining that the equivalent channel ratio transmission ending condition is not satisfied, TX[3] calculates an equivalent channel matrix $g_{3\times1}^{[2][3]}$ from TX[3] to RX[2] based on the precoding matrix $v_{2\times1}^{[3]}$ of TX[3], to calculate the equivalent channel ratios corresponding to TX[3].

In this embodiment, it is assumed that the equivalent channel ratio transmission ending condition is that an error between two precoding matrices calculated consecutively is less than the specified error threshold. In other words, TX[3] may calculate the equivalent channel matrix $g_{3\times1}^{[2][3]}$ from TX[3] to RX[2] when determining that an error between $v_{3\times1}^{[3]}$ obtained in step i1 and a precoding matrix (denoted as $\dot{v}_{3\times1}^{[3]}$) previously obtained through calculation is less than the specified error threshold.

For example, when determining that $v_{3\times1}^{[3]}$ and $\dot{v}_{3\times1}^{[3]}$ satisfy a formula

$$\left\| v_{3\times1}^{[3]} * e^{j\angle(v_{3\times1}^{[3]})^H \dot{v}_{3\times1}^{[3]}} - \dot{v}_{3\times1}^{[3]} \right\|_2 > \varepsilon,$$

, TX[3] performs step i2, where $\varepsilon$ is the specified error threshold.

Then, TX[3] may calculate the equivalent channel matrix $g_{3\times1}^{[2][3]}$ from TX[3] to RX[2] based on the precoding

matrix $v_{3\times1}^{[3]}$ of TX[3] and a channel matrix $h_{3\times3}^{[2][3]}$ from TX[3] to RX[2] in the channel state information of TX[3]. The equivalent channel matrix $g_{3\times1}^{[2][3]}$ from TX[3] to RX[2] satisfies a formula: $g_{3\times1}^{[2][3]} = h_{3\times3}^{[2][3]} v_{3\times1}^{[3]}$ $g_{3\times1}^{[2][3]} = \begin{bmatrix} g_1^{[2][3]} \\ g_2^{[2][3]} \\ g_3^{[2][3]} \end{bmatrix}$ .

i3: TX[3] determines, based on the equivalent channel matrix $g_{3\times1}^{[2][3]}$ from TX[3] to RX[2], the equivalent channel ratios $g_2^{[2][3]}/g_1^{[2][3]}, g_3^{[2][3]}/g_1^{[2][3]}$ corresponding to TX[3].

As shown in (1) FIG. 7, after TX[3] determines the equivalent channel ratios corresponding to TX[3], TX[3] may send, in the manner recorded in S204 in the embodiment shown in FIG. 2, the equivalent channel ratios corresponding to TX[3].

After TX[4] receives the equivalent channel ratios corresponding to TX[1] and the equivalent channel ratios corresponding to TX[2], a local calculation process of TX[4] includes the following j1 to j3.

j1: TX[4] calculates the precoding matrix $v_{3\times1}^{[4]}$ of TX[4] based on the equivalent channel ratios corresponding to TX[1] and the equivalent channel ratios corresponding to TX[2].

$$\because g_{3\times1}^{[0][1]} = \begin{bmatrix} g_1^{[0][1]} \\ g_2^{[0][1]} \\ g_3^{[0][1]} \end{bmatrix}$$

In this step, TX[4] may first determine an equivalent channel matrix from TX[1] to RX[0] based on the equivalent channel ratios $g_2^{[0][1]}/g_1^{[0][1]}, g_3^{[0][1]}/g_1^{[0][1]}$ corresponding to TX[1], and determine an equivalent channel matrix $g_{3\times1}^{[0][2]} = \begin{bmatrix} g_1^{[0][2]} \\ g_2^{[0][2]} \\ g_3^{[0][2]} \end{bmatrix}$ from TX[2] to RX[0] based on the equivalent channel ratios

$g_2^{[0][2]}/g_1^{[0][2]}, g_3^{[0][2]}/g_1^{[0][2]}$ corresponding to TX[2].

Then, TX[4] calculates the precoding matrix $v_{3\times1}^{[4]}$ of TX[4] based on the equivalent channel matrix $g_{3\times1}^{[0][1]}$

from TX[1] to RX[0], the equivalent channel matrix $g_{3\times1}^{[0][2]}$ from TX[2] to RX[0], and a channel matrix $h_{3\times3}^{[0][4]}$ from TX[4] to RX[0] in channel state information of TX[4].

The precoding matrix $v_{3\times1}^{[4]}$ of TX[4] satisfies a formula: $v_{3\times1}^{[4]} = (h_{3\times3}^{[0][4]})^{-1}(k_1^{[0][4]} g_{3\times1}^{[0][1]} + k_2^{[0][4]} g_{3\times1}^{[0][2]})$ . $k_1^{[0][4]}, k_2^{[0][4]} \in \mathbb{C}$ .

j2: When determining that the equivalent channel ratio transmission ending condition is not satisfied, TX[4] calculates an equivalent channel matrix $g_{3\times1}^{[2][4]}$ from TX[4] to RX[2] based on the precoding matrix $v_{2\times1}^{[4]}$ of TX[4], to calculate the equivalent channel ratios corresponding to TX[4].

In this embodiment, it is assumed that the equivalent channel ratio transmission ending condition is that an error between two precoding matrices calculated consecutively is less than the specified error threshold. In other words, TX[4] may calculate the equivalent channel matrix $g_{3\times1}^{[2][4]}$ from TX[4] to RX[2] when determining that an error between $v_{3\times1}^{[4]}$

obtained in step j1 and a precoding matrix (denoted as $\dot{v}_{3\times1}^{[4]}$) previously obtained through calculation is less than the specified error threshold.

For example, when determining that $v_{3\times1}^{[4]}$ and $\dot{v}_{3\times1}^{[4]}$ satisfy a formula

$$\left\| v_{3\times1}^{[4]} * e^{j\angle\left(v_{3\times1}^{[4]}\right)^H v_{3\times1}^{[4]}} - \dot{v}_{3\times1}^{[4]} \right\|_2 > \varepsilon$$

, TX[4] performs step j2, where $\varepsilon$ is the specified error threshold.

Then, TX[4] may calculate the equivalent channel matrix $g_{3\times1}^{[2][4]}$ from TX[4] to RX[2] based on the precoding matrix $v_{3\times1}^{[4]}$ of TX[4] and a channel matrix $h_{3\times3}^{[2][4]}$ from TX[4] to RX[2] in the channel state information of TX[4]. The equivalent channel matrix $g_{3\times1}^{[2][4]}$ from TX[4] to RX[2] satisfies a formula: $g_{3\times1}^{[2][4]} = h_{3\times3}^{[2][4]} v_{3\times1}^{[4]}$. $g_{3\times1}^{[2][4]} = \begin{bmatrix} g_1^{[2][4]} \\ g_2^{[2][4]} \\ g_3^{[2][4]} \end{bmatrix}$.

j3: TX[4] determines, based on the equivalent channel matrix $g_{3\times1}^{[2][4]}$ from TX[4] to RX[2], the equivalent channel ratios $g_2^{[2][4]}/g_1^{[2][4]}, g_3^{[2][4]}/g_1^{[2][4]}$ corresponding to TX[4].

As shown in (1) FIG. 7, after TX[4] determines the equivalent channel ratios corresponding to TX[4], TX[4] may send, in the manner recorded in S204 in the embodiment shown in FIG. 2, the equivalent channel ratios corresponding to TX[4].

According to the steps shown in FIG. 7, the foregoing equivalent channel ratio transmission and local calculation processes are repeated between the five TXs for a plurality of times, and when the equivalent channel ratio transmission ending condition is satisfied (for example, an error between two precoding matrices consecutively calculated by a TX is less than the specified error threshold), equivalent channel ratio transmission is stopped. Then, TX[1], TX[2], TX[3], TX[4], and TX[0] may send signals by using respective precoding matrices that are finally obtained. Similar to FIG. 5, for each RX, interference signals sent by other TXs except a TX corresponding to the RX are overlapped, and are perpendicular to an equalization matrix of the RX. Therefore, each RX may obtain, through demodulation, a signal sent by the TX corresponding to the RX, to implement interference alignment of the communication system.

It can be learned from the foregoing descriptions that in this embodiment of this application, two equivalent channel ratios $g_2^{[k][l]}/g_1^{[k][l]}, g_3^{[k][l]}/g_1^{[k][l]}$, instead of a channel matrix $h_{3\times3}^{[k][l]}$ including nine values, are transmitted between TXs over an air interface. The TX in the communication system can implement interference alignment by transmitting two ratios each time. Apparently, compared with the conventional direct method, the method provided in this embodiment of this application can significantly reduce air interface transmission overheads.

Embodiment 5: Based on Embodiment 4 and another embodiment that has a common feature with Embodiment 4, this embodiment of this application further provides Embodiment 5. In Embodiment 5, generally, it is assumed that in the communication system, each TX can send one signal, and a quantity of antennas included in each TX is the same as a quantity of antennas included in each RX, that is, $N = M$, and $D = 1$. A quantity $K$ of groups of transmit-receive pairs in the communication system satisfies $K = 2N - 1$.

The following describes any equivalent channel ratio transmission process (denoted as an $r$th equivalent channel ratio transmission process in this embodiment, where $r$ is a positive integer) in Embodiment 5.

At least one second TX (denoted as TX[a]) in the communication system sends an equivalent channel ratio corresponding to the second TX. a traverses each value in $\{[(r-1)(N-1)+1] \mod K, [(r-1)(N-1)+2] \mod K, ..., [r(N-1)] \mod K\}$.

Equivalent channel ratios corresponding to any TX[a] are:

$$g_2^{[((r+1)(N-1)+1) \mod K][a]}/g_1^{[((r+1)(N-1)+1) \mod K][a]}, \quad g_3^{[((r+1)(N-1)+1) \mod K][a]}/g_1^{[((r+1)(N-1)+1) \mod K][a]}, ..., \text{and}$$

$$g_N^{[((r+1)(N-1)+1) \mod K][a]}/g_1^{[((r+1)(N-1)+1) \mod K][a]}.$$

A quantity of equivalent channel ratios sent by one TX[a] is $(M-1)D = N - 1$.

At least one first TX (denoted as TX[b]) in the communication system receives the equivalent channel ratio corresponding to the at least one second TX. b traverses $\{[r(N-1)+1] \mod K, [r(N-1)+2] \mod K, ..., [(r+1)(N-1)] \mod K\}$.

After receiving the equivalent channel ratio corresponding to the at least one TX[a], any TX[b] calculates a precoding matrix $v_{N \times 1}^{[b]}$ of TX[b] based on the equivalent channel ratio corresponding to the at least one TX[a]. The precoding matrix $v_{N \times 1}^{[b]}$ of TX[b] satisfies the following formula:

$$
\begin{aligned}
v_{N \times 1}^{[b]} &= \left( h_{N \times N}^{[((r+1)(N-1)+1) \bmod K][b]} \right)^{-1} \left( k_1^{[((r+1)(N-1)+1) \bmod K][b]} g_{N \times 1}^{[((r+1)(N-1)+1) \bmod K][((r-1)(N-1)+1) \bmod K]} \right. \\
&+ k_2^{[((r+1)(N-1)+1) \bmod K][b]} g_{N \times 1}^{[((r+1)(N-1)+1) \bmod K][((r-1)(N-1)+2) \bmod K]} + \cdots \\
&\left. + k_{N-1}^{[((r+1)(N-1)+1) \bmod K][b]} g_{N \times 1}^{[((r+1)(N-1)+1) \bmod K][(r(N-1)) \bmod K]} \right)
\end{aligned}
$$

In the foregoing formula, $g_{N \times 1}^{[((r+1)(N-1)+1) \bmod K][((r-1)(N-1)+1) \bmod K]}$, $g_{N \times 1}^{[((r+1)(N-1)+1) \bmod K][((r-1)(N-1)+2) \bmod K]}$, ..., and $g_{N \times 1}^{[((r+1)(N-1)+1) \bmod K][(r(N-1)) \bmod K]}$ are respectively obtained based on the equivalent channel ratio corresponding to the at least one TX[a], that is:

$$
g_{N \times 1}^{[((r+1)(N-1)+1) \bmod K][((r-1)(N-1)+n) \bmod K]} = \begin{bmatrix} g_1^{[((r+1)(N-1)+1) \bmod K][((r-1)(N-1)+n) \bmod K]} \\ g_2^{[((r+1)(N-1)+1) \bmod K][((r-1)(N-1)+n) \bmod K]} \\ \vdots \\ g_N^{[((r+1)(N-1)+1) \bmod K][((r-1)(N-1)+n) \bmod K]} \end{bmatrix},
$$

where $n \in \{1, 2, \dots, N-1\}$.

In the foregoing formula, $h_{N \times N}^{[((r+1)(N-1)+1) \bmod K][b]}$ is a channel matrix from TX[b] to RX[((r+1)(N-1)+1) mod K] in channel state information of TX[b].

$$
k_1^{[((r+1)(N-1)+1) \bmod K][b]}, k_2^{[((r+1)(N-1)+1) \bmod K][b]}, \dots, k_{N-1}^{[((r+1)(N-1)+1) \bmod K][b]} \in \mathbb{C}.
$$

When determining that the equivalent channel ratio transmission ending condition is not satisfied, TX[b] calculates an equivalent channel matrix $g_{N \times 1}^{[((r+2)(N-1)+1) \bmod K][b]}$ from TX[b] to RX[((r + 2)(N -1) + 1) mod K] based on the precoding matrix $v_{N \times 1}^{[b]}$ obtained through calculation and a channel matrix $h_{N \times N}^{[((r+2)(N-1)+1) \bmod K][b]}$ from TX[b] to RX[((r + 2)(N - 1) + 1) mod K] in the channel state information of TX[b]. The equivalent channel matrix $g_{N \times 1}^{[((r+2)(N-1)+1) \bmod K][b]}$ from TX[b] to RX[((r + 2)(N - 1) + 1) mod K] satisfies the following formula:

$$
g_{N \times 1}^{[((r+2)(N-1)+1) \bmod K][b]} = h_{N \times N}^{[((r+2)(N-1)+1) \bmod K][b]} v_{N \times 1}^{[b]}
$$

$$
g_{N \times 1}^{[((r+2)(N-1)+1) \bmod K][b]} = \begin{bmatrix} g_1^{[((r+2)(N-1)+1) \bmod K][b]} \\ g_2^{[((r+2)(N-1)+1) \bmod K][b]} \\ \vdots \\ g_N^{[((r+2)(N-1)+1) \bmod K][b]} \end{bmatrix}.
$$

Finally, TX[b] may determine, based on the equivalent channel matrix $g_{N \times 1}^{[((r+2)(N-1)+1) \bmod K][b]}$ from TX[b] to RX[((r + 2)(N - 1) + 1) mod K], an equivalent channel ratio corresponding to TX[b], and send the equivalent channel ratio corresponding to TX[b].

Equivalent channel ratios corresponding to TX [b] are:

$$g_2^{[((r+2)(N-1)+1)\ mod\ K][b]} / g_1^{[((r+2)(N-1)+1)\ mod\ K][b]} \quad , \quad g_3^{[((r+2)(N-1)+1)\ mod\ K][b]} / g_1^{[((r+2)(N-1)+1)\ mod\ K][b]} \quad , ..., \text{ and}$$

$$g_N^{[((r+2)(N-1)+1)mod\ K][b]} / g_1^{[((r+2)(N-1)+1)\ mod\ K][b]} .$$

According to the foregoing steps, the equivalent channel ratio transmission process is repeated between the five TXs in the communication system for a plurality of times, and when the equivalent channel ratio transmission ending condition is satisfied (for example, an error between two precoding matrices consecutively calculated by a TX is less than the specified error threshold), equivalent channel ratio transmission is stopped. In this case, TX[1], TX[2], TX[3], TX[4], and TX[0] may send signals by using respective precoding matrices that are finally calculated. For each RX, interference signals sent by other TXs except a TX corresponding to the RX are overlapped, and are perpendicular to an equalization matrix of the RX. Therefore, each RX may obtain, through demodulation, a signal sent by the TX corresponding to the RX, to implement interference alignment of the communication system.

It can be learned from the foregoing descriptions that in this embodiment of this application, $N$ - 1 equivalent channel ratios, instead of a channel matrix $h_{N \times N}^{[k][l]}$ including $N \times N$ values, are transmitted between TXs over an air interface. The TX in the communication system can implement interference alignment by transmitting $N$ - 1 ratios each time. Apparently, compared with the conventional direct method, the method provided in this embodiment of this application can significantly reduce air interface transmission overheads.

It can be learned from the descriptions of the foregoing embodiments that in the method provided in this application, the equivalent channel ratio is transferred only between a plurality of TXs participating in interference alignment. Therefore, the method is not restricted by a channel reciprocity condition.

It should be noted that in the foregoing embodiments, for a TX that first transmits an equivalent channel ratio in the communication system, the equivalent channel ratio corresponding to the TX may be a preset value, a random value, or a value entered by a user. This is not limited in this application. In addition, as examples, the foregoing embodiments do not constitute a limitation on the method provided in this application and a manner for equivalent channel ratio transmission between a plurality of TXs in the communication system. The method provided in this application satisfies rotation symmetry, that is, sequence numbers of TXs and RXs are changed, or a direction of transferring an equivalent channel ratio is changed, provided that each TX in the communication system receives an equivalent channel ratio corresponding to another TX.

It should be further noted that in the foregoing embodiments, channel state information of each TX is determined by the TX. For a specific process, refer to an existing solution. Details are not described in this application.

Finally, it should be noted that Embodiment 1 to Embodiment 5 do not constitute any limitation on an interference alignment method provided in embodiments of this application. For example, $N = M$ is used as an example for description in the foregoing embodiments. However, the method provided in this embodiment of this application may also be applicable to a scenario in which a quantity of antennas of a TX is different from a quantity of antennas of an RX. In addition, the method is also applicable to a scenario in which each TX in the communication system has a different quantity of antennas, and/or a scenario in which each RX in the communication system has a different quantity of antennas. For example, in the foregoing embodiments, there may be at least one TX whose quantity of antennas is different from $N$ in the communication system, or there may be at least one RX whose quantity of antennas is different from M in the communication system.

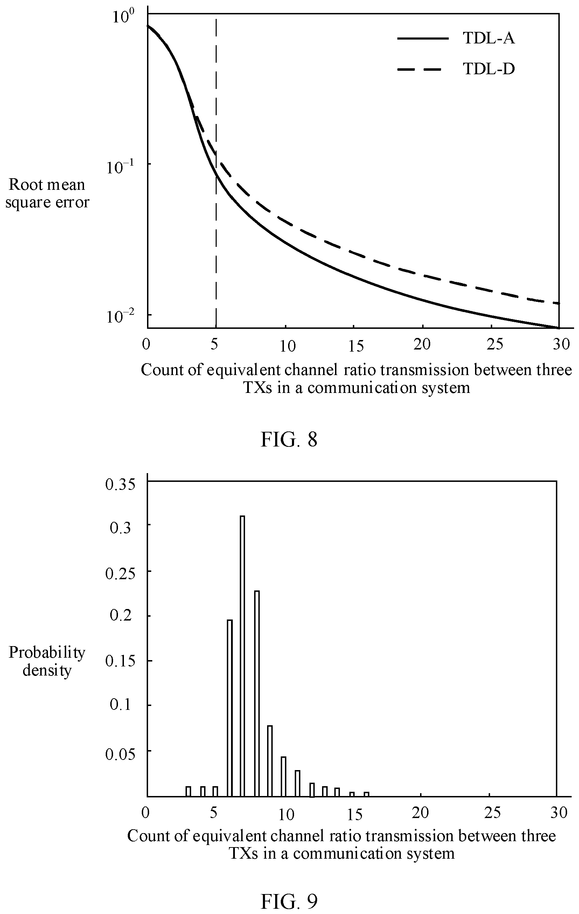

FIG. 8 shows convergence performance of a precoding matrix calculated by using the interference alignment method provided in this embodiment of this application in the scenario shown in Embodiment 1. A solid line and a dashed line in FIG. 8 are respectively change curves of a root mean square error between a precoding matrix calculated by a single TX and a target precoding matrix when a channel model is tapped delay line (tapped delay line, TDL)-A and TDL-D and with an increase in a count of equivalent channel ratio transmission between three TXs in the communication system. The target precoding matrix is a precoding matrix determined by using the conventional direct method. As shown in FIG. 8, after the count of equivalent channel ratio transmission between the three TXs in the communication system reaches 5, a root mean square error between a precoding matrix calculated by a TX and the target precoding matrix is less than 0.1. Therefore, according to the method provided in this embodiment of this application, each TX may calculate, by performing, for few times, equivalent channel ratio transmission and iterative calculation of the precoding matrix, a precoding matrix close to the target precoding matrix calculated by using the direct method, to implement interference alignment of the communication system.

FIG. 9 is a diagram of a probability density function of the count of equivalent channel ratio transmission between the three TXs in the communication system when the channel model is TDL-A and a precoding matrix convergence condition is satisfied (for example, the root mean square error between the precoding matrix calculated by the TX and the target precoding matrix determined by using the conventional direct method is less than 0.1) in the scenario shown in Embodiment 1. Refer to FIG. 9. When the count of equivalent channel ratio transmission between the three TXs reaches 10 (10 ratios are transmitted), a convergence probability of the precoding matrix calculated by the TX is 90%, that is, an accumulated probability density of convergence of the precoding matrix corresponding to the first 10 equivalent channel ratio transmissions exceeds 90%. However, if the conventional direct method is used to calculate the target precoding matrix, $(K - 1)^2MN + (K - 1)ND$ = 20 pieces of data need to be transmitted. Apparently, compared with the conventional direct method for implementing interference alignment, the method provided in this embodiment of this application can significantly reduce air interface transmission overheads.

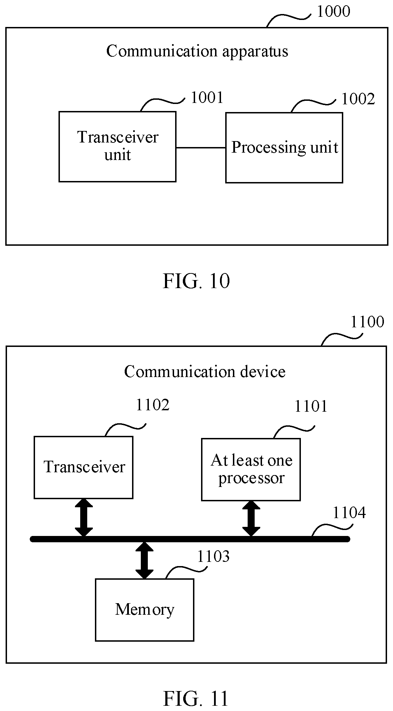

Based on a same technical concept, this application further provides a communication apparatus. The communication apparatus may be used in the communication system including the $K$ groups of transmit-receive pairs shown in FIG. 1, where $K$ is an integer greater than 2. The communication apparatus is configured to implement the communication method provided in the foregoing embodiments. Refer to FIG. 10. The communication apparatus 1000 includes a transceiver unit 1001 and a processing unit 1002. For example, the transceiver unit 1001 may be a transceiver, including components such as a radio frequency circuit and an antenna.

The following describes functions of the units in the communication apparatus 1000.

The transceiver unit 1001 is configured to receive an equivalent channel ratio corresponding to a second transmit end, where the equivalent channel ratio corresponding to the second transmit end is a ratio of different equivalent channel coefficients in an equivalent channel matrix from the second transmit end to a first target receive end, and the first target receive end is different from a first receive end corresponding to a first transmit end and a second receive end corresponding to the second transmit end.

The processing unit 1002 is configured to obtain a first precoding matrix of the first transmit end based on the equivalent channel ratio corresponding to the second transmit end and a first channel matrix, where the first channel matrix is a channel matrix from the first transmit end to the first target receive end.

In an implementation, the processing unit 1002 is further configured to obtain, based on the first precoding matrix and a second channel matrix, an equivalent channel ratio corresponding to the first transmit end, where the second channel matrix is a channel matrix from the first transmit end to a second target receive end, the equivalent channel ratio corresponding to the first transmit end is a ratio of different equivalent channel coefficients in an equivalent channel matrix from the first transmit end to the second target receive end, and the second target receive end is different from the first receive end corresponding to the first transmit end.

The transceiver unit 1001 is further configured to send the equivalent channel ratio corresponding to the first transmit end.

In an implementation, when sending the equivalent channel ratio corresponding to the first transmit end, the transceiver unit 1001 is specifically configured to:

    send a first message to a third transmit end, where the first message includes the equivalent channel ratio corresponding to the first transmit end; or
    broadcast a second message including the equivalent channel ratio corresponding to the first transmit end, where the second message further includes at least one of the following: an identifier of the first transmit end and an identifier of a third transmit end.

The second target receive end is different from a third receive end corresponding to the third transmit end.

In an implementation, when obtaining, based on the first precoding matrix and the second channel matrix, the equivalent channel ratio corresponding to the first transmit end, the processing unit 1002 is specifically configured to: when a specified equivalent channel ratio transmission ending condition is not satisfied, obtain, based on the first precoding matrix and the second channel matrix, the equivalent channel ratio corresponding to the first transmit end.

In an implementation, the transceiver unit 1001 is further configured to: when the equivalent channel ratio transmission ending condition is satisfied, send a first indication, where the first indication indicates another transmit end to stop transmitting an equivalent channel ratio corresponding to the another transmit end.

In an implementation, the equivalent channel ratio transmission ending condition includes at least one of the following:

    an error between the first precoding matrix and a second precoding matrix that is stored is less than a specified error threshold; and
    an equivalent channel ratio transmission count of the first transmit end is greater than or equal to a specified transmission count threshold.

The second precoding matrix is a precoding matrix used by the first transmit end to send data before the first precoding matrix is obtained. The equivalent channel ratio transmission count is a count that the transceiver unit 1001 sends the equivalent channel ratio corresponding to the first transmit end, or a count that the first transmit end receives an equivalent channel ratio corresponding to at least one second transmit end.

In an implementation, when obtaining, based on the first precoding matrix and the second channel matrix, the equivalent channel ratio corresponding to the first transmit end, the processing unit 1002 is specifically configured to:

obtain the equivalent channel matrix from the first transmit end to the second target receive end based on the first precoding matrix and the second channel matrix; and
obtain, based on the obtained equivalent channel matrix from the first transmit end to the second target receive end, the equivalent channel ratio corresponding to the first transmit end.

In an implementation, the communication system includes $K$ groups of transmit-receive pairs, each transmit end has $N$ antennas, and each receive end has $M$ antennas. $M = N$. $K = 2N - 1$. Each transmit end sends one signal. In an $i$th group of transmit-receive pairs, a transmit end is denoted as TX[$i - 1$], and a receive end corresponding to TX[$i - 1$] is denoted as RX[$i - 1$], where $i \in \{1,2, ... ,2N - 1\}$.

The second transmit end includes TX[$a$], $a$ traverses each value in $\{[(r-1)(N-1) + 1] \, mod \, K, [(r-1)(N-1) + 2] \, mod \, K,..., [r(N-1)] \, mod \, K\}$, and $r$ is a positive integer.

The first transmit end is TX[$b$], and $b \in \{[r(N-1) + 1] \, mod \, K, [r(N-1) + 2] \, mod \, K, ... , [(r+1)(N-1)] \, mod \, K\}$.

Any second transmit end TX[$a$] corresponds to equivalent channel ratios

$$g_2^{[((r+1)(N-1)+1) \, mod \, K][a]} \Big/ g_1^{[((r+1)(N-1)+1) \, mod \, K][a]} \quad , \quad g_3^{[((r+1)(N-1)+1) \, mod \, K][a]} \Big/ g_1^{[((r+1)(N-1)+1) \, mod \, K][a]} \quad , ..., \text{ and}$$

$$g_N^{[((r+1)(N-1)+1) \, mod \, K][a]} \Big/ g_1^{[((r+1)(N-1)+1) \, mod \, K][a]} \quad .$$

The first transmit end TX[$b$] corresponds to equivalent channel ratios

$$g_2^{[((r+2)(N-1)+1) \, mod \, K][b]} \Big/ g_1^{[((r+2)(N-1)+1) \, mod \, K][b]} \quad , \quad g_3^{[((r+2)(N-1)+1) \, mod \, K][b]} \Big/ g_1^{[((r+2)(N-1)+1) \, mod \, K][b]} \quad , ..., \text{ and}$$

$$g_N^{[((r+2)(N-1)+1) \, mod \, K][b]} \Big/ g_1^{[((r+2)(N-1)+1) \, mod \, K][b]} \quad . \quad g_m^{[k][l]}$$ is an equivalent channel coefficient of an $m$th antenna for transmitting a signal of TX[$l$] to RX[$k$]. $k, l \in \{0,1,2, ... ,2N - 2\}$. $k \neq l$. $m \in \{1,2, ..., M\}$.

The first precoding matrix satisfies the following formula:

$$\boldsymbol{v}_{N \times 1}^{[b]}$$

$$= \left(\boldsymbol{h}_{N \times N}^{[((r+1)(N-1)+1) \, mod \, K][b]}\right)^{-1} \left(k_1^{[((r+1)(N-1)+1) \, mod \, K][b]} \boldsymbol{g}_{N \times 1}^{[((r+1)(N-1)+1) \, mod \, K][((r-1)(N-1)+1) \, mod \, K]} \right.$$

$$+ k_2^{[((r+1)(N-1)+1) \, mod \, K][b]} \boldsymbol{g}_{N \times 1}^{[((r+1)(N-1)+1) \, mod \, K][((r-1)(N-1)+2) \, mod \, K]} + \cdots$$

$$\left. + k_{N-1}^{[((r+1)(N-1)+1) \, mod \, K][b]} \boldsymbol{g}_{N \times 1}^{[((r+1)(N-1)+1) \, mod \, K][(r(N-1)) \, mod \, K]} \right)$$

$$\boldsymbol{g}_{N \times 1}^{[((r+1)(N-1)+1) \, mod \, K][((r-1)(N-1)+n) \, mod \, K]} = \begin{bmatrix} g_1^{[((r+1)(N-1)+1) \, mod \, K][((r-1)(N-1)+n) \, mod \, K]} \\ g_2^{[((r+1)(N-1)+1) \, mod \, K][((r-1)(N-1)+n) \, mod \, K]} \\ \vdots \\ g_N^{[((r+1)(N-1)+1) \, mod \, K][((r-1)(N-1)+n) \, mod \, K]} \end{bmatrix} \quad ,$$

$n \in \{1,2,...,N-1\}$, and $\boldsymbol{h}_{N \times N}^{[((r+1)(N-1)+1) \, mod \, K][b]}$ is the first channel matrix: a channel matrix from TX[$b$] to RX[$((r+1)(N-1) + 1) \, mod \, K$]. $k_1^{[((r+1)(N-1)+1) \, mod \, K][b]}, k_2^{[((r+1)(N-1)+1) \, mod \, K][b]}, ... , k_{N-1}^{[((r+1)(N-1)+1) \, mod \, K][b]} \in \mathbb{C}$ .

The equivalent channel matrix from the first transmit end to the second target receive end satisfies the following formula:

$$\boldsymbol{g}_{N \times 1}^{[((r+2)(N-1)+1) \, mod \, K][b]} = \boldsymbol{h}_{N \times N}^{[((r+2)(N-1)+1) \, mod \, K][b]} \boldsymbol{v}_{N \times 1}^{[b]}$$

$$g_{N \times 1}^{[((r+2)(N-1)+1) \bmod K][b]} = \begin{bmatrix} g_1^{[((r+2)(N-1)+1) \bmod K][b]} \\ g_2^{[((r+2)(N-1)+1) \bmod K][b]} \\ \vdots \\ g_N^{[((r+2)(N-1)+1) \bmod K][b]} \end{bmatrix} \cdot h_{N \times N}^{[((r+2)(N-1)+1) \bmod K][b]}$$

is the second channel matrix: a channel matrix from TX[b] to RX[((r + 2)(N - 1) + 1) *mod K*].

In an implementation, a communication system includes *K* groups of transmit-receive pairs, each transmit end has *N* antennas, each receive end has *M* antennas, and each transmit end sends *D* signals. *N = M = 2D. K = 3. D* is a positive integer. In an $i^{th}$ group of transmit-receive pairs, a transmit end is denoted as TX[*i* - 1], and a receive end is denoted as RX[*i* - 1], where $i \in \{1,2,3\}$.

The second transmit end is TX[*a*], and $a \in \{0,1,2\}$.

The first transmit end is TX[*b*], and *b* = (*a* + 1) *mod K*.

The second transmit end TX[*a*] corresponds to equivalent channel ratios

$g_{2,1}^{[(a-1+K) \bmod K][a]} / g_{1,1}^{[(a-1+K) \bmod K][a]}$ , $g_{3,1}^{[(a-1+K) \bmod K][a]} / g_{1,1}^{[(a-1+K) \bmod K][a]}$ ,...,

$g_{2D,1}^{[(a-1+K) \bmod K][a]} / g_{1,1}^{[(a-1+K) \bmod K][a]}$ , $g_{2,2}^{[(a-1+K) \bmod K][a]} / g_{1,2}^{[(a-1+K) \bmod K][a]}$ ,

$g_{3,2}^{[(a-1+K) \bmod K][a]} / g_{1,2}^{[(a-1+K) \bmod K][a]}$ , ..., $g_{2D,2}^{[(a-1+K) \bmod K][a]} / g_{1,2}^{[(a-1+K) \bmod K][a]}$ ,...,

$g_{2,D}^{[(a-1+K) \bmod K][a]} / g_{1,D}^{[(a-1+K) \bmod K][a]}$ , $g_{3,D}^{[(a-1+K) \bmod K][a]} / g_{1,D}^{[(a-1+K) \bmod K][a]}$ , ..., and

$g_{2D,D}^{[(a-1+K) \bmod K][a]} / g_{1,D}^{[(a-1+K) \bmod K][a]}$ .

The first transmit end TX[b] corresponds to equivalent channel ratios $g_{2,1}^{[a][b]} / g_{1,1}^{[a][b]}$ ,

$g_{3,1}^{[a][b]} / g_{1,1}^{[a][b]}$ , ..., $g_{2D,1}^{[a][b]} / g_{1,1}^{[a][b]}$ , $g_{2,2}^{[a][b]} / g_{1,2}^{[a][b]}$ , $g_{3,2}^{[a][b]} / g_{1,2}^{[a][b]}$ , ..., $g_{2D,2}^{[a][b]} / g_{1,2}^{[a][b]}$ , ..., $g_{2,D}^{[a][b]} / g_{1,D}^{[a][b]}$

, $g_{3,D}^{[a][b]} / g_{1,D}^{[a][b]}$ , ..., and $g_{2D,D}^{[a][b]} / g_{1,D}^{[a][b]}$ . $g_{m,d}^{[k][l]}$ is an equivalent channel coefficient of an $m^{th}$ antenna for transmitting a $d^{th}$ signal of TX[*l*] to *RX*[*k*]. *k,l* E {0,1,2}. $k \neq l$. $m \in \{1,2, ...,2D\}$. $d \in \{1,2 ...,D\}$.

The first precoding matrix satisfies the following formula:

$$v_{2D \times D}^{[b]} = (h_{2D \times 2D}^{[(a-1+K) \bmod K][b]})^{-1} g_{2D \times D}^{[(a-1+K) \bmod K][a]} k_{D \times D}^{[(a-1+K) \bmod K][a]}$$

$$g_{2D \times D}^{[(a-1+K) \bmod K][a]} = \begin{bmatrix} g_{1,1}^{[(a-1+K) \bmod K][a]} & g_{1,2}^{[(a-1+K) \bmod K][a]} & \cdots & g_{1,D}^{[(a-1+K) \bmod K][a]} \\ g_{2,1}^{[(a-1+K) \bmod K][a]} & g_{2,2}^{[(a-1+K) \bmod K][a]} & \cdots & g_{2,D}^{[(a-1+K) \bmod K][a]} \\ g_{3,1}^{[(a-1+K) \bmod K][a]} & g_{3,2}^{[(a-1+K) \bmod K][a]} & \cdots & g_{3,D}^{[(a-1+K) \bmod K][a]} \\ \vdots & \vdots & \vdots & \vdots \\ g_{2D,1}^{[(a-1+K) \bmod K][a]} & g_{2D,2}^{[(a-1+K) \bmod K][a]} & \cdots & g_{2D,D}^{[(a-1+K) \bmod K][a]} \end{bmatrix}$$ ,

$h_{2D \times 2D}^{[(a-1+K) \bmod K][b]}$ is the first channel matrix: a channel matrix from TX[*b*] to RX[(*a* - 1 + *K*) *mod K*], and $k_{D \times D}^{[(a-1+K) \bmod K][a]} \in \mathbb{C}^{D \times D}$ .

The equivalent channel matrix from the first transmit end to the second target receive end satisfies the following formula:

$$g_{2D \times D}^{[a][b]} = h_{2D \times 2D}^{[a][b]} v_{2D \times D}^{[b]}$$

$$g_{2D \times D}^{[a][b]} = \begin{bmatrix} g_{1,1}^{[a][b]} & g_{1,2}^{[a][b]} & \cdots & g_{1,D}^{[a][b]} \\ g_{2,1}^{[a][b]} & g_{2,2}^{[a][b]} & \cdots & g_{2,D}^{[a][b]} \\ g_{3,1}^{[a][b]} & g_{3,2}^{[a][b]} & \cdots & g_{3,D}^{[a][b]} \\ \vdots & \vdots & \vdots & \vdots \\ g_{2D,1}^{[a][b]} & g_{2D,2}^{[a][b]} & \cdots & g_{2D,D}^{[a][b]} \end{bmatrix} \cdot h_{2D \times 2D}^{[a][b]}$$

is the second channel matrix: a channel matrix from TX[b] to RX[a].

It should be noted that division into the modules in embodiments of this application is an example, and is merely logical function division. In actual implementation, there may be another division manner. In addition, functional units in embodiments of this application may be integrated into one processing unit, or may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, the part contributing to the conventional technology, or all or a part of the technical solutions may be implemented in a form of a software product. The computer software product is stored in a storage medium and includes several instructions for instructing a computer device (which may be a personal computer, a server, or a network device) or a processor (processor) to perform all or a part of the steps of the method in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

Based on the foregoing embodiments, an embodiment of this application further provides a communication device. The communication device may be used in the communication system that includes the K groups of transmit-receive pairs shown in FIG. 1, where K is an integer greater than 2. The communication device is configured to implement the communication method provided in the foregoing embodiment, and has a function of the communication apparatus 1000 provided in the foregoing embodiment. Refer to FIG. 11. The communication device 1100 includes at least one processor 1101. The at least one processor 1101 is coupled to a memory, and is configured to read program instructions and data in the memory, to implement the communication method provided in the foregoing embodiment.

Optionally, the communication device 1100 may further include a transceiver 1102 and a memory 1103. The at least one processor 1101, the transceiver 1102, and the memory 1103 are connected to each other.

Optionally, the transceiver 1102, the at least one processor 1101, and the memory 1103 are connected to each other through a bus 1104. The bus 1104 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 11, but this does not mean that there is only one bus or only one type of bus.

The transceiver 1102 is configured to receive and send a signal, to implement communication with another device in the communication system shown in FIG. 1.

For a function of the at least one processor 1101, refer to the descriptions in the foregoing embodiment. Details are not described herein again. The at least one processor 1101 may include a central processing unit (central processing unit, CPU), a network processor (network processor, NP), a combination of a CPU and an NP, or the like. The at least one processor 1101 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof. The at least one processor 1101 may implement the foregoing functions by hardware or certainly by hardware executing corresponding software.

The memory 1103 is configured to store program instructions and the like. Specifically, the program instructions may include program code, and the program code includes computer operation instructions. The memory 1103 may include a random access memory (random access memory, RAM), or may further include a non-volatile memory (non-volatile memory), such as at least one disk memory. The at least one processor 1101 executes the program instructions stored in the memory 1103, to implement the foregoing functions to implement the method provided in the foregoing embodiment.

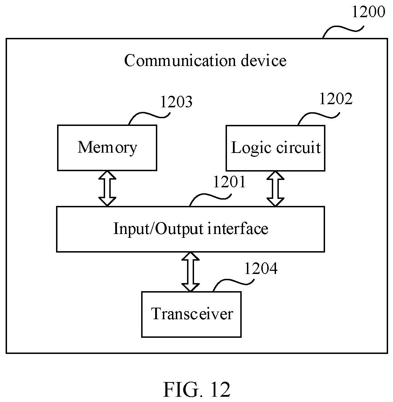

Based on the foregoing embodiments, an embodiment of this application further provides another communication device. The communication device may be used in the communication system that includes the K groups of transmit-receive pairs shown in FIG. 1, where K is an integer greater than 1. The communication device is configured to implement the communication method provided in the foregoing embodiment, and has a function of the communication apparatus 1000 provided in the foregoing embodiment. Refer to FIG. 12. The communication device 1200 includes an input/output interface 1201 and a logic circuit 1202. Optionally, the communication device 1200 may further include a memory 1203 or a transceiver 1204. The input/output interface 1201 may be used as a transmission interface circuit between the logic circuit 1202 and the memory 1203 or the transceiver 1204.

For example, the input/output interface 1201 may receive a code instruction, and input the code instruction to the logic circuit 1202. The code instruction may be stored in the memory 1203. The input/output interface 1201 may read the code instruction from the memory 1203, or may obtain the code instruction from the memory 1203 via another component. This is not limited in this application.

For another example, the input/output interface 1201 may receive data from the transceiver 1204, and input the data to the logic circuit 1202. In addition, the input/output interface 1201 may further receive data transmitted by the logic circuit 1202, and send the data to the transceiver 1204, so that the transceiver 1204 can send the data. An example in which the communication device 1200 is the first transmit end or a chip in the first transmit end in the embodiment shown in FIG. 2 is used for description. The input/output interface 1201 is configured to input, to the logic circuit 1202, the equivalent channel ratio corresponding to the second transmit end. The logic circuit 1202 is configured to perform, based on the equivalent channel ratio corresponding to the second transmit end, the method provided in the embodiment shown in FIG. 2. For a specific process, refer to the descriptions in the foregoing embodiment. Details are not described herein again.

Based on the foregoing embodiments, an embodiment of this application further provides a computer program product. The computer program product includes instructions. When the instructions are executed by a computer, the computer is enabled to perform the method provided in the foregoing embodiment.

Based on the foregoing embodiments, an embodiment of this application further provides a computer-readable storage medium. The computer-readable storage medium stores a computer program. When the computer program is run on a computer, the computer is enabled to perform the method provided in the foregoing embodiment.

The computer-readable storage medium may be any usable medium accessible by the computer. The following provides an example but does not impose a limitation: The computer-readable medium may include a RAM, a ROM, an EEPROM, a CD-ROM or another optical disc storage, a disk storage medium or another magnetic storage device, or any other medium that can carry or store expected program code in a form of an instruction or a data structure and can be accessed by the computer.

Based on the foregoing embodiments, an embodiment of this application further provides a chip. The chip is configured to read a computer program stored in a memory, to implement the method provided in the foregoing embodiment.

Based on the foregoing embodiments, an embodiment of this application provides a chip system. The chip system includes a processor, configured to support a computer apparatus in implementing functions related to a terminal device in the foregoing embodiments. In a possible design, the chip system further includes a memory, and the memory is configured to store a program and data that are necessary for the computer apparatus. The chip system may include a chip, or may include a chip and another discrete component.

In conclusion, embodiments of this application provide the communication method and apparatus. In the method, the first transmit end may receive the equivalent channel ratio corresponding to the second transmit end, and obtains, based on the equivalent channel ratio corresponding to the second transmit end, the precoding matrix corresponding to the first transmit end. The equivalent channel ratio corresponding to the second transmit end is obtained based on the interference alignment condition of the first target receive end, so that the precoding matrix calculated by the first transmit end satisfies the interference alignment condition of the first target receive end. Based on this, if the first transmit end sends a signal by using the obtained precoding matrix, the first target receive end may implement interference alignment. Based on the method, after each transmit end in the communication system calculates a precoding matrix of the transmit end based on an equivalent channel ratio corresponding to another transmit end, a receive end corresponding to each transmit end can implement local interference alignment, and finally, interference alignment of the entire communication system can be implemented. In the method provided in this application, a transmit end transmits only an equivalent channel ratio corresponding to the transmit end, instead of a precoding matrix and channel state information. Therefore, compared with the direct method in the conventional interference algorithm, the method can significantly reduce transmission overheads in the process of implementing interference alignment of the communication system. In addition, in the method, the equivalent channel ratio is transmitted only between transmit ends that participate in interference alignment of the communication system, so that the method is not restricted by the channel reciprocity condition.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may alternatively be stored in a computer-readable memory that can instruct a computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

**Claims**

1. A communication method, wherein the method comprises:

   receiving, by a first transmit end, an equivalent channel ratio corresponding to a second transmit end, wherein the equivalent channel ratio corresponding to the second transmit end is a ratio of different equivalent channel coefficients in an equivalent channel matrix from the second transmit end to a first target receive end, and the first target receive end is different from a first receive end corresponding to the first transmit end and a second receive end corresponding to the second transmit end; and
   obtaining, by the first transmit end, a first precoding matrix of the first transmit end based on the equivalent channel ratio corresponding to the second transmit end and a first channel matrix, wherein the first channel matrix is a channel matrix from the first transmit end to the first target receive end.

2. The method according to claim 1, wherein the method further comprises:

   obtaining, by the first transmit end based on the first precoding matrix and a second channel matrix, an equivalent channel ratio corresponding to the first transmit end, wherein the second channel matrix is a channel matrix from the first transmit end to a second target receive end, the equivalent channel ratio corresponding to the first transmit end is a ratio of different equivalent channel coefficients in an equivalent channel matrix from the first transmit end to the second target receive end, and the second target receive end is different from the first receive end corresponding to the first transmit end; and
   sending, by the first transmit end, the equivalent channel ratio corresponding to the first transmit end.

3. The method according to claim 2, wherein the sending, by the first transmit end, the equivalent channel ratio corresponding to the first transmit end comprises:

   sending, by the first transmit end, a first message to a third transmit end, wherein the first message comprises the equivalent channel ratio corresponding to the first transmit end; or
   broadcasting, by the first transmit end, a second message comprising the equivalent channel ratio corresponding to the first transmit end, wherein the second message further comprises at least one of the following: an identifier of the first transmit end and an identifier of a third transmit end, wherein
   the second target receive end is different from a third receive end corresponding to the third transmit end.

4. The method according to claim 2 or 3, wherein the obtaining, by the first transmit end based on the first precoding matrix and a second channel matrix, an equivalent channel ratio corresponding to the first transmit end comprises:

when a specified equivalent channel ratio transmission ending condition is not satisfied, obtaining, by the first transmit end based on the first precoding matrix and the second channel matrix, the equivalent channel ratio corresponding to the first transmit end.

5. The method according to claim 4, wherein the method further comprises:
when the equivalent channel ratio transmission ending condition is satisfied, sending, by the first transmit end, a first indication, wherein the first indication indicates another transmit end to stop transmitting an equivalent channel ratio corresponding to the another transmit end.

6. The method according to claim 4 or 5, wherein the equivalent channel ratio transmission ending condition comprises at least one of the following:

an error between the first precoding matrix and a second precoding matrix that is stored is less than a specified error threshold; and
an equivalent channel ratio transmission count of the first transmit end is greater than or equal to a specified transmission count threshold, wherein
the second precoding matrix is a precoding matrix used by the first transmit end to send data before the first precoding matrix is obtained, and the equivalent channel ratio transmission count is a count that the first transmit end sends the equivalent channel ratio corresponding to the first transmit end, or a count that the first transmit end receives an equivalent channel ratio corresponding to the at least one second transmit end.

7. The method according to any one of claims 2 to 6, wherein the obtaining, by the first transmit end based on the first precoding matrix and a second channel matrix, an equivalent channel ratio corresponding to the first transmit end comprises:

obtaining, by the first transmit end, the equivalent channel matrix from the first transmit end to the second target receive end based on the first precoding matrix and the second channel matrix; and
obtaining, by the first transmit end based on the equivalent channel matrix from the first transmit end to the second target receive end, the equivalent channel ratio corresponding to the first transmit end.

8. The method according to claim 7, wherein a communication system comprises $K$ groups of transmit-receive pairs, each transmit end has $N$ antennas, each receive end has $M$ antennas, $M = N$, $K = 2N - 1$, and each transmit end sends one signal; and in an $i^{th}$ group of transmit-receive pairs, a transmit end is denoted as TX[$i - 1$], and a receive end corresponding to TX[$i - 1$] is denoted as RX[$i - 1$], wherein $i \in \{1,2, ... ,2N - 1\}$;

the second transmit end comprises TX[$a$], $a$ traverses each value in $\{[(r - 1)(N - 1) + 1] \bmod K, [(r - 1)(N - 1) + 2] \bmod K, ..., [r(N - 1)] \bmod K\}$, and $r$ is a positive integer;
the first transmit end is TX[$b$], and $b \in \{[r(N - 1) + 1] \bmod K, [r(N - 1) + 2] \bmod K, ... , [(r + 1)(N - 1)] \bmod K\}$;
any second transmit end TX[$a$] corresponds to equivalent channel ratios

$$g_2^{[((r+1)(N-1)+1)\, mod\, K][a]} \Big/ g_1^{[((r+1)(N-1)+1)\, mod\, K][a]}, \quad g_3^{[((r+1)(N-1)+1)\, mod\, K][a]} \Big/ g_1^{[((r+1)(N-1)+1)\, mod\, K][a]}$$

, ..., and $g_N^{[((r+1)(N-1)+1)\, mod\, K][a]} \Big/ g_1^{[((r+1)(N-1)+1)\, mod\, K][a]}$; and

the first transmit end TX[$b$] corresponds to equivalent channel ratios

$$g_2^{[((r+2)(N-1)+1)\, mod\, K][b]} \Big/ g_1^{[((r+2)(N-1)+1)\, mod\, K][b]}, \quad g_3^{[((r+2)(N-1)+1)\, mod\, K][b]} \Big/ g_1^{[((r+2)(N-1)+1)\, mod\, K][b]}$$

, ..., and $g_N^{[((r+2)(N-1)+1)\, mod\, K][b]} \Big/ g_1^{[((r+2)(N-1)+1)\, mod\, K][b]}$, wherein

$g_m^{[k][l]}$ is an equivalent channel coefficient of an $m^{th}$ antenna for transmitting a signal of TX[$l$] to $RX[k]$, $k,l \in \{0,1,2, ... ,2N - 2\}$, $k \neq l$, and $m \in \{1,2, ..., M\}$.

9. The method according to claim 8, wherein the first precoding matrix satisfies the following formula:

$$v_{N \times 1}^{[b]} = \left( h_{N \times N}^{[((r+1)(N-1)+1)\, mod\, K][b]} \right)^{-1} \left( k_1^{[((r+1)(N-1)+1)\, mod\, K][b]} g_{N \times 1}^{[((r+1)(N-1)+1)\, mod\, K][((r-1)(N-1)+1)\, mod\, K]} + \right.$$

$$k_2^{[((r+1)(N-1)+1)\ mod\ K][b]} g_{N\times1}^{[((r+1)(N-1)+1)\ mod\ K][((r-1)(N-1)+2)\ mod\ K]} + \cdots +$$

$$k_{N-1}^{[((r+1)(N-1)+1)\ mod\ K][b]} g_{N\times1}^{[((r+1)(N-1)+1)\ mod\ K][(r(N-1))\ mod\ K]}\Big)\ , \text{wherein}$$

$$g_{N\times1}^{[((r+1)(N-1)+1)\ mod\ K][((r-1)(N-1)+n)\ mod\ K]} = \begin{bmatrix} g_1^{[((r+1)(N-1)+1)\ mod\ K][((r-1)(N-1)+n)\ mod\ K]} \\ g_2^{[((r+1)(N-1)+1)\ mod\ K][((r-1)(N-1)+n)\ mod\ K]} \\ \vdots \\ g_N^{[((r+1)(N-1)+1)\ mod\ K][((r-1)(N-1)+n)\ mod\ K]} \end{bmatrix},$$

$n \in \{1,2,...,N-1\}$, and $h_{N\times N}^{[((r+1)(N-1)+1)\ mod\ K][b]}$ is the first channel matrix: a channel matrix from TX[$b$] to RX[(($r$ + 1) ($N$ - 1) + 1) $mod\ K$]; and

$$k_1^{[((r+1)(N-1)+1)\ mod\ K][b]}, k_2^{[((r+1)(N-1)+1)\ mod\ K][b]}, ..., k_{N-1}^{[((r+1)(N-1)+1)\ mod\ K][b]} \in \mathbb{C}; \text{and}$$

the equivalent channel matrix from the first transmit end to the second target receive end satisfies the following formula:

$$g_{N\times1}^{[((r+2)(N-1)+1)\ mod\ K][b]} = h_{N\times N}^{[((r+2)(N-1)+1)\ mod\ K][b]} v_{N\times1}^{[b]},$$

wherein

$$g_{N\times1}^{[((r+2)(N-1)+1)\ mod\ K][b]} = \begin{bmatrix} g_1^{[((r+2)(N-1)+1)\ mod\ K][b]} \\ g_2^{[((r+2)(N-1)+1)\ mod\ K][b]} \\ \vdots \\ g_N^{[((r+2)(N-1)+1)\ mod\ K][b]} \end{bmatrix},$$

and $h_{N\times N}^{[((r+2)(N-1)+1)\ mod\ K][b]}$ is the second channel matrix: a channel matrix from TX[$b$] to RX[(($r$ + 2)($N$ - 1) + 1) $mod\ K$].

10. The method according to claim 7, wherein a communication system comprises $K$ groups of transmit-receive pairs, each transmit end has $N$ antennas, each receive end has M antennas, each transmit end sends $D$ signals, $N = M = 2D$, $K = 3$, and $D$ is a positive integer; and in an $i^{th}$ group of transmit-receive pairs, a transmit end is denoted as TX[$i$ - 1], and a receive end is denoted as RX[$i$ - 1], wherein $i \in \{1,2,3\}$;

the second transmit end is TX[$a$], and $a \in \{0,1,2\}$;
the first transmit end is TX[$b$], and $b = (a + 1)\ mod\ K$;
the second transmit end TX[$a$] corresponds to equivalent channel ratios $g_{2,1}^{[(a-1+K)\ mod\ K][a]} \big/ g_{1,1}^{[(a-1+K)\ mod\ K][a]}$,

$g_{3,1}^{[(a-1+K)\ mod\ K][a]} \big/ g_{1,1}^{[(a-1+K)\ mod\ K][a]}$, ..., $g_{2D,1}^{[(a-1+K)\ mod\ K][a]} \big/ g_{1,1}^{[(a-1+K)\ mod\ K][a]}$,

$g_{2,2}^{[(a-1+K)\ mod\ K][a]} \big/ g_{1,2}^{[(a-1+K)\ mod\ K][a]}$, $g_{3,2}^{[(a-1+K)\ mod\ K][a]} \big/ g_{1,2}^{[(a-1+K)\ mod\ K][a]}$, ...,

$g_{2D,2}^{[(a-1+K)\ mod\ K][a]} \big/ g_{1,2}^{[(a-1+K)\ mod\ K][a]}$, ..., $g_{2,D}^{[(a-1+K)\ mod\ K][a]} \big/ g_{1,D}^{[(a-1+K)\ mod\ K][a]}$

$$g_{3,D}^{[(a-1+K)\, mod\, K][a]} \Big/ g_{1,D}^{[(a-1+K)\, mod\, K][a]}, \ ..., \text{ and } \quad g_{2D,D}^{[(a-1+K)\, mod\, K][a]} \Big/ g_{1,D}^{[(a-1+K)\, mod\, K][a]} \text{; and}$$

the first transmit end TX[b] corresponds to equivalent channel ratios $g_{2,1}^{[a][b]} \big/ g_{1,1}^{[a][b]}$, $g_{3,1}^{[a][b]} \big/ g_{1,1}^{[a][b]}$, ...,

$$g_{2D,1}^{[a][b]} \big/ g_{1,1}^{[a][b]}, \ g_{2,2}^{[a][b]} \big/ g_{1,2}^{[a][b]}, \ g_{3,2}^{[a][b]} \big/ g_{1,2}^{[a][b]}, \ ..., \ g_{2D,2}^{[a][b]} \big/ g_{1,2}^{[a][b]}, \ ..., \ g_{2,D}^{[a][b]} \big/ g_{1,D}^{[a][b]}, \ g_{3,D}^{[a][b]} \big/ g_{1,D}^{[a][b]}, \ ...,$$

and $g_{2D,D}^{[a][b]} \big/ g_{1,D}^{[a][b]}$, wherein

$g_{m,d}^{[k][l]}$ is an equivalent channel coefficient of an $m^{th}$ antenna for transmitting a $d^{th}$ signal of TX[$l$] to RX[$k$], $k, l \in \{0,1,2\}$, $k \neq l$, $m \in \{1,2, ... ,2D\}$, and $d \in \{1,2 ...,D\}$.

11. The method according to claim 10, wherein the first precoding matrix satisfies the following formula:

$$v_{2D \times D}^{[b]} = (h_{2D \times 2D}^{[(a-1+K)\, mod\, K][b]})^{-1} g_{2D \times D}^{[(a-1+K)\, mod\, K][a]} k_{D \times D}^{[(a-1+K)\, mod\, K][a]},$$

wherein

$$g_{2D \times D}^{[(a-1+K)\, mod\, K][a]} = \begin{bmatrix} g_{1,1}^{[(a-1+K)\, mod\, K][a]} & g_{1,2}^{[(a-1+K)\, mod\, K][a]} & \cdots & g_{1,D}^{[(a-1+K)\, mod\, K][a]} \\ g_{2,1}^{[(a-1+K)\, mod\, K][a]} & g_{2,2}^{[(a-1+K)\, mod\, K][a]} & \cdots & g_{2,D}^{[(a-1+K)\, mod\, K][a]} \\ g_{3,1}^{[(a-1+K)\, mod\, K][a]} & g_{3,2}^{[(a-1+K)\, mod\, K][a]} & \cdots & g_{3,D}^{[(a-1+K)\, mod\, K][a]} \\ \vdots & \vdots & \vdots & \vdots \\ g_{2D,1}^{[(a-1+K)\, mod\, K][a]} & g_{2D,2}^{[(a-1+K)\, mod\, K][a]} & \cdots & g_{2D,D}^{[(a-1+K)\, mod\, K][a]} \end{bmatrix}, \quad h_{2D \times 2D}^{[(a-1+K)\, mod\, K][b]}$$

is the first channel matrix: a channel matrix from TX[$b$] to RX[$(a - 1 + K)\, mod\, K$], and $k_{D \times D}^{[(a-1+K)\, mod\, K][a]} \in \mathbb{C}^{D \times D}$; and

the equivalent channel matrix from the first transmit end to the second target receive end satisfies the following formula:

$$g_{2D \times D}^{[a][b]} = h_{2D \times 2D}^{[a][b]} v_{2D \times D}^{[b]},$$

wherein

$$g_{2D \times D}^{[a][b]} = \begin{bmatrix} g_{1,1}^{[a][b]} & g_{1,2}^{[a][b]} & \cdots & g_{1,D}^{[a][b]} \\ g_{2,1}^{[a][b]} & g_{2,2}^{[a][b]} & \cdots & g_{2,D}^{[a][b]} \\ g_{3,1}^{[a][b]} & g_{3,2}^{[a][b]} & \cdots & g_{3,D}^{[a][b]} \\ \vdots & \vdots & \vdots & \vdots \\ g_{2D,1}^{[a][b]} & g_{2D,2}^{[a][b]} & \cdots & g_{2D,D}^{[a][b]} \end{bmatrix}, \text{ and } h_{2D \times 2D}^{[a][b]} \text{ is the second channel matrix: a channel matrix from}$$

TX[$b$] to RX[$a$].

12. A communication apparatus, used in a first transmit end, wherein the apparatus comprises a transceiver unit and a processing unit;

the transceiver unit is configured to receive an equivalent channel ratio corresponding to a second transmit end, wherein the equivalent channel ratio corresponding to the second transmit end is a ratio of different equivalent channel coefficients in an equivalent channel matrix from the second transmit end to a first target receive end, and the first target receive end is different from a first receive end corresponding to the first transmit end and a second receive end corresponding to the second transmit end; and
the processing unit is configured to obtain a first precoding matrix of the first transmit end based on the equivalent channel ratio corresponding to the second transmit end and a first channel matrix, wherein the first channel matrix is a channel matrix from the first transmit end to the first target receive end.

13. The apparatus according to claim 12, wherein

the processing unit is further configured to obtain, based on the first precoding matrix and a second channel matrix, an equivalent channel ratio corresponding to the first transmit end, wherein the second channel matrix is a channel matrix from the first transmit end to a second target receive end, the equivalent channel ratio corresponding to the first transmit end is a ratio of different equivalent channel coefficients in an equivalent channel matrix from the first transmit end to the second target receive end, and the second target receive end is different from the first receive end corresponding to the first transmit end; and
the transceiver unit is further configured to send the equivalent channel ratio corresponding to the first transmit end.

14. The apparatus according to claim 13, wherein when sending the equivalent channel ratio corresponding to the first transmit end, the transceiver unit is specifically configured to:

send a first message to a third transmit end, wherein the first message comprises the equivalent channel ratio corresponding to the first transmit end; or
broadcast a second message comprising the equivalent channel ratio corresponding to the first transmit end, wherein the second message further comprises at least one of the following: an identifier of the first transmit end and an identifier of a third transmit end, wherein
the second target receive end is different from a third receive end corresponding to the third transmit end.

15. The apparatus according to claim 13 or 14, wherein when obtaining, based on the first precoding matrix and the second channel matrix, the equivalent channel ratio corresponding to the first transmit end, the processing unit is specifically configured to:
when a specified equivalent channel ratio transmission ending condition is not satisfied, obtain, based on the first precoding matrix and the second channel matrix, the equivalent channel ratio corresponding to the first transmit end.

16. The apparatus according to claim 15, wherein the transceiver unit is further configured to:
when the equivalent channel ratio transmission ending condition is satisfied, send a first indication, wherein the first indication indicates another transmit end to stop transmitting an equivalent channel ratio corresponding to the another transmit end.

17. The apparatus according to claim 15 or 16, wherein the equivalent channel ratio transmission ending condition comprises at least one of the following:

an error between the first precoding matrix and a second precoding matrix that is stored is less than a specified error threshold; and
an equivalent channel ratio transmission count of the first transmit end is greater than or equal to a specified transmission count threshold, wherein
the second precoding matrix is a precoding matrix used by the first transmit end to send data before the first precoding matrix is obtained, and the equivalent channel ratio transmission count is a count that the transceiver unit sends the equivalent channel ratio corresponding to the first transmit end, or a count that the first transmit end receives an equivalent channel ratio corresponding to the at least one second transmit end.

18. The apparatus according to any one of claims 13 to 17, wherein when obtaining, based on the first precoding matrix and the second channel matrix, the equivalent channel ratio corresponding to the first transmit end, the processing unit is specifically configured to:

obtain the equivalent channel matrix from the first transmit end to the second target receive end based on the first precoding matrix and the second channel matrix; and
obtain, based on the equivalent channel matrix from the first transmit end to the second target receive end, the equivalent channel ratio corresponding to the first transmit end.

19. The apparatus according to claim 18, wherein a communication system comprises $K$ groups of transmit-receive pairs, each transmit end has $N$ antennas, each receive end has $M$ antennas, $M = N, K = 2N - 1$, and each transmit end sends one signal; and in an $i^{th}$ group of transmit-receive pairs, a transmit end is denoted as TX[$i$ - 1], and a receive end corresponding to TX[$i$ - 1] is denoted as RX[$i$ - 1], wherein $i \in \{1, 2, \dots, 2N - 1\}$;

the second transmit end comprises TX[a], a traverses each value in {[(r - 1)(N - 1) + 1] mod K, [(r - 1)(N - 1) + 2] mod K, ..., [r(N - 1)] mod K}, and r is a positive integer;

the first transmit end is TX[b], and b ∈ {[r(N - 1) + 1] mod K, [r(N - 1) + 2] mod K, ... , [(r + 1)(N - 1)] mod K};

any second transmit end TX[a] corresponds to equivalent channel ratios

$$g_2^{[((r+1)(N-1)+1)\,mod\,K][a]} \Big/ g_1^{[((r+1)(N-1)+1)\,mod\,K][a]} \quad , \quad g_3^{[((r+1)(N-1)+1)\,mod\,K][a]} \Big/ g_1^{[((r+1)(N-1)+1)\,mod\,K][a]}$$

, ..., and $g_N^{[((r+1)(N-1)+1)\,mod\,K][a]} \Big/ g_1^{[((r+1)(N-1)+1)\,mod\,K][a]}$ ; and

the first transmit end TX[b] corresponds to equivalent channel ratios

$$g_2^{[((r+2)(N-1)+1)\,mod\,K][b]} \Big/ g_1^{[((r+2)(N-1)+1)\,mod\,K][b]} \quad , \quad g_3^{[((r+2)(N-1)+1)\,mod\,K][b]} \Big/ g_1^{[((r+2)(N-1)+1)\,mod\,K][b]}$$

, ..., and $g_N^{[((r+2)(N-1)+1)mod\,K][b]} \Big/ g_1^{[((r+2)(N-1)+1)\,mod\,K][b]}$ , wherein

$g_m^{[k][l]}$ is an equivalent channel coefficient of an $m^{th}$ antenna for transmitting a signal of TX[l] to RX[k], $k, l \in \{0,1,2, ... ,2N - 2\}$, $k \neq l$, and $m \in \{1,2, ..., M\}$.

20. The apparatus according to claim 19, wherein the first precoding matrix satisfies the following formula:

$$v_{N\times1}^{[b]} = \left( h_{N\times N}^{[((r+1)(N-1)+1)\,mod\,K][b]} \right)^{-1} \left( k_1^{[((r+1)(N-1)+1)\,mod\,K][b]} g_{N\times1}^{[((r+1)(N-1)+1)\,mod\,K][((r-1)(N-1)+1)\,mod\,K]} + \right.$$

$$k_2^{[((r+1)(N-1)+1)\,mod\,K][b]} g_{N\times1}^{[((r+1)(N-1)+1)\,mod\,K][((r-1)(N-1)+2)\,mod\,K]} + \cdots +$$

$$\left. k_{N-1}^{[((r+1)(N-1)+1)\,mod\,K][b]} g_{N\times1}^{[((r+1)(N-1)+1)\,mod\,K][(r(N-1))\,mod\,K]} \right) \quad , \quad \text{wherein}$$

$$g_{N\times1}^{[((r+1)(N-1)+1)\,mod\,K][((r-1)(N-1)+n)\,mod\,K]} = \begin{bmatrix} g_1^{[((r+1)(N-1)+1)\,mod\,K][((r-1)(N-1)+n)\,mod\,K]} \\ g_2^{[((r+1)(N-1)+1)\,mod\,K][((r-1)(N-1)+n)\,mod\,K]} \\ \vdots \\ g_N^{[((r+1)(N-1)+1)\,mod\,K][((r-1)(N-1)+n)\,mod\,K]} \end{bmatrix},$$

$n \in \{1,2,...,N - 1\}$, and $h_{N\times N}^{[((r+1)(N-1)+1)\,mod\,K][b]}$ is the first channel matrix: a channel matrix from TX[b] to RX[((r + 1)(N - 1) + 1) mod K]; and

$k_1^{[((r+1)(N-1)+1)\,mod\,K][b]}, k_2^{[((r+1)(N-1)+1)\,mod\,K][b]}, ..., k_{N-1}^{[((r+1)(N-1)+1)\,mod\,K][b]} \in \mathbb{C}$ ; and

the equivalent channel matrix from the first transmit end to the second target receive end satisfies the following formula:

$$g_{N\times1}^{[((r+2)(N-1)+1)\,mod\,K][b]} = h_{N\times N}^{[((r+2)(N-1)+1)\,mod\,K][b]} v_{N\times1}^{[b]},$$

wherein

$$g_{N\times1}^{[((r+2)(N-1)+1)\,mod\,K][b]} = \begin{bmatrix} g_1^{[((r+2)(N-1)+1)\,mod\,K][b]} \\ g_2^{[((r+2)(N-1)+1)\,mod\,K][b]} \\ \vdots \\ g_N^{[((r+2)(N-1)+1)\,mod\,K][b]} \end{bmatrix},$$

and $h_{N\times N}^{[((r+2)(N-1)+1)\,mod\,K][b]}$ is the second channel matrix: a channel matrix from TX[b] to RX[((r + 2)(N - 1) + 1) mod K].

**21.** The apparatus according to claim 18, wherein a communication system comprises $K$ groups of transmit-receive pairs, each transmit end has $N$ antennas, each receive end has $M$ antennas, each transmit end sends $D$ signals, $N = M = 2D$, $K = 3$, and $D$ is a positive integer; and in an $i^{th}$ group of transmit-receive pairs, a transmit end is denoted as TX[$i$ - 1], and a receive end is denoted as RX[i - 1], wherein $i \in \{1,2,3\}$;

the second transmit end is TX[$a$], and $a \in \{0,1,2\}$;
the first transmit end is TX[$b$], and $b = (a + 1)$ *mod K*;
the second transmit end TX[$a$] corresponds to equivalent channel ratios

$$g_{2,1}^{[(a-1+K) \bmod K][a]} / g_{1,1}^{[(a-1+K) \bmod K][a]} \quad ,$$

$$g_{3,1}^{[(a-1+K) \bmod K][a]} / g_{1,1}^{[(a-1+K) \bmod K][a]} \quad , \quad ..., \quad g_{2D,1}^{[(a-1+K) \bmod K][a]} / g_{1,1}^{[(a-1+K) \bmod K][a]}$$

$$, \quad g_{2,2}^{[(a-1+K) \bmod K][a]} / g_{1,2}^{[(a-1+K) \bmod K][a]} \quad , \quad g_{3,2}^{[(a-1+K) \bmod K][a]} / g_{1,2}^{[(a-1+K) \bmod K][a]} \quad , \quad ...,$$

$$g_{2D,2}^{[(a-1+K) \bmod K][a]} / g_{1,2}^{[(a-1+K) \bmod K][a]} \quad , \quad ..., \quad g_{2,D}^{[(a-1+K) \bmod K][a]} / g_{1,D}^{[(a-1+K) \bmod K][a]}$$

$$, \quad g_{3,D}^{[(a-1+K) \bmod K][a]} / g_{1,D}^{[(a-1+K) \bmod K][a]} \quad , ..., \text{ and } \quad g_{2D,D}^{[(a-1+K) \bmod K][a]} / g_{1,D}^{[(a-1+K) \bmod K][a]} \quad ; \text{ and}$$

the first transmit end TX[$b$] corresponds to equivalent channel ratios $g_{2,1}^{[a][b]} / g_{1,1}^{[a][b]}$, $g_{3,1}^{[a][b]} / g_{1,1}^{[a][b]}$, ...,

$$g_{2D,1}^{[a][b]} / g_{1,1}^{[a][b]}, \quad g_{2,2}^{[a][b]} / g_{1,2}^{[a][b]}, \quad g_{3,2}^{[a][b]} / g_{1,2}^{[a][b]}, ..., \quad g_{2D,2}^{[a][b]} / g_{1,2}^{[a][b]}, ..., \quad g_{2,D}^{[a][b]} / g_{1,D}^{[a][b]}, \quad g_{3,D}^{[a][b]} / g_{1,D}^{[a][b]} \quad , ...,$$

and $g_{2D,D}^{[a][b]} / g_{1,D}^{[a][b]}$ , wherein

$g_{m,d}^{[k][l]}$ is an equivalent channel coefficient of an $m^{th}$ antenna for transmitting a $d^{th}$ signal of TX[$l$] to RX[$k$], $k,l \in \{0,1,2\}$, $k \neq l$, $m \in \{1,2, ... ,2D\}$, and $d \in \{1,2 ..., D\}$.

**22.** The apparatus according to claim 21, wherein the first precoding matrix satisfies the following formula:

$$v_{2D \times D}^{[b]} = (h_{2D \times 2D}^{[(a-1+K) \bmod K][b]})^{-1} g_{2D \times D}^{[(a-1+K) \bmod K][a]} k_{D \times D}^{[(a-1+K) \bmod K][a]},$$

wherein

$$g_{2D \times D}^{[(a-1+K) \bmod K][a]} = \begin{bmatrix} g_{1,1}^{[(a-1+K) \bmod K][a]} & g_{1,2}^{[(a-1+K) \bmod K][a]} & \cdots & g_{1,D}^{[(a-1+K) \bmod K][a]} \\ g_{2,1}^{[(a-1+K) \bmod K][a]} & g_{2,2}^{[(a-1+K) \bmod K][a]} & \cdots & g_{2,D}^{[(a-1+K) \bmod K][a]} \\ g_{3,1}^{[(a-1+K) \bmod K][a]} & g_{3,2}^{[(a-1+K) \bmod K][a]} & \cdots & g_{3,D}^{[(a-1+K) \bmod K][a]} \\ \vdots & \vdots & \vdots & \vdots \\ g_{2D,1}^{[(a-1+K) \bmod K][a]} & g_{2D,2}^{[(a-1+K) \bmod K][a]} & \cdots & g_{2D,D}^{[(a-1+K) \bmod K][a]} \end{bmatrix}, \quad h_{2D \times 2D}^{[(a-1+K) \bmod K][b]}$$

is the first channel matrix: a channel matrix from TX[$b$] to RX[($a$ - 1 + $K$) *mod K*], and $k_{D \times D}^{[(a-1+K) \bmod K][a]} \in \mathbb{C}^{D \times D}$ ; and the equivalent channel matrix from the first transmit end to the second target receive end satisfies the following formula:

$$g_{2D \times D}^{[a][b]} = h_{2D \times 2D}^{[a][b]} v_{2D \times D}^{[b]},$$

wherein

$$g_{2D \times D}^{[a][b]} = \begin{bmatrix} g_{1,1}^{[a][b]} & g_{1,2}^{[a][b]} & \cdots & g_{1,D}^{[a][b]} \\ g_{2,1}^{[a][b]} & g_{2,2}^{[a][b]} & \cdots & g_{2,D}^{[a][b]} \\ g_{3,1}^{[a][b]} & g_{3,2}^{[a][b]} & \cdots & g_{3,D}^{[a][b]} \\ \vdots & \vdots & \vdots & \vdots \\ g_{2D,1}^{[a][b]} & g_{2D,2}^{[a][b]} & \cdots & g_{2D,D}^{[a][b]} \end{bmatrix},$$

and $h_{2D \times 2D}^{[a][b]}$ is the second channel matrix: a channel matrix from TX[$b$] to RX[$a$].

23. A communication device, comprising at least one processor, wherein
the at least one processor is coupled to a memory, and is configured to read program instructions and data in the memory, to implement the method according to any one of claims 1 to 11.

24. A communication device, wherein the communication device comprises a logic circuit and an input/output interface;

the input/output interface is configured to input, to the logic circuit, an equivalent channel ratio corresponding to a second transmit end, wherein the equivalent channel ratio corresponding to the second transmit end is a ratio of different equivalent channel coefficients in an equivalent channel matrix from the second transmit end to a first target receive end, and the first target receive end is different from a first receive end corresponding to the first transmit end and a second receive end corresponding to the second transmit end; and
the logic circuit is configured to perform the method according to any one of claims 1 to 11.

25. A computer-readable storage medium, wherein the computer-readable storage medium stores a computer program, and when the computer program is run on a computer, the computer is enabled to perform the method according to any one of claims 1 to 11.

26. A computer program product, comprising instructions, wherein when the instructions are executed by a computer, the computer is enabled to perform the method according to any one of claims 1 to 11.

FIG. 1

| Second transmit end | First transmit end | Third transmit end |

S201. Equivalent channel ratio corresponding to the second transmit end

S202. Obtain a first precoding matrix of the first transmit end

S203. Obtain an equivalent channel ratio corresponding to the first transmit end

S204. Equivalent channel ratio corresponding to the first transmit end

FIG. 2

Local calculation process of TX[1]

1-1. Calculate a precoding matrix of TX[1] based on an equivalent channel ratio corresponding to TX[0]

1-2. When a transmission ending condition is not satisfied, calculate an equivalent channel matrix from TX[1] to RX[0] based on the precoding matrix of TX[1]

1-3. Determine, based on the equivalent channel matrix from TX[1] to RX[0], an equivalent channel ratio corresponding to TX[1]

I. Equivalent channel ratio corresponding to TX[1]

$$g_2^{[0][1]} / g_1^{[0][1]}$$

III. Equivalent channel ratio corresponding to TX[0]

$$g_2^{[2][0]} / g_1^{[2][0]}$$

Local calculation process of TX[2]

2-1. Calculate a precoding matrix of TX[2] based on the equivalent channel ratio corresponding to TX[1]

2-2. When the transmission ending condition is not satisfied, calculate an equivalent channel matrix from TX[2] to RX[1] based on the precoding matrix of TX[2]

2-3. Determine, based on the equivalent channel matrix from TX[2] to RX[1], an equivalent channel ratio corresponding to TX[2]

II. Equivalent channel ratio corresponding to TX[2]

$$g_2^{[1][2]} / g_1^{[1][2]}$$

Local calculation process of TX[0]

0-1. Calculate a precoding matrix of TX[0] based on the equivalent channel ratio corresponding to TX[2]

0-2. When the transmission ending condition is not satisfied, calculate an equivalent channel matrix from TX[0] to RX[2] based on the precoding matrix of TX[0]

0-3. Determine, based on the equivalent channel matrix from TX[0] to RX[2], an equivalent channel ratio corresponding to TX[0]

FIG. 3

FIG. 4

FIG. 5

**Local calculation process of TX[1]**

1-1. Calculate a precoding matrix of TX[1] based on equivalent channel ratios corresponding to TX[0]

1-2. When a transmission ending condition is not satisfied, calculate an equivalent channel matrix from TX[1] to RX[0] based on the precoding matrix of TX[1]

1-3. Determine, based on the equivalent channel matrix from TX[1] to RX[0], equivalent channel ratios corresponding to TX[1]

I. Equivalent channel ratios corresponding to TX[1]

III. Equivalent channel ratios corresponding to TX[0]

$$g_{2,1}^{[0][1]}\Big/g_{1,1}^{[0][1]}\ ,g_{3,1}^{[0][1]}\Big/g_{1,1}^{[0][1]}\ ,g_{4,1}^{[0][1]}\Big/g_{1,1}^{[0][1]}\ ,$$
$$g_{2,2}^{[0][1]}\Big/g_{1,2}^{[0][1]}\ ,g_{3,2}^{[0][1]}\Big/g_{1,2}^{[0][1]}\ ,g_{4,2}^{[0][1]}\Big/g_{1,2}^{[0][1]}$$

$$g_{2,1}^{[2][0]}\Big/g_{1,1}^{[2][0]}\ ,g_{3,1}^{[2][0]}\Big/g_{1,1}^{[2][0]}\ ,g_{4,1}^{[2][0]}\Big/g_{1,1}^{[2][0]}\ ,$$
$$g_{2,2}^{[2][0]}\Big/g_{1,2}^{[2][0]}\ ,g_{3,2}^{[2][0]}\Big/g_{1,2}^{[2][0]}\ ,g_{4,2}^{[2][0]}\Big/g_{1,2}^{[2][0]}$$

**Local calculation process of TX[2]**

2-1. Calculate a precoding matrix of TX[2] based on the equivalent channel ratios corresponding to TX[1]

2-2. When the transmission ending condition is not satisfied, calculate an equivalent channel matrix from TX[2] to RX[1] based on the precoding matrix of TX[2]

2-3. Determine, based on the equivalent channel matrix from TX[2] to RX[1], equivalent channel ratios corresponding to TX[2]

**Local calculation process of TX[0]**

0-1. Calculate a precoding matrix of TX[0] based on the equivalent channel ratios corresponding to TX[2]

0-2. When the transmission ending condition is not satisfied, calculate an equivalent channel matrix from TX[0] to RX[2] based on the precoding matrix of TX[0]

0-3. Determine, based on the equivalent channel matrix from TX[0] to RX[2], equivalent channel ratios corresponding to TX[0]

II. Equivalent channel ratios corresponding to TX[2]

$$g_{2,1}^{[1][2]}\Big/g_{1,1}^{[1][2]}\ ,g_{3,1}^{[1][2]}\Big/g_{1,1}^{[1][2]}\ ,g_{4,1}^{[1][2]}\Big/g_{1,1}^{[1][2]}\ ,$$
$$g_{2,2}^{[1][2]}\Big/g_{1,2}^{[1][2]}\ ,g_{3,2}^{[1][2]}\Big/g_{1,2}^{[1][2]}\ ,g_{4,2}^{[1][2]}\Big/g_{1,2}^{[1][2]}$$

FIG. 6

(1)

Equivalent channel ratios corresponding to TX[3]: $g_2^{[2][3]}/g_1^{[2][3]}, g_3^{[2][3]}/g_1^{[2][3]}$

Equivalent channel ratios corresponding to TX[4]: $g_2^{[2][4]}/g_1^{[2][4]}, g_3^{[2][4]}/g_1^{[2][4]}$

(5)

Equivalent channel ratios corresponding to TX[1]: $g_2^{[0][1]}/g_1^{[0][1]}, g_3^{[0][1]}/g_1^{[0][1]}$

Equivalent channel ratios corresponding to TX[2]: $g_2^{[0][2]}/g_1^{[0][2]}, g_3^{[0][2]}/g_1^{[0][2]}$

(2)

Equivalent channel ratios corresponding to TX[0]: $g_2^{[4][0]}/g_1^{[4][0]}, g_3^{[4][0]}/g_1^{[4][0]}$

Equivalent channel ratios corresponding to TX[1]: $g_2^{[4][1]}/g_1^{[4][1]}, g_3^{[4][1]}/g_1^{[4][1]}$

(4)

Equivalent channel ratios corresponding to TX[4]: $g_2^{[3][4]}/g_1^{[3][4]}, g_3^{[3][4]}/g_1^{[3][4]}$

Equivalent channel ratios corresponding to TX[0]: $g_2^{[3][0]}/g_1^{[3][0]}, g_3^{[3][0]}/g_1^{[3][0]}$

(3)

Equivalent channel ratios corresponding to TX[2]: $g_2^{[1][2]}/g_1^{[1][2]}, g_3^{[1][2]}/g_1^{[1][2]}$

Equivalent channel ratios corresponding to TX[3]: $g_2^{[1][3]}/g_1^{[1][3]}, g_3^{[1][3]}/g_1^{[1][3]}$

FIG. 7

Root mean
square error

Count of equivalent channel ratio transmission between three
TXs in a communication system

FIG. 8

Probability
density

Count of equivalent channel ratio transmission between three
TXs in a communication system

FIG. 9

1000

Communication apparatus

1001

Transceiver unit

1002

Processing unit

FIG. 10

1100

Communication device

1102

Transceiver

1101

At least one processor

1104

1103

Memory

FIG. 11

1200

Communication device

1203

Memory

1202

Logic circuit

1201

Input/Output interface

1204

Transceiver

FIG. 12

## INTERNATIONAL SEARCH REPORT

| International application No. |
|---|
| **PCT/CN2023/091492** |

**A. CLASSIFICATION OF SUBJECT MATTER**

H04B 7/0456(2017.01)i

According to International Patent Classification (IPC) or to both national classification and IPC

**B. FIELDS SEARCHED**

Minimum documentation searched (classification system followed by classification symbols)

IPC: H04L H04B H04W H04Q

Documentation searched other than minimum documentation to the extent that such documents are included in the fields searched

Electronic data base consulted during the international search (name of data base and, where practicable, search terms used)

CNTXT; ENTXT; ENTXTC; VEN; DWPI: 等效信道, 比, 信道矩阵, 预编码矩阵, 向量, equivalent channel, ratio, channel matrix, precoding matrix, vector

**C. DOCUMENTS CONSIDERED TO BE RELEVANT**

| Category* | Citation of document, with indication, where appropriate, of the relevant passages | Relevant to claim No. |
|---|---|---|
| A | US 2019349035 A1 (HUAWEI TECHNOLOGIES CO., LTD.) 14 November 2019 (2019-11-14) claims 1-20, and description, paragraphs 110-237 | 1-26 |
| A | CN 111835390 A (HUAWEI TECHNOLOGIES CO., LTD.) 27 October 2020 (2020-10-27) entire document | 1-26 |
| A | US 2015131751 A1 (BLACKBERRY LTD.) 14 May 2015 (2015-05-14) entire document | 1-26 |
| A | US 2019173538 A1 (HUAWEI TECHNOLOGIES CO., LTD.) 06 June 2019 (2019-06-06) entire document | 1-26 |
| A | US 2021328632 A1 (HUAWEI TECHNOLOGIES CO., LTD.) 21 October 2021 (2021-10-21) entire document | 1-26 |
| A | WO 2020108367 A1 (SONY CORP.) 04 June 2020 (2020-06-04) entire document | 1-26 |
| A | WO 2022042234 A1 (HUAWEI TECHNOLOGIES CO., LTD.) 03 March 2022 (2022-03-03) entire document | 1-26 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **17 July 2023** | **21 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2023/091492** |

| Patent document cited in search report | | | Publication date (day/month/year) | Patent family member(s) | | | Publication date (day/month/year) |
| --- | --- | --- | --- | --- | --- | --- | --- |
| US | 2019349035 | A1 | 14 November 2019 | US | 10778294 | B2 | 15 September 2020 |
| | | | | EP | 3565133 | A1 | 06 November 2019 |
| | | | | KR | 20190104597 | A | 10 September 2019 |
| | | | | RU | 2720178 | C1 | 27 April 2020 |
| | | | | JP | 2020506609 | A | 27 February 2020 |
| | | | | WO | 2018137235 | A1 | 02 August 2018 |
| | | | | US | 2020403659 | A1 | 24 December 2020 |
| | | | | CN | 110168949 | A | 23 August 2019 |
| CN | 111835390 | A | 27 October 2020 | WO | 2020211681 | A1 | 22 October 2020 |
| US | 2015131751 | A1 | 14 May 2015 | EP | 2740290 | A1 | 11 June 2014 |
| | | | | WO | 2013017902 | A1 | 07 February 2013 |
| US | 2019173538 | A1 | 06 June 2019 | WO | 2018028310 | A1 | 15 February 2018 |
| | | | | JP | 2019525637 | A | 05 September 2019 |
| | | | | EP | 3522384 | A1 | 05 August 2020 |
| | | | | CN | 107733493 | A | 23 February 2018 |
| US | 2021328632 | A1 | 21 October 2021 | EP | 3886332 | A1 | 29 September 2021 |
| | | | | WO | 2020135534 | A1 | 02 July 2020 |
| | | | | CN | 111371478 | A | 03 July 2020 |
| WO | 2020108367 | A1 | 04 June 2020 | CN | 111224697 | A | 02 June 2020 |
| | | | | CN | 113169772 | A | 23 July 2021 |
| | | | | US | 2023163816 | A1 | 25 May 2023 |
| WO | 2022042234 | A1 | 03 March 2022 | EP | 4191894 | A1 | 07 June 2023 |
| | | | | CN | 114124176 | A | 01 March 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210513745